(19)

Europäisches
Patentamt
European
Patent Office
Office européen
des brevets

(11) **EP 2 131 329 A2**

(12) **EUROPEAN PATENT APPLICATION**

(43) Date of publication:
**09.12.2009 Bulletin 2009/50**

(51) Int Cl.:
*G06T 7/20* $^{(2006.01)}$    *H04N 5/14* $^{(2006.01)}$

(21) Application number: **09162015.3**

(22) Date of filing: **05.06.2009**

<table>
<tr><td>

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **06.06.2008 JP 2008149051**

(71) Applicant: **Sony Corporation
Tokyo 108-0075 (JP)**

</td><td>

(72) Inventors:
• **Kondo, Tetsujiro
Tokyo 108-0075 (JP)**
• **Yamamoto, Sakon
Tokyo 108-0075 (JP)**

(74) Representative: **Beder, Jens
Mitscherlich & Partner
Patent-und Rechtsanwälte
Sonnenstraße 33
80331 München (DE)**

</td></tr>
</table>

(54) **Tracking point detecting device and method, program, and recording medium**

(57)    A tracking point detecting device includes: a frame decimation unit for decimation the frame interval of a moving image configured of multiple frame images continuing temporally; a first detecting unit for detecting, of two consecutive frames of the decimated moving image, a temporally-subsequent frame pixel corresponding to a predetermined pixel of a temporally-previous frame; a forward-direction detecting unit for detecting the pixel corresponding to a predetermined pixel of a temporally-previous frame of the decimated moving image, at each of the decimated frames in the same direction as time; an opposite-direction detecting unit for detecting the pixel corresponding to the detected pixel of a temporally-subsequent frame of the decimated moving image, at each of the decimated frames in the opposite direction of time; and a second detecting unit for detecting a predetermined pixel of each of the decimated frames by employing the pixel positions detected in the forward and opposite directions.

FIG. 8

**Description**

BACKGROUND OF THE INVENTION

1. Field of the Invention

The present invention relates to a tracking point detecting device and method, program, and recording medium, and specifically, a tracking point detecting device and method, program, and recording medium which allow a user to track a desired tracking target easily and in a sure manner.

2. Description of the Related Art

Heretofore, there have been a great number of techniques for tracking a target specified by a user within a moving image, and the technique in Japanese Unexamined Patent Application Publication No. 2005-303983 has been proposed, for example.
With the technique in Japanese Unexamined Patent Application Publication No. 2005-303983, a method has been employed wherein the motion of a tracking target specified first is detected, and a tracking point is moved according to the motion thereof. Therefore, there has been a problem wherein when a tracking target involves rotation or deformation, the motion of the tracking point attempts to coordinate with the rotation or deformation thereof, and accordingly, the tracking point gradually deviates from the tracking target.
Correspondingly, a technique has been proposed wherein when a user determines that a desired tracking result has not been obtained, the user performs correction operations for a tracking point, thereby correcting deviation of the tracking point (e.g., see Japanese Unexamined Patent Application Publication No. 2007-274543).

SUMMARY OF THE INVENTION

However, with the technique of Japanese Unexamined Patent Application Publication No. 2007-274543, the user has to determine deviation of the tracking point, and operations for correcting deviation of the tracking point are also performed by the user. Accordingly, there has been a problem in that a great load is placed on the user.
There has been found demand to allow a user to easily track a desired tracking target in a sure manner.
According to an embodiment of the present invention, a tracking point detecting device includes: a frame decimation unit configured to perform decimation of the frame interval of a moving image made up of a plurality of frame images which continue temporally; a first detecting unit configured to detect, of two consecutive frames of the moving image of which the frames were decimated, a temporally subsequent frame pixel corresponding to a predetermined pixel of a temporally previous frame as a tracking point; a forward-direction detecting unit configured to perform forward-direction detection for detecting the pixel corresponding to a predetermined pixel of a temporally previous frame of the moving image of which the frames were decimated, at each frame of the decimated frames in the same direction as time in order; an opposite-direction detecting unit configured to perform opposite-direction detection for detecting the pixel corresponding to the detected pixel of a temporally subsequent frame of the moving image of which the frames were decimated, at each frame of the decimated frames in the opposite direction as to time in order; and a second detecting unit configured to detect a predetermined pixel of each of the decimated frames as a tracking point by computation employing information representing the position of the pixel detected with the forward-direction detection, and the position of the pixel detected with the opposite-direction detection.
The tracking point detecting device may further include a reduction unit configured to reduce a moving image made up of a plurality of frame images which continue temporally, with the frame decimation unit performing decimation of the frame interval of the reduced moving image, and with the first detecting unit and the second detecting unit each detecting a tracking point of the frames of the reduced moving image.
The tracking point detecting device may further include a conversion unit configured to convert the position of the pixel of the tracking point detected by the second detecting unit into the position of the pixel of the tracking point of the frames of the moving image not reduced.
The tracking point detecting device may further include a candidate setting unit configured to set a plurality of pixels serving as candidates, of a temporally previous frame of the moving image of which the frames were decimated, with the first detecting unit detecting each of the pixels of a temporally subsequent frame corresponding to each of the pixels serving as the candidates of a temporally previous frame as a tracking point candidate, with the forward-direction detecting unit detecting each of the pixels corresponding to each of the pixels serving as candidates of a temporally previous frame at each of the decimated frames in the forward direction, with the opposite-direction detecting unit detecting each of the pixels corresponding to the pixel detected as the tracking point candidate of a temporally subsequent frame at each of the decimated frames in the opposite direction, and with the second detecting unit detecting each of a plurality of pixels as a tracking point candidate at each of the decimated frames by computation employing information representing the position of each of the pixels detected with the forward-direction detection, and the position of each of the pixels detected with the opposite-direction detection.

With information representing the position of a predetermined pixel of the plurality of pixels serving as candidates at the temporally previous frame, set by the candidate setting unit, information representing the position of the pixel detected by the first detecting unit as a tracking point candidate at the temporally subsequent frame corresponding to the predetermined pixel, information representing the position of the pixel of each of the decimated frames corresponding to the predetermined pixel detected in the forward direction by the forward-direction detecting unit, information representing the position of the pixel of each of the decimated frames corresponding to the predetermined pixel detected in the opposite direction by the opposite-direction detecting unit, information representing the positions of the predetermined pixel, and the pixel detected by the second detecting unit as the tracking point candidate of each of the decimated frames corresponding to the tracking point candidate being correlated and taken as a set of tracking point candidate group, the tracking point detecting device may further include a storage unit configured to store the same number of sets of tracking point candidate groups as the number of the pixels serving as candidates set by the candidate setting unit.

The first detecting unit may calculate the sum of absolute differences of the pixel value of a block made up of pixels with a predetermined pixel of a temporally previous frame as the center, and the pixel values of a plurality of blocks made up of pixels with each of a plurality of pixels at the periphery of the pixel of the position corresponding to the predetermined pixel at the temporally subsequent frame as the center, and detects, of the plurality of blocks, the pixel serving as the center of the block with the value of the sum of absolute differences being the smallest, as a tracking point.

The first detecting unit may set a plurality of blocks made up of pixels with each of pixels within a motion detection pixel range which is a predetermined area with a predetermined pixel of the temporally previous frame as the center, as the center, detects the pixel of the tracking point corresponding to each of the pixels within the motion detection pixel range, and detects the coordinate value calculated based on the coordinate value of the pixel of the tracking point corresponding to each of the pixels within the motion detection pixel range as the position of the tracking point of a temporally subsequent frame corresponding to a predetermined pixel of a temporally previous frame.

The tracking point detecting device may further include: a difference value calculating unit configured to calculate the value of the sum of absolute differences of a pixel value within a predetermined area with the pixel of a tracking point detected beforehand of a further temporally previous frame as compared to the temporally previous frame as the center, and a pixel value within a predetermined area with each of the plurality of pixels serving as candidates, of the temporally previous frame, set by the candidate setting unit as the center; and a distance calculating unit configured to calculate the distance between the pixel detected in the forward direction, and the pixel detected in the opposite direction at the frame positioned in the middle temporally, of the decimated frames, based on information representing the pixel position of each of the decimated frames detected in the forward direction, and information representing the pixel position of each of the decimated frames detected in the opposite direction, stored in the storage unit.

The calculated value of the sum of absolute differences, and the calculated distance may be compared with predetermined values respectively, thereby detecting a plurality of pixels satisfying a condition set beforehand from the plurality of pixels serving as candidates set by the candidate setting unit, and one pixel of the plurality of pixels serving as candidates set by the candidate setting unit is determined based on the information of the position of each pixel satisfying the predetermined condition, and of a plurality of tracking point groups stored by the storage unit, the tracking point group corresponding to the determined one pixel is taken as the tracking point at each frame.

The tracking point detecting device may further include a frame interval increment/decrement unit configured to increment/decrement the frame interval to be decimated by the frame decimation unit based on the value of the sum of absolute differences between a pixel value within a predetermined area with a predetermined pixel of a temporally previous frame as the center, and a pixel value within a predetermined area with the pixel of the temporally subsequent frame detected by the first detecting unit as the center, of consecutive two frames of the moving image of which the frames were decimated.

The tracking point detecting device may further include a template holding unit configured to hold an image shot beforehand as a template; an object extracting unit configured to extract an object not displayed on the template from a predetermined frame image of the moving image; and a pixel determining unit configured to determine a pixel for detecting the tracking point from the image of the extracted object.

The first detecting unit may include: an area extracting unit configured to extract the area corresponding to a moving object based on a frame of interest, the temporally previous frame of the frame of interest, and the temporally subsequent frame of the frame of interest, of the moving image of which the frames were decimated; and an intra-area detecting unit configured to detect the pixel of the frame of interest corresponding to a predetermined pixel of the temporally previous frame, from the area extracted by the area extracting unit.

The area extracting unit may include: a first screen position shifting unit configured to shift the screen position of the frame of interest based on a screen motion vector obtained between the frame of interest and the temporally previous frame of the frame of interest; a first frame difference calculating unit configured to calculate the difference between the image of the frame of interest of which the screen position is shifted, and the image of the temporally previous frame of the frame of interest; a second screen position shifting unit configured to shift the screen position of the frame of interest based on a screen motion vector obtained between the frame of interest and the temporally subsequent frame of the frame of interest; a second frame difference calculating unit configured to calculate the difference between the image of the frame of interest of which the screen position is shifted, and the image of the temporally subsequent frame of the frame of interest; and an AND-area extracting unit configured to extract an AND area between the pixel corresponding to the difference calculated by the first frame difference calculating unit, and the pixel corresponding to the difference calculated by the second frame difference calculating unit, as the area corresponding to an object.

An according to an embodiment of the present invention, a tracking point detecting method includes the steps of: performing decimation of the frame interval of a moving image made up of a plurality of frame images which continue temporally; detecting, of two consecutive frames of the moving image of which the frames were decimated, a temporally subsequent frame pixel corresponding to a predetermined pixel of a temporally previous frame as a tracking point; performing forward-direction detection for detecting the pixel corresponding to a predetermined pixel of a temporally previous frame of the moving image of which the frames were decimated, at each frame of the decimated frames in the same direction as time in order; performing opposite-direction detection for detecting the pixel corresponding to the detected pixel of a temporally subsequent frame of the moving image of which the frames were decimated, at each frame of the decimated frames in the opposite direction as to time in order; and detecting a predetermined pixel of each of the decimated frames as a tracking point by computation employing information representing the position of the pixel detected with the forward-direction detection, and the position of the pixel detected with the opposite-direction detection.

An according to an embodiment of the present invention, a program for allowing a computer to function as a tracking point detecting device includes: a frame decimation unit configured to perform decimation of the frame interval of a moving image made up of a plurality of frame images which continue temporally; a first detecting unit configured to detect, of two consecutive frames of the moving image of which the frames were decimated, a temporally subsequent frame pixel corresponding to a predetermined pixel of a temporally previous frame as a tracking point; a forward-direction detecting unit configured to perform forward-direction detection for detecting the pixel corresponding to a predetermined pixel of a temporally previous frame of the moving image of which the frames were decimated, at each frame of the decimated frames in the same direction as time in order; an opposite-direction detecting unit configured to perform opposite-direction detection for detecting the pixel corresponding to the detected pixel of a temporally subsequent frame of the moving image of which the frames were decimated, at each frame of the decimated frames in the opposite direction as to time in order; and a second detecting unit configured to detect a predetermined pixel of each of the decimated frames as a tracking point by computation employing information representing the position of the pixel detected with the forward-direction detection, and the position of the pixel detected with the opposite-direction detection.

With the configurations described above, decimation of the frame interval of a moving image made up of a plurality of frame images which continue temporally is performed, and of two consecutive frames of the moving image of which the frames were decimated, a temporally subsequent frame pixel corresponding to a predetermined pixel of a temporally previous frame is detected as a tracking point, forward-direction detection for detecting the pixel corresponding to a predetermined pixel of a temporally previous frame of the moving image of which the frames were decimated is performed at each frame of the decimated frames in the same direction as time in order, opposite-direction detection for detecting the pixel corresponding to the detected pixel of a temporally subsequent frame of the moving image of which the frames were decimated is performed at each frame of the decimated frames in the opposite direction as to time in order, and a predetermined pixel of each of the decimated frames is detected as a tracking point by computation employing information representing the position of the pixel detected with the forward-direction detection, and the position of the pixel detected with the opposite-direction detection.

According to the above configurations, a user can easily track a desired tracking target in a sure manner.

BRIEF DESCRIPTION OF THE DRAWINGS

Fig. 1 is a block diagram illustrating a configuration example of the image processing device according to an embodiment of the present invention;
Fig. 2 is a block diagram illustrating a configuration example of the initial tracking point determining unit in Fig. 1;
Fig. 3 is a block diagram illustrating a configuration example of the hierarchizing unit in Fig. 1;
Fig. 4 is a diagram describing the processing of the hierarchizing unit;
Fig. 5 is a block diagram illustrating a configuration example of the first hierarchical motion detecting unit in Fig. 1;
Figs. 6A and 6B are diagrams describing the processing of the block position detecting unit in Fig. 5;
Figs. 7A and 7B are diagrams describing the processing of the block position detecting unit in Fig. 5;

Fig. 8 is a block diagram illustrating a configuration example of the second hierarchical motion detecting unit in Fig. 1;

Fig. 9 is a diagram describing forward-direction motion detection and opposite-direction motion detection;

Fig. 10 is a diagram showing table examples employed for determining the tracking point of each frame;

Fig. 11 is a block diagram illustrating a configuration example of the third hierarchical motion detecting unit in Fig. 1;

Fig. 12 is a diagram describing the processing of the third hierarchical motion detecting unit;

Fig. 13 is a block diagram illustrating another configuration example of the image processing device according to an embodiment of the present invention;

Fig. 14 is a block diagram illustrating yet another configuration example of the image processing device according to an embodiment of the present invention;

Figs. 15A and 15B are diagrams describing the processing of the block position detecting unit;

Figs. 16A and 16B are diagrams describing the processing of the block position detecting unit;

Figs. 17A and 17B are diagrams describing the processing of the difference calculating unit in Fig. 14;

Fig. 18 is a diagram describing transfer between tracking points;

Fig. 19 is a diagram describing examples of output images output from the image processing device according to an embodiment of the present invention;

Fig. 20 is a diagram describing an example of object tracking processing according to the related art;

Fig. 21 is a diagram describing the advantage of the object tracking processing by the image processing device according to an embodiment of the present invention;

Fig. 22 is a block diagram illustrating another configuration example of the initial tracking point determining unit;

Fig. 23 is a diagram describing the processing of the initial tracking point determining unit in Fig. 23;

Fig. 24 is a diagram describing the processing of the initial tracking point determining unit in Fig. 23;

Fig. 25 is a diagram describing the processing of the initial tracking point determining unit in Fig. 23;

Fig. 26 is a block diagram illustrating another configuration example of the first hierarchical motion detecting unit;

Fig. 27 is a diagram describing the processing of the screen motion detecting unit in Fig. 26;

Fig. 28 is a diagram describing an example of a screen motion vector;

Fig. 29 is a block diagram illustrating a configuration example of the tracking area detecting unit in Fig. 26;

Fig. 30 is a diagram describing the processing of each unit of the tracking area detecting unit in Fig. 29;

Fig. 31 is a block diagram illustrating yet another configuration example of the image processing device according to an embodiment of the present invention;

Fig. 32 is a block diagram illustrating a configuration example of the hierarchizing unit in Fig. 31;

Fig. 33 is a diagram describing the processing of the frame decimation specifying unit in Fig. 32;

Fig. 34 is a diagram describing the processing of the frame decimation specifying unit in Fig. 32;

Fig. 35 is a flowchart describing an example of the object tracking processing executed by the image processing device in Fig. 1;

Fig. 36 is a flowchart describing an example of the hierarchizing processing;

Fig. 37 is a flowchart describing an example of first hierarchical motion detection processing;

Fig. 38 is a flowchart describing an example of second hierarchical motion detection processing;

Fig. 39 is a flowchart describing an example of third hierarchical motion detection processing;

Fig. 40 is a flowchart describing an example of the object tracking processing executed by the image processing device in Fig. 14;

Fig. 41 is a flowchart describing an example of initial tracking point determination processing;

Fig. 42 is a flowchart describing another example of the first hierarchical motion detection processing;

Fig. 43 is a flowchart describing an example of tracking area extraction processing;

Fig. 44 is a flowchart describing another example of the hierarchizing processing; and

Fig. 45 is a block diagram illustrating a configuration example of a personal computer.

DESCRIPTION OF THE PREFERRED EMBODIMENTS

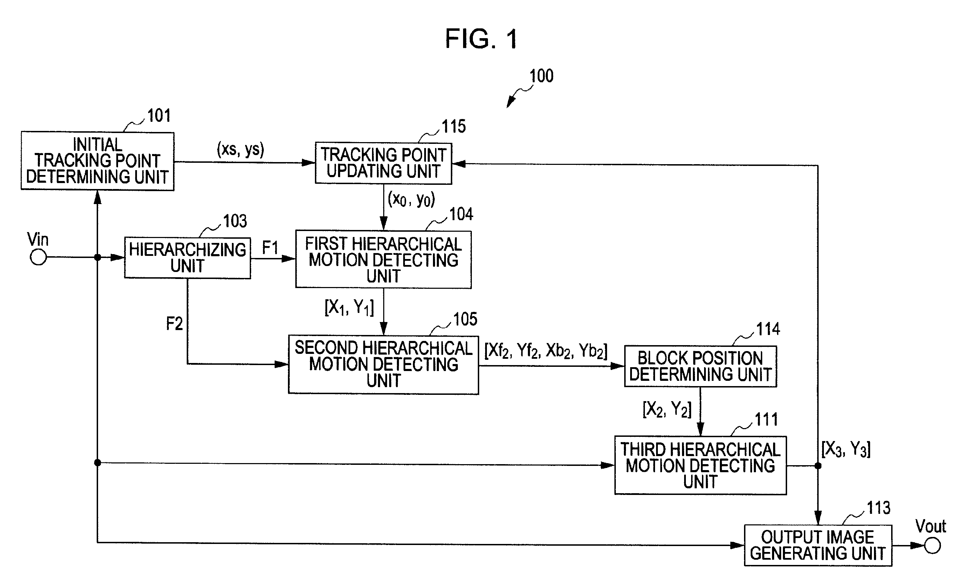

Description will be made regarding embodiments of the present invention with reference to the drawings. Fig. 1 is a block diagram illustrating a configuration example of the image processing device according to an embodiment of the present invention. With this image processing device 100, an input image signal Vin from an unshown input device is input to an initial tracking point determining unit 101, hierarchizing unit 103, third hierarchical motion detecting unit 111, and output image generating unit 113.

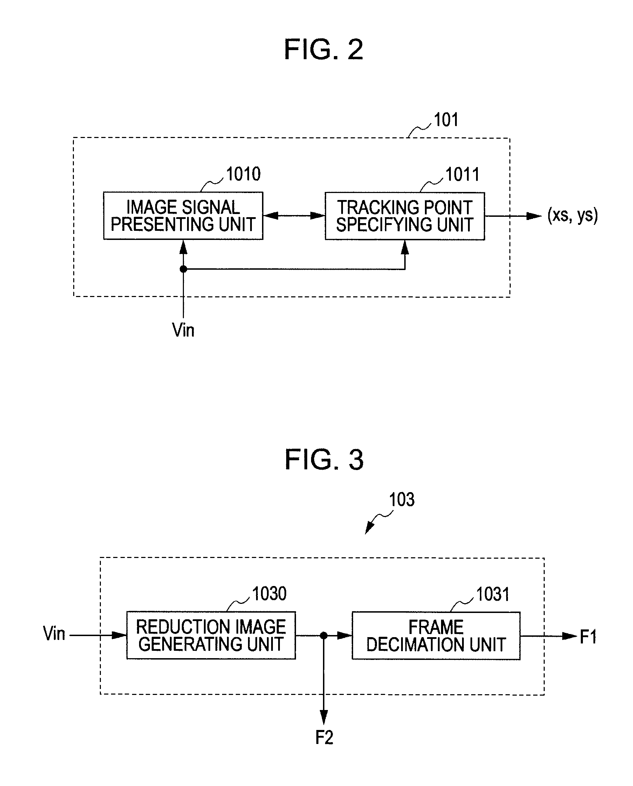

Fig. 2 is a block diagram illustrating a detailed configuration example of the initial tracking point determining unit 101. As shown in Fig. 2, the initial tracking point determining unit 101 is configured of an image signal presenting unit 1010, and tracking point specifying unit 1011.

The image signal presenting unit 1010 is configured as, for example, a display or the like so as to display an image corresponding to the input image signal Vin. The tracking point specifying unit 1011 is configured as, for example, a pointing device such as a mouse or the like so as to specify one point (e.g., one pixel) within an image displayed at the image signal presenting unit 1010 in response to a user's operations or the like, as an initial tracking point.

Specifically, in a case where the initial tracking point determining unit 101 is configured such as shown in Fig. 2, the initial tracking point is specified by the user. For example, while observing an image displayed on the display, the user specifies the feature points of an object to be tracked, displayed on the image thereof, as the initial tracking point.

Now, description will return to Fig. 1, where the coordinates (xs, ys) of the initial tracking point determined by the initial tracking point determining unit 101 are arranged to be supplied to a tracking point updating unit 115.

The tracking point updating unit 115 is configured to supply the coordinates $(x_0, y_0)$ of a tracking point to a first hierarchical motion detecting unit 104. In this case, the tracking point updating unit 115 supplies the coordinates (xs, ys) of the initial tracking point to the first hierarchical motion detecting unit 104 as the coordinates $(x_0, y_0)$ of a tracking point.

The hierarchizing unit 103 performs hierarchizing processing as to the input image signal Vin. Here, examples of the hierarchizing processing include compression of the number of pixels of an image (reduction of an image size), and decimation of the frame interval (frame rate) of an input image.

Fig. 3 is a block diagram illustrating a detailed configuration example of the hierarchizing unit 103. As shown in Fig. 3, the hierarchizing unit 103 is configured of a reduction image generating unit 1030, and a frame decimation unit 1031.

The reduction image generating unit 1030 of the hierarchizing unit 103 employs the average value of four pixels in total, e.g., two pixels each in the x direction, and two pixels each in the y direction, regarding the image of an input image signal to generate an image F2 reduced to one fourth. Thus, the image F2 is generated wherein the frame rate is the same frame rate as the image of the input image signal, the number of pixels is compressed, and the size is reduced to one fourth.

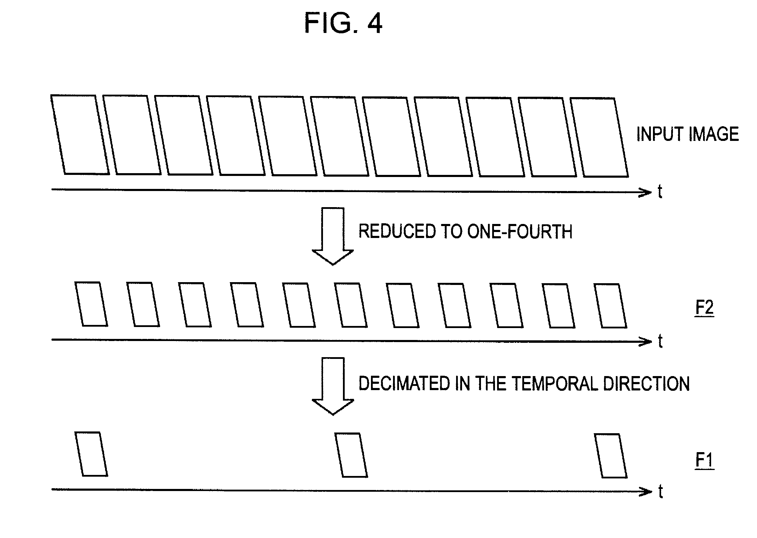

Fig. 4 is a diagram describing the processing of the hierarchizing unit 103. In Fig. 4, each parallelogram represents one frame. According to the processing of the reduction image generating unit 1030, the size of each frame of an input image is reduced to one fourth, and is taken as a frame of the image F2. Note that the number of frames of the input image (eleven in this case), and the number of frames of the image F2 are the same.

The frame decimation unit 1031 of the hierarchizing unit 103 is configured to perform frame decimation processing as to the reduced image F2 to generate an image F1.

Thus, as shown in Fig. 4, the size of the input image signal is reduced to one fourth, and further, the image F1 of which the frame interval (frame rate) is decimated to one fifth is generated. As shown in Fig. 4, of the image F1, the second through fifth frames from the left of the image F2 are decimated. Also, of the image F1, the seventh through tenth frames from the left of the image F2 are decimated.

Note that the reduction image generating unit 1030 may not be provided in the hierarchizing unit 103. Specifically, an arrangement may be made wherein, with the hierarchizing unit 103, frame decimation processing alone is performed, and a reduction image is not generated. In this case, the hierarchizing unit 103 outputs the image of the input image signal as the image F2 as is, and performs frame decimation processing as to the image F2 to generate an image F1.

Note that in a case where, with the hierarchizing unit 103, the number of pixels is compressed, and the size is reduced to one forth, the coordinates (xs, ys) of the initial tracking point is converted with Expressions (1) and (2), and coordinates (xsm, ysm) after conversion are taken as the coordinates $(x_0, y_0)$ of the tracking point.

$$xsm = [xs / 2] \quad \ldots (1)$$

$$ysm = [ys / 2] \quad \ldots (2)$$

(the brackets [ ] within the above Expressions mean processing for rounding off the decimals.)

Now, description will return to Fig. 1, where the image F1 supplied from the hierarchizing unit 103 is arranged to be input to the first hierarchical motion detecting unit 104. Also, the image F2 supplied from the hierarchizing unit 103 is arranged to be input to a second hierarchical motion detecting unit 105.

The first hierarchical motion detecting unit 104 is configured to detect the motion of the tracking point between the image of the frame wherein the coordinates $(x_0, y_0)$ of the tracking point are specified, and the image of the temporally subsequent frame thereof to determine the coordinates of the tracking point of the image of the temporally subsequent frame, with the image F1.

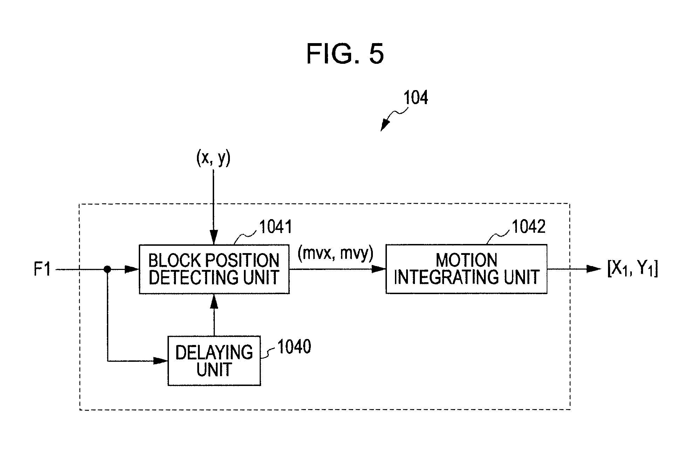

Fig. 5 is a block diagram illustrating a detailed configuration example of the first hierarchical motion detecting unit 104. As shown in Fig. 5, the first hierarchical motion detecting unit 104 is configured so as to include a delaying unit 1040, block position detecting unit 1041, and motion integrating unit 1042.

The delaying unit 1040 is configured to delay a frame of the image F1 which has been input, for example, by holding this for the amount of time corresponding to one frame, and supply the delayed frame to the block position detecting unit 1041 at timing wherein the next frame of the image F1 is input to the block position detecting unit 1041.

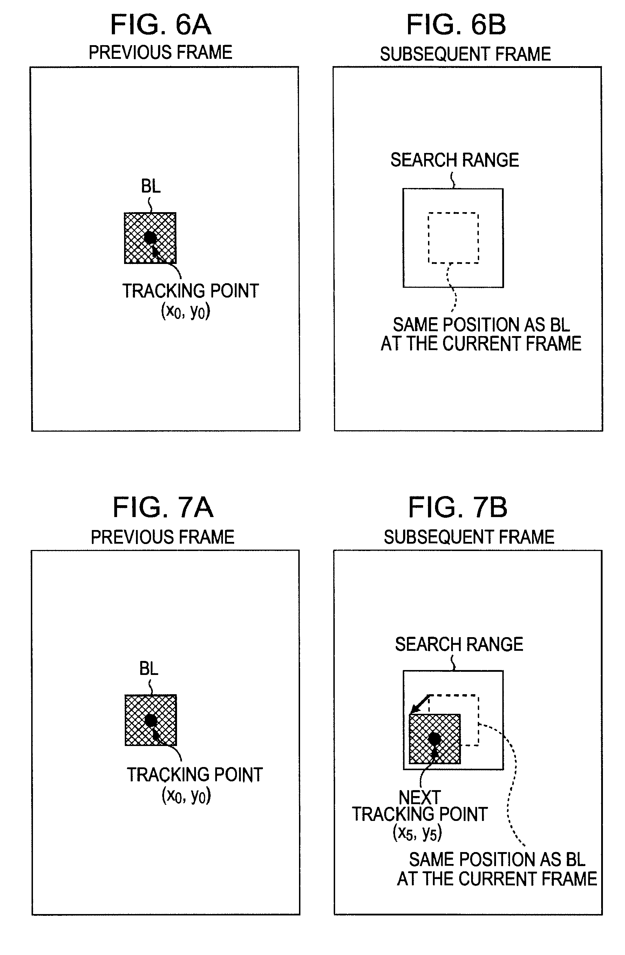

For example, as shown in Fig. 6A, the block position detecting unit 1041 sets a block BL made up of a predetermined number of pixels with the tracking point determined with the coordinates $(x_0, y_0)$ supplied from the tracking point updating unit 115 as the center, of the image of the delayed frame (temporally previous frame). In Fig. 6A, the tracking point determined with the coordinates $(x_0, y_0)$ is indicated with a filled circle. Now, let us say that the filled circle indicates one pixel. For example, a block BL made up of $9 \times 9$ pixels is set with the tracking point indicated with the filled circle in the drawing as the center.

With the temporally subsequent frame, the block position detecting unit 1041 sets a search range with the same position as the block BL of the previous frame as the center. An example of the search range is a rectangular area of -15 through +15 pixels each in the horizontal and vertical directions with the same position as the block BL of the current frame as a reference.

Specifically, as shown in Fig. 6B, with the image of the temporally subsequent frame, the block position detecting unit 1041 sets a block made up of $9 \times 9$ pixels with the pixel determined with the coordinates $(x_0, y_0)$ supplied from the tracking point updating unit 115 as the center, and sets a search range wherein the block thereof is expanded by 15 pixels in the horizontal and vertical directions in the drawing. That is to say, an area made up of 39 (= 9 + 15 + 15) $\times$ 39 pixels with the pixel determined with the coordinates $(x_0, y_0)$ in the image of the subsequent frame as the center is set as the search range.

Subsequently, the block position detecting unit 1041 calculates sum of absolute differences between the block BL of the previous frame and a candidate block within the search range of the subsequent frame. Here, the candidate block is, for example, each block having the same size as the block BL (size made up of $9 \times 9$ pixels in this case) which can be extracted from the search range (area made up of $39 \times 39$ pixels in this case).

Specifically, the block position detecting unit 1041 calculates sum of absolute differences such as shown in Expression (3), for example.

$$\sum_{i=0}^{B-1} \sum_{j=0}^{B-1} |P_{ij} - Q_{ij}| \qquad \cdots (3)$$

Here, $P_{ij}$ denotes the pixel value of the position of a pixel of interest (ij) of the block BL, $Q_{ij}$ denotes the position of the pixel of interest (ij) of a candidate block within the search range, i.e., the position of the pixel serving as the center of each candidate block within the search range, and B denotes a block size.

The block position detecting unit 1041 determines a candidate block of which the sum of absolute differences calculated with Expression (3) is the smallest. Specifically, of blocks having the same size as the block BL which can be extracted within the above-mentioned search range, one block is determined. Subsequently, the block position determining unit 1041 supplies coordinates (mvx, mvy) determining the pixel position serving as the center of the candidate block of which the sum of absolute differences is the smallest for the motion integrating unit 1042.

Specifically, the block position detecting unit 1041 determines the pixel of the temporally subsequent frame, corresponding to the pixel of the tracking point of the temporally previous frame by the so-called block matching method.

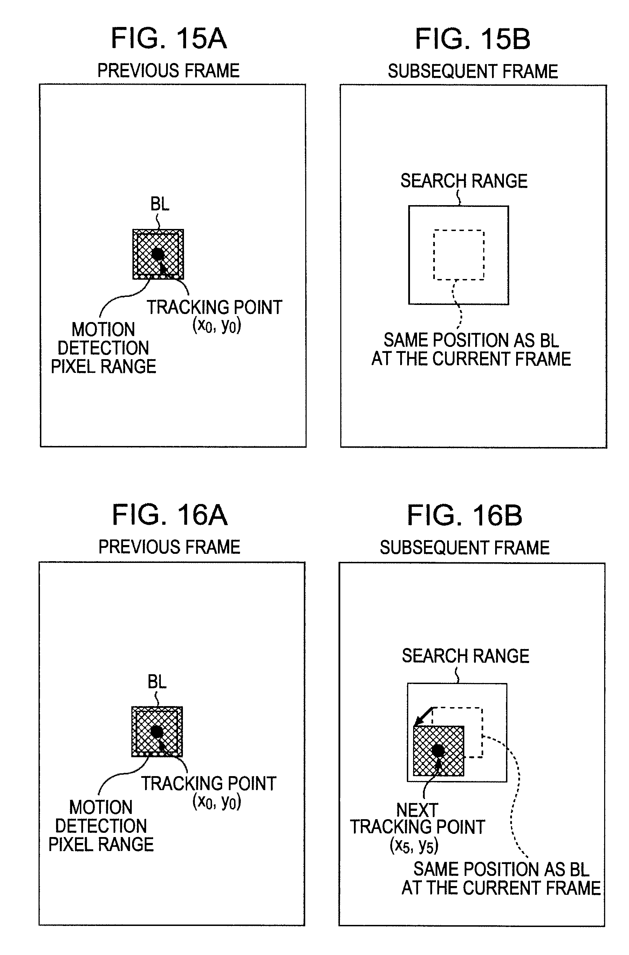

Note that when the block position detecting unit 1041 sets the block BL made up of a predetermined number of pixels with the tracking point as the center, of the image of the temporally previous frame, as described later with reference to Fig. 15A, the block position detecting unit 1041 may further set a motion detection pixel range.

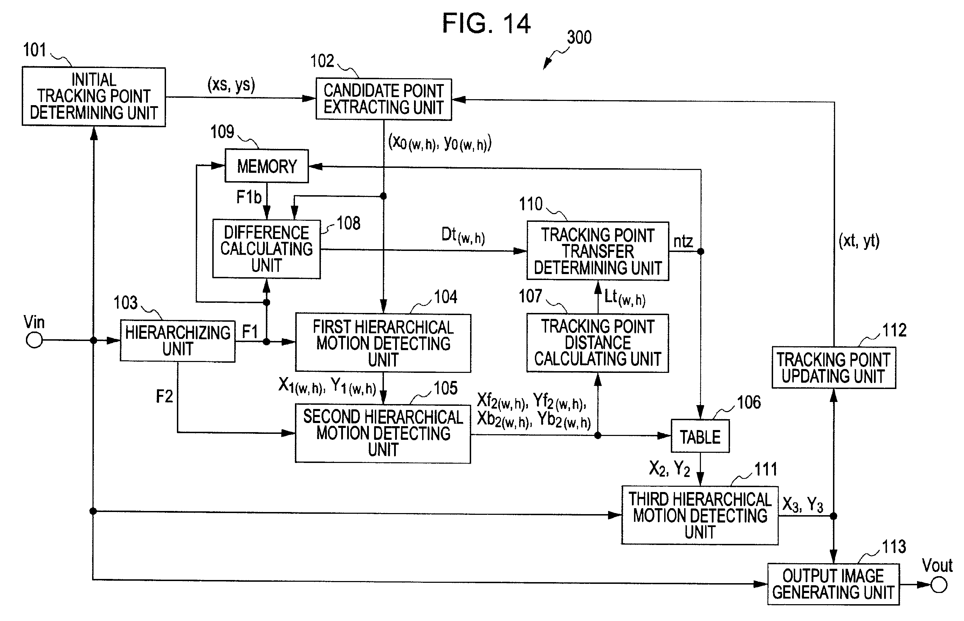

Though the details will be described later, the block position detecting unit 1041 further sets a motion detection pixel range with the pixel determined with the coordinates $(x_0, y_0)$ as the center, whereby an object can be tracked precisely, for example, even in a case where the position of the pixel of the tracking point $(x_0, y_0)$ of the temporally previous frame is shifted minutely from the original position of the pixel of the tracking point. Processing in the case of the block position detecting unit 1041 further setting a motion detection pixel range will be described later along with description of the configuration of the image processing device 300 in Fig. 14.

The motion integrating unit 1042 in Fig. 5 correlates the coordinates (mvx, mvy) determining the pixel position supplied from the block position detecting unit 1041, and the coordinates $(x_0, y_0)$ supplied from the tracking point updating unit 115 to generate, for example, vectors $X_1$ and $Y_1$ such as shown in Expressions (4) and (5).

$$X_1 = (x_0, x_5) \qquad \cdots (4)$$

7

$$Y_1 = (y_0, y_5) \qquad \ldots (5)$$

Note that Expressions (4) and (5) represent the coordinates (mvx, mvy) supplied from the block position detecting unit 1041 by $(x_5, y_5)$.

Description has been made here wherein the vectors $X_1$ and $Y_1$ are generated, but these do not have to be generated as vectors. As described above, the vectors $X_1$ and $Y_1$ have the x coordinate and y coordinate of the coordinates determining the pixel position supplied from the block position detecting unit 1041, and the x coordinate and y coordinate of the coordinates supplied from the tracking point updating unit 115 as factors, respectively, i.e., it's all in that information which can determine each of the pixel positions is obtained. With the present invention, in order to simplify explanation, let us say that, with the following description as well, information for determining multiple coordinates is represented with a vector.

Thus, for example, as shown in Figs. 7A and 7B, the tracking point of the previous frame, and the tracking point of the subsequent frame are determined consequently. Note that the coordinates (mvx, mvy) determining this pixel position correspond to the pixel position of the temporally subsequent frame in the image F1, and accordingly, which become the pixel position of the image temporally five frames after in the image F2 or the image of the input image signal Vin.

In Fig. 7A, the tracking point determined with the coordinates $(x_0, y_0)$ within the image of the temporally previous frame is denoted with a filled circle in the drawing. In Fig. 7B, the coordinates $(x_5, y_5)$ within the image of the temporally subsequent frame (= coordinates (mvx, mvy)) are denoted with a filled circle in the drawing. In this case, with the temporally subsequent frame, the tracking point moves in the lower left direction in the drawing. The tracking point of the temporally subsequent frame (Fig. 7B) is employed as the next tracking point for tracking an object of the next frame.

According to the processing up to now, the pixel positions of the tracking points of the temporally previous frame, and the temporally subsequent frame in the image F1 have been detected. That is to say, the pixel positions of the tracking points of a certain frame of the image F2, and the frame temporally five frames after of the image F2 have been detected. With the present invention, the coordinates of the tracking point at each frame decimated by the processing of the hierarchizing unit 103 are determined by being subjected to the processing of the second hierarchical motion detecting unit 105.

Now, description will return to Fig. 1, where a pair of the vectors $X_1$ and $Y_1$ [$X_1$, $Y_1$] is supplied to the second hierarchical motion detecting unit 105. The pair of the supplied vectors $X_1$ and $Y_1$ represents, for example, a combination of the coordinate position of the tracking point of a predetermined frame of the image F2, and the coordinate position of the tracking point of the frame five frames after a predetermined frame.

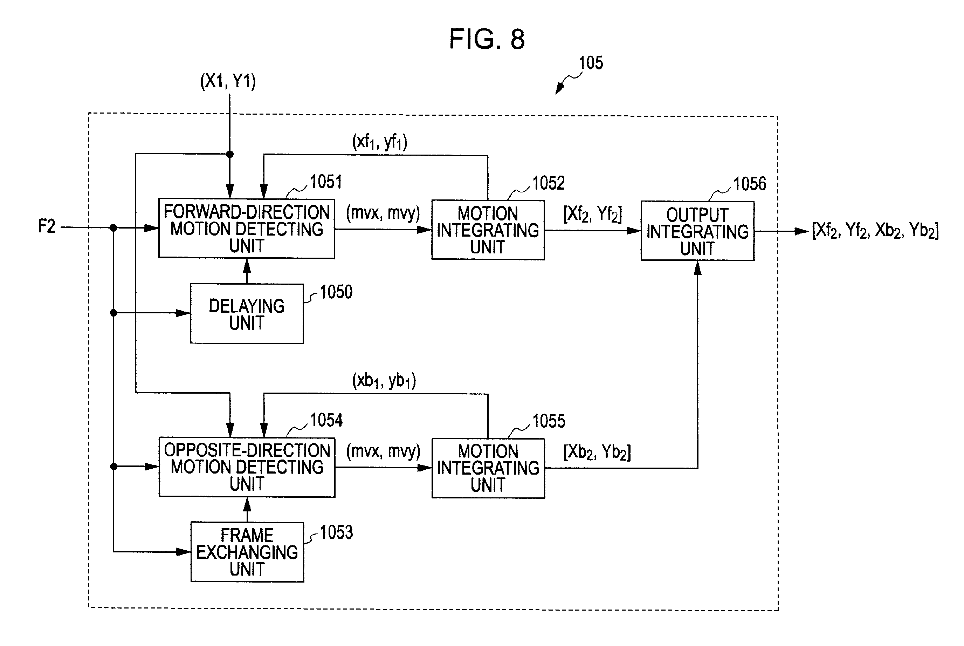

Fig. 8 is a block diagram illustrating a detailed configuration example of the second hierarchical motion detecting unit 105. A forward-direction motion detecting unit 1051 shown in Fig. 8 is configured to accept the image F2, and the image supplied from a delaying unit 1050 for delaying the image F2 for one frame worth as input data. As described above, the image F2 has not been subjected to frame interval decimation, and accordingly, is taken as an image having a frame rate five times that of the image F1, for example.

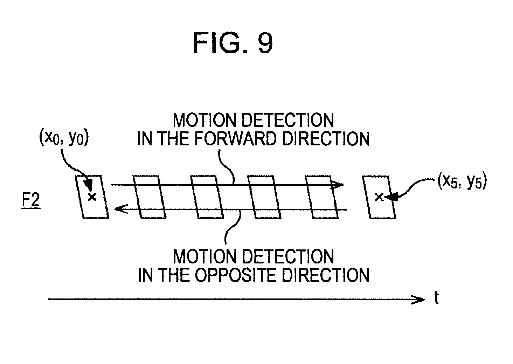

The forward-direction motion detecting unit 1051 performs, for example, forward-direction motion detection as shown in Fig. 9. In Fig. 9, each frame is indicated with a parallelogram, and six frames worth of images making up the image F2 are illustrated. Let us say that the horizontal axis of Fig. 9 is taken as time, where time elapses from the left to the right direction in the drawing. The leftmost side frame in the drawing corresponds to the temporally previous frame of the image F1, and the rightmost side frame in the drawing corresponds to the temporally subsequent frame of the image F1. Accordingly, the second through fifth frames from the left in Fig. 9 are frames decimated by the frame decimation unit 1031 of the hierarchizing unit 103.

According to the vector pair [$X_1$, $Y_1$] supplied from the first hierarchical motion detecting unit 104, the coordinates $(x_0, y_0)$ of the tracking point at the leftmost side frame in the drawing, and the coordinates $(X_5, y_5)$ of the tracking point at the rightmost side frame in the drawing can be determined. Note that the tracking point at the leftmost side frame in the drawing, and the tracking point at the rightmost side frame in the drawing are indicated with x-marks. Here, the vector pair [$X_1$, $Y_1$] is employed as information representing a tracking point group.

The forward-direction motion detecting unit 1051 detects the tracking point of the second frame from the left in the drawing, the tracking point of the third frame from the left, and the tracking point of the fourth frame from the left, based on the tracking point at the leftmost side frame in the drawing. Specifically, the forward-direction motion detecting unit 1051 detects the tracking point within each frame in the same direction as time, such as shown in an arrow of the upper side in Fig. 9.

Detection of a tracking point by the forward-direction motion detecting unit 1051 is performed in the same way as with the block position detecting unit 1041 in Fig. 5. However, the tracking point $(xf_i, yf_i)$ calculated by the motion integrating unit 1052 at a frame i becomes the position of a pixel of interest of motion detection at the next frame, and accordingly, the output of the motion integrating unit 1052 is input to the forward-direction motion detecting unit 1051 again.

Specifically, of the image of the delayed frame (temporally previous frame), the forward-direction motion detecting unit 1051 sets the block BL made up of a predetermined number of pixels with the tracking point determined with the coordinates $(x_0, y_0)$ as the center, and sets the search range with the same position as the block BL of the previous frame as the center, with the temporally subsequent frame. Note that, in this case, the delayed frame becomes, for example, the leftmost side frame in Fig. 9, and the temporally subsequent frame becomes the second frame from the left in Fig. 9.

Subsequently, the forward-direction motion detecting unit 1051 calculates sum of absolute differences between the block BL of the previous frame and a candidate block within the search range of the subsequent frame. Consequently, the coordinates $(xf_1, yf_1)$ determining the pixel position serving as the center of the candidate block of which the sum of absolute differences is the smallest is supplied to the motion integrating unit 1052.

Similarly, the forward-direction motion detecting unit 1051 takes the second frame from the left in Fig. 9 as the temporally previous frame, takes the third frame from the left as the temporally subsequent frame, determines the tracking point of the temporally previous frame by the coordinates $(xf_1, yf_1)$ determining the above-mentioned pixel position to obtain coordinates $(xf_2, yf_2)$ determining the pixel position of the temporally subsequent frame, and supplies this to the motion integrating unit 1052. Further, coordinates $(xf_3, yf_3)$ and coordinates $(xf_4, yf_4)$ determining the pixel positions of the fourth and fifth frames from the left respectively are also supplied to the motion integrating unit 1052 in the same way.

Note that each of the coordinates $(xf_1, yf_1)$, coordinates $(xf_2, yf_2)$, coordinates $(xf_3, yf_3)$, and coordinates $(xf_4, yf_4)$, which determine pixel positions, are the coordinates of the pixel position serving as the center of the candidate block of which the sum of absolute differences is the smallest, and each is not the coordinates of a tracking point in a strict sense, but in order to simplify explanation, each is referred to as coordinates determining the tracking point of the temporally previous frame.

Thus, detection of the tracking point in the same direction (forward direction) as time is performed, for example, regarding the second frame from the left in Fig. 9, the third frame from the left, the fourth frame from the left, and the fifth frame from the left. That is to say, the coordinates of the tracking points of the frames decimated by the frame decimation unit 1031 (four frames in this case) are detected in the forward direction.

On the other hand, an opposite-direction motion detecting unit 1054 detects the tracking point of the second frame from the right in the drawing, the tracking point of the third frame from the right, and the tracking point of the fourth frame from the right based on the tracking point of the rightmost side frame in the drawing. That is to say, the opposite-direction motion detecting unit 1054 detects, as shown in an arrow on the lower side in Fig. 9, the tracking point within each frame in the opposite direction of time.

Specifically, the opposite-direction motion detecting unit 1054 sets a block BL made up of a predetermined number of pixels with the tracking point determined by the coordinates $(x_5, y_5)$ as the center, of the image of the temporally subsequent frame, and sets a search range with the same position as the block BL of the previous frame as the center, of the temporally previous frame. Note that, in this case, the temporally subsequent frame is, for example, the rightmost side frame in Fig. 9, and the temporally subsequent frame is the second frame from the right in Fig. 9.

Also, an arrangement is made wherein a frame exchanging unit 1053 resorts each of the frames of the image F2 in the opposite direction, and supplies these to the opposite-direction motion detecting unit 1054. Accordingly, the opposite-direction motion detecting unit 1054 executes processing so as to detect the tracking point of the second frame from the right based on the tracking point of the rightmost side frame in Fig. 9, detect the tracking point of the third frame from the right based on the tracking point of the second frame from the right, and detect the tracking points of the subsequent frames in the same way.

The processing of the opposite-direction motion detecting unit 1054 is the same processing as the processing of the forward-direction motion detecting unit 1051 except that the frames are resorted as described above.

Specifically, the opposite-direction motion detecting unit 1054 supplies coordinates $(xb_4, yb_4)$ determining the pixel position of the second (fifth from the left) frame from the right in Fig. 9, coordinates $(xb_3, yb_3)$ determining the pixel position of the third (fourth from the left) frame from the right in Fig. 9, coordinates $(xb_2, yb_2)$ determining the pixel position of the fourth (third from the left) frame from the right in Fig. 9, and coordinates $(xb_1, yb_1)$ determining the pixel position of the fifth (second from the left) frame from the right in Fig. 9 to the motion integrating unit 1055.

That is to say, the coordinates of the tracking points of the frames decimated by the frame decimation unit 1031 (four frames in this case) are detected in the opposite direction.

The motion integrating unit 1052 generates vectors Xf2 and Yf2 shown in Expressions (6) and (7) based on the coordinates supplied from the forward-direction motion detecting unit 1051.

$$Xf_2 = (x_0, \ xf_1, \ xf_2, \ xf_3, \ xf_4, \ x_5) \ \cdot \ \cdot \ \cdot \ (6)$$

$$Yf_2 = (y_0, yf_1, yf_2, yf_3, yf_4, y_5) \quad \cdots \quad (7)$$

Subsequently, the motion integrating unit 1052 supplies a pair of the vectors $Xf_2$ and $Yf_2$ [$Xf_2$, $Yf_2$] to an output integrating unit 1056.

The motion integrating unit 1055 generates vectors $Xb_2$ and $Yb_2$ shown in Expressions (8) and (9) based on the coordinates supplied from the opposite-direction motion detecting unit 1054.

$$Xb_2 = (x_0, xb_1, xb_2, xb_3, xb_4, x_5) \quad \cdots \quad (8)$$

$$Yb_2 = (y_0, yb_1, yb_2, yb_3, yb_4, y_5) \quad \cdots \quad (9)$$

Subsequently, the motion integrating unit 1055 supplies a pair of the vectors $Xb_2$ and $Yb_2$ [$Xb_2$, $Yb_2$] to the output integrating unit 1056.

The output integrating unit 1056 is configured to output, based on the pair of vectors supplied from each of the motion integrating units 1052 and 1055, a combination of the vector pairs thereof [$Xf_2$, $Yf_2$, $Xb_2$, $Yb_2$].

Now, description will return to Fig. 1, where the combination of the vector pairs [$Xf_2$, $Yf_2$, $Xb_2$, $Yb_2$] output from the output integrating unit 1056 is supplied to a block position determining unit 114.

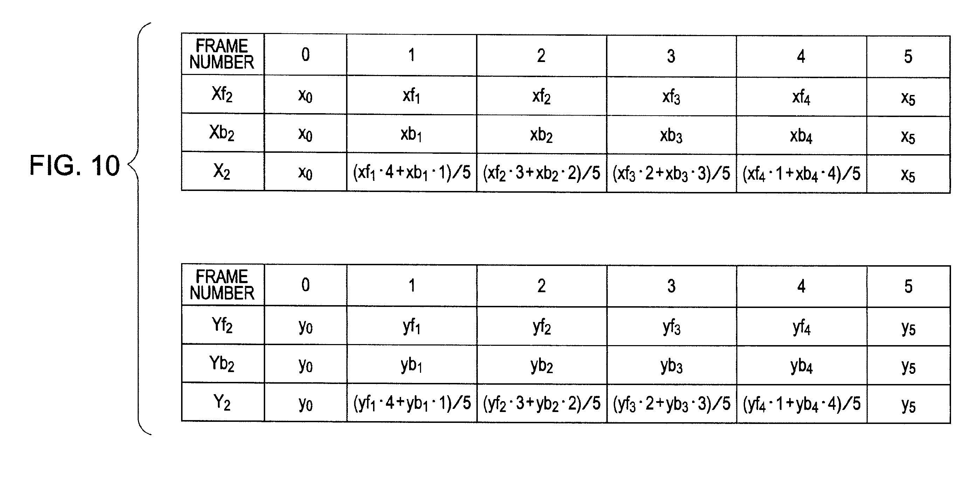

The block position determining unit 114 generates vectors $X_2$ and $Y_2$, for example, such as shown in Fig. 10, based on the combination of the vector pairs supplied from the output integrating unit 1056 [$Xf_2$, $Yf_2$, $Xb_2$, $Yb_2$]. With the frames decimated by the frame decimation unit 1031 (four frames in this case), the block position determining unit 114 determines the coordinates of one tracking point at each frame based on the coordinates of the tracking point detected in the forward direction, and the coordinates of the tracking point detected in the opposite direction.

Specifically, the block position determining unit 114 performs weighting calculation as to the coordinates of each frame in Fig. 9 determined with the combination of the vector pairs [$Xf_2$, $Yf_2$, $Xb_2$, $Yb_2$], thereby improving reliability as the pixel position of the tracking point.

In Fig. 10, a calculation example of x axis coordinates value is shown as a table of four rows by seven columns on the upper side in the drawing, and a calculation example of y axis coordinates value is shown as a table of four rows by seven columns on the lower side in the drawing. The uppermost row of the table in Fig. 10 represents frame numbers, and for example, the frame of frame number 0 corresponds to the leftmost side frame in Fig. 9, the frame of frame number 1 corresponds to the second frame from the left in Fig. 9, ..., and the frame of frame number 5 corresponds to the rightmost side frame in Fig. 9.

Also, the second row from the top of the table in Fig. 10 represents each factor of the above-mentioned vector $Xf_2$ (or $Yf_2$), and the third row from the top of the table in Fig. 10 represents each factor of the above-mentioned vector $Xb_2$ (or $Yb_2$).

The lowermost side row of the table in Fig. 10 represents each factor of the vector $X_2$ (or $Y_2$) calculated by the block position determining unit 114.

For example, with the uppermost side table in Fig. 10, the factor corresponding to the frame number 1 of the vector $X_2$ is set to

$$(xf_1 * 4 + xb_1 * 1) / 5.$$

This is a calculation wherein the factor corresponding to the frame number 1 of the vector $Xf_2$, and the factor of the vector $Xb_2$ are each multiplied by weight, and are averaged.

Specifically, each factor of the vector $Xf_2$ is a value corresponding to the coordinate value of each frame detected in the forward direction by the second hierarchical motion detecting unit 105, so with the frame of frame number 0 as a reference, weight having a greater value (4 in this case) is multiplied as the coordinates value of each factor is closer to the coordinates value of the reference frame. Also, each factor of the vector $Xb_2$ is a value corresponding to the coordinate value of each frame detected in the opposite direction by the second hierarchical motion detecting unit 105, so with the frame of frame number 5 as a reference, weight having a greater value (1 in this case) is multiplied as the coordinates value of each factor is closer to the coordinates value of the reference frame.

Subsequently, each of the weighted factors is added, and the addition result is divided by a total value (5) of the weight (4) by which the factors of the vector $Xf_2$ have been multiplied, and the weight (1) by which the vector $Xb_2$ has been multiplied, thereby performing averaging.

That is to say, the vectors $X_2$ and $Y_2$ calculated by the block position determining unit 114 can be obtained with Expressions (10) through (13).

$$p_i = (xf_i \cdot (F_N - i) + xb_i \cdot F_N) / F_N \quad \ldots (10)$$

$$q_i = (yf_i \cdot (F_N - i) + yb_i \cdot F_N) / F_N \quad \ldots (11)$$

$$X_2 = (x_0, p_1, p_2, p_3, p_4, x_5) \quad \ldots (12)$$

$$Y_2 = (y_0, q_1, q_2, q_3, q_4, y_5) \quad \ldots (13)$$

Here, in Expressions (10) through (13), i denotes a frame number, and $F_N$ denotes a frame interval decimated at the hierarchizing unit 103. For example, with the example shown in Fig. 4, the value of $F_N$ is 5.

According to $p_1$ through $p_4$ and $q_1$ through $q_4$ of Expressions (12) and (13), the pixel position of the tracking point of the image of each frame decimated with the decimation processing by the frame decimation unit 1031 of the hierarchizing unit 103 is determined. That is to say, the block position determining unit 114 outputs information representing the pixel coordinates of the tracking point of each frame of the previous image to be decimated by the frame decimation unit 1031.

Such a calculation is performed, whereby coordinates having high reliability can be obtained as the pixel position of a tracking point (e.g., the coordinates of each frame in Fig. 9).

Now description will return to Fig. 1, where the block position determining unit 114 outputs, for example, the vectors $X_2$ and $Y_2$ representing the coordinate value of each frame in Fig. 9, calculated such as shown in Fig. 10, to the third hierarchical motion detecting unit 111.

The third hierarchical motion detecting unit 111 generates vectors $X_3$ and $Y_3$ of the coordinate value of the eventual tracking point based on the vector pair $[X_2, Y_2]$ supplied from the block position determining unit 114.

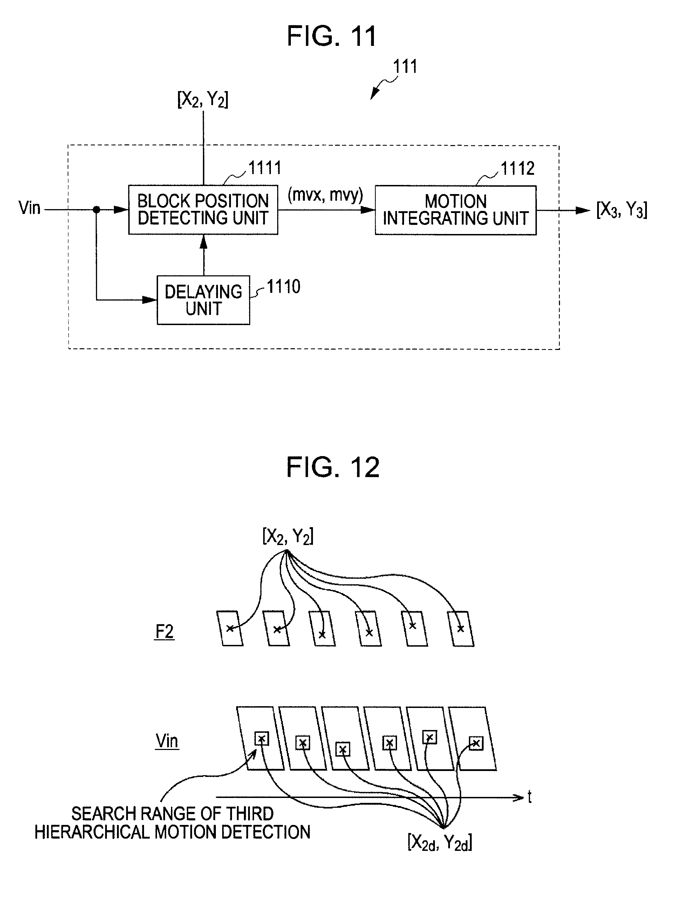

Fig. 11 is a block diagram illustrating a detailed configuration example of the third hierarchical motion detecting unit 111. The delaying unit 1110, block position detecting unit 1111, and motion integrating unit 1112, which are shown in Fig. 11, are the same as the delaying unit 1040, block position detecting unit 1041, and motion integrating unit 1042, which are shown in Fig. 5, respectively. However, the block position detecting unit 1111 in Fig. 11 is configured to obtain the pixel position of the image of the input image signal Vin based on the pixel position of the reduced image F2, and the search range at the block position detecting unit 1111 differs from the case of the block position detecting unit 1041 in Fig. 5.

In a case where the pixel position determined with the vector pair $[X_2, Y_2]$ supplied from the block position determining unit 114 is the pixel position of the image F2 obtained by reducing the image of the input image signal Vin to one fourth, the block position detecting unit 1111 calculates the vector pair $[X_{2d}, Y_{2d}]$ of a coordinate value wherein the vector pair $[X_2, Y_2]$ of a coordinate value on the image F2 is replaced with the image of the input image signal Vin, by Expressions (14) and (15).

$$X_{2d} = X_2 \times 2 \quad \ldots (14)$$

$$Y_{2d} = Y_2 \times 2 \quad \ldots (15)$$

With the temporally subsequent frame, the block position detecting unit 1111 in Fig. 11 sets a search range with the same position as the block BL of the previous frame as the center, and the search range thereof is, for example, taken as a rectangular area for -1 through +1 pixels each in the horizontal and vertical directions with the same position as the block BL at the current frame as a reference.

Subsequently, the block position detecting unit 1111 calculates sum of absolute differences between the block BL of the previous frame, and a candidate block within the search range of the subsequent frame, and supplies coordinates (mvx, mvy) determining the pixel position serving as the center of the candidate block of which the sum of absolute differences is the smallest for the motion detecting unit 1112.

Fig. 12 is a diagram describing the processing of the block position detecting unit 1111. In Fig. 12, each frame of the reduced image F2, and each frame of the image of the input image signal Vin are represented with parallelograms. Note that, as shown in Fig. 12, the number of frames of the image F2, and the number of frames of the image of the input image signal Vin are the same.

Specifically, as shown in Fig. 12, the block position detecting unit 1111 obtains the pixel position of the image of the input image signal Vin corresponding to the pixel position determined with the $[X_2, Y_2]$ of the reduced image F2, as $[X_{2d}, Y_{2d}]$. Also, the block position detecting unit 1111 calculates sum of absolute differences based on the pixel position of the image of the input image signal Vin determined with the $[X_{2d}, Y_{2d}]$ to determine the pixel position of the tracking point of each frame.

The motion integrating unit 1112 is configured, for example so as to output the coordinates determining the pixel position of the tracking point of each frame of the image of the input image signal Vin in Fig. 12 as vectors $X_3$ and $Y_3$. For example, if we say that the tracking point at frame i is $(x_{i\_3}, y_{i\_3})$, the vectors $X_3$ and $Y_3$ of the tracking point group calculated at the third hierarchical motion detecting unit 111 are represented with Expressions (16) and (17), respectively.

$$X_3 = (x_0 \times 2, \ x_{1\_3}, \ x_{2\_3}, \ x_{3\_3}, \ x_{4\_3}, \ x_{5\_3}) \quad \cdots \quad (16)$$

$$Y_3 = (y_0 \times 2, \ y_{1\_3}, \ y_{2\_3}, \ y_{3\_3}, \ y_{4\_3}, \ y_{5\_3}) \quad \cdots \quad (17)$$

That is to say, the third hierarchical motion detecting unit 111 determines the tracking point of the image of the input image signal Vin corresponding to the tracking point of the reduced image F2.

The pixel position of each frame of the image of the input image signal Vin determined with the vectors $X_3$ and $Y_3$ thus obtained is employed for the subsequent processing as the eventual tracking point.

The vector pair $[X_3, Y_3]$ output from the third hierarchical motion detecting unit 111 is supplied to the output image generating unit 113 and tracking point updating unit 115. The tracking point updating unit 115 stores (updates), for example, the coordinates of the tracking point of the temporally most subsequent frame (e.g., the rightmost side frame in Fig. 12) determined with the vector pair $[X_3, Y_3]$ as the coordinates of a new tracking point. Subsequently, the updated coordinates are supplied to the first hierarchical motion detecting unit 104 as the coordinates $(x_0, y_0)$ of a new tracking point.

The output image generating unit 113 generates, based on the tracking point determined with the vectors $X_3$ and $Y_3$ supplied from the third hierarchical motion detecting unit 111, an image wherein the information of the tracking point is displayed on an input image, and outputs the output image signal Vout of the generated image.

Note that, in a case where the hierarchizing unit 103 is allowed to perform only the frame decimation processing, and not to generate a reduction image, i.e., in a case where the hierarchizing unit 103 outputs the image of an input image signal as is as the image F2, and subjects the image F2 thereof to frame decimation processing to generate an image F1, the third hierarchical motion detecting unit 111 in Fig. 1 is dispensable.

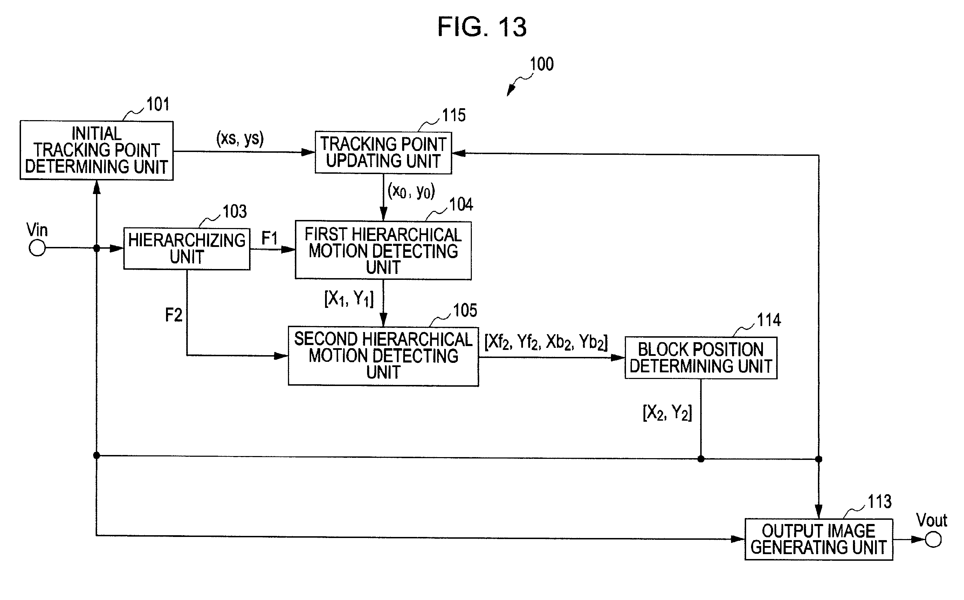

In a case where the hierarchizing unit 103 outputs the image of an input image signal as is as the image F2, and subjects the image F2 to frame decimation processing to generate an image F1, the image processing device 100 can be configured such as shown in Fig. 13. With the example in Fig. 13, unlike the case of Fig. 1, the third hierarchical motion detecting unit 111 is not provided. With the configuration in Fig. 13, the pixel position of each frame of the image of the input image signal Vin determined with the vector pair $[X_2, Y_2]$ output by the block position determining unit 114 is employed for the subsequent processing as the eventual tracking point.

Subsequently, the output image generating unit 113 generates, based on the tracking point determined with the vectors $X_2$ and $Y_2$ supplied from the block position determining unit 114, an image where the information of the tracking point is displayed on an input image, and outputs the output image signal Vout of the generated image.

The configurations other than the above-mentioned configuration in Fig. 13 are the same as in the case of Fig. 1. Thus, the tracking point is determined, and the object is tracked. Thus, with the present invention, the tracking point of a temporally distant frame (e.g., frame after five frames) is determined from the image frame of the provided tracking point. The tracking point of a frame positioned between two temporally distant frames is determined, whereby tracking of an object can be performed in a highly-reliable manner.

Next, description will be made regarding another configuration example of the image processing device to which an embodiment of the present invention has been applied. Fig. 14 is a block diagram illustrating another configuration example of the image processing device according to an embodiment of the present invention. With this image processing device 300, a more accurate tracking point can be obtained as compared to the case of the image processing device 100 in Fig. 1. Note that, in Fig. 14, the same functional blocks as the configuration in Fig. 1 are denoted with the same reference numerals.

With the image processing device 300 in Fig. 14, a candidate point extracting unit 102 is provided, and according to the candidate point extracting unit 102, multiple tracking point candidates which are points (pixels) serving as tracking point candidates are extracted as described later. Subsequently, with the first hierarchical motion detecting unit 104, and the second hierarchical motion detecting unit 105, each of the multiple tracking point candidates is subjected to, as described above, the processing of the first hierarchical motion detecting unit, and the processing of the second hierarchical motion detecting unit.

Also, with the image processing device 300 in Fig. 14, based on the processing results of the processing of the first hierarchical motion detecting unit, and the processing of the second hierarchical motion detecting unit performed upon each of the multiple tracking point candidates, such as described above, a tracking point transfer determining unit 110 is configured to determine one pixel as a tracking point eventually. Accordingly, according to the image processing device 300 in Fig. 14, a more accurate tracking point can be obtained as compared to the case of the image processing device 100 in Fig. 1.

With the image processing device 300, the input image signal Vin from an unshown input device is input to the initial tracking point determining unit 101, hierarchizing unit 103, third hierarchical motion detecting unit 111, and output image generating unit 113.

The initial tracking point determining unit 101 is configured to determine the coordinates (xs, ys) of the initial tracking point from the input image signal Vin to output these to the candidate point extracting unit 102. Note that the configuration of the initial tracking point determining unit 101 is the same as the configuration described with reference to Fig. 2, so detailed description thereof will be omitted.

The candidate point extracting unit 102 is configured to extract a tracking candidate point employed for the processing of the first hierarchical motion detecting unit 104 based on the initial tracking point (xs, ys) input from the initial tracking point determining unit 101, and the tracking point (xt, yt) input from the tracking point updating unit 112.

With the first hierarchical motion detecting unit 104, an image having one fourth as to the input image signal Vin is arranged to be processed, so with the candidate point extracting unit 102, the input tracking point is converted into a tracking point candidate center (xsm, ysm) by employing the above-mentioned Expressions (1) and (2). Note that, Expressions (1) and (2) indicates the case where the input tracking point is the initial tracking point (xs, ys), but in a case where the input tracking point is a tracking point (xt, yt), the (xs, ys) in Expressions (1) and (2) should be replaced with (xt, yt).

Also, in a case where input to the candidate point extracting unit 102 is the tracking point (xt, yt) input from the tracking point updating unit 112, i.e., in a case where input to the candidate point extracting unit 102 is not the initial tracking point (xs, ys), the candidate point extracting unit 102 extracts tracking point candidates $(x_{0(w, h)}, y_{0(w, h)})$ within a predetermined range from the tracking point candidate center (xsy, ysm). Now, let us say that w and h each denote a range from the tracking candidate point center, wherein w denotes a range in the x direction, and h denotes a range in the y direction. As for the predetermined range, for example, a range of $\pm 2$ both in the x and y directions from the tracking point candidate center (xsm, ysm) is employed, and in this case, the ranges of w and h are each set to $\pm 2$. In the case where the ranges of w and h are each set to $\pm 2$, there are 25 (= 5 × 5) kinds of tracking point candidates $(x_{0(w, h)}, y_{0(w, h)})$.

For example, let us say that $(x_{0(-1.0)}, y_{0(-1.0)})$ indicates the pixel on the left of the tracking point candidate center (xsm, ysm), and $(x_{0(0.1)}, y_{0(0.1)})$ indicates the pixel below the tracking point candidate center (xsm, ysm). Note that it goes without saying that $(x_{0(0.0)}, y_{0(0.0)})$ is the same as the tracking point candidate center (xsm, ysm).

Thus, each time the coordinates of a tracking point is supplied from the tracking point updating unit 112, the candidate point extracting unit 102 generates the coordinates of the 25 tracking point candidates corresponding to the tracking point thereof, and supplies the coordinates of the 25 tracking point candidates to the first hierarchical motion detecting unit 104, and difference calculating unit 108.

In a case where input to the candidate point extracting unit 102 is the initial tracking point (xs, ys) input from the initial tracking point determining unit 101, only $(x_{0(0.0)}, y_{0(0.0)})$ which is the tracking point candidate center (xsm, ysm) is extracted.

The tracking point candidates $(x_{0(w, h)}, y_{0(w, h)})$ extracted by the candidate point extracting unit 102 are input to the first hierarchical motion detecting unit 104 and difference calculating unit 108.

The hierarchizing unit 103 subjects the input image signal Vin to hierarchizing processing. Here, examples of the hierarchizing processing include compression of the number of pixels of an image (reduction of an image size), and decimation of the frame interval (frame rate) of an input image.

The configuration of the hierarchizing unit 103 is the same as the configuration described with reference to Fig. 3, so detailed description thereof will be omitted. As described with reference to Fig. 4, according to the hierarchizing unit 103, the image F2 is generated wherein the frame rate is the same frame rate as the image of the input image signal, the number of pixels is compressed, and the size is reduced to one fourth. Also, according to the hierarchizing unit 103, the image F1 is generated wherein the size of the input image signal is reduced to one fourth, and further, the frame interval is decimated to one fifth.

The image F1 is supplied to the first hierarchical motion detecting unit 104, difference calculating unit 108, and memory 109, and the image F2 is supplied to the second hierarchical motion detecting unit 105.

The configuration of the first hierarchical motion detecting unit 104 of the image processing device 300 in Fig. 14 is also the same as the configuration described with reference to Fig. 5, but the content of the processing differs from the first hierarchical motion detecting unit 104 of the image processing device 100 in Fig. 1.

With the first hierarchical motion detecting unit 104 of the image processing device 300 in Fig. 14, the frame of the input image F1 is delayed, for example, by being held for the amount of time corresponding to one frame, and the delayed frame is supplied to the block position detecting unit 1041 at timing wherein the next frame of the image F1 is input to the block position detecting unit 1041.

With the block position detecting unit 1041, block sum of absolute differences is calculated between the input image F1 and the signal input from the delaying unit 1040 for each of the tracking candidate points $(x_{0(w, h)}, y_{0(w, h)})$ input from the candidate point extracting unit 102.

With a certain tracking candidate point input from the candidate point extracting unit 102, of the current frame delayed by the delaying unit 1040, the block position detecting unit 1041 sets the block BL made up of a predetermined number of pixels with the tracking candidate point as the center. For example, in the case of the coordinates $(x_0, y_0)$ of a tracking candidate point, as shown in Fig. 15A, the block BL is set. In Fig. 15A, the tracking candidate point determined with the coordinates $(x_0, y_0)$ is denoted with a filled circle in the drawing. Now, let us say that the filled circle denotes one pixel. For example, the block BL made up of $9 \times 9$ pixels is set with the tracking point indicated by the filled circle in the drawing as the center.

Subsequently, the block position detecting unit 1041 further sets a motion detection pixel range with the tracking candidate point thereof as the center. The motion detection range is, for example, an area of -3 through +3 pixels with a tracking candidate point as the center, and is taken as a range of $7 \times 7$ pixels. In Fig. 15A, the motion detection range is illustrated as a rectangular area by the line within the block BL. That is to say, the block position detecting unit 1041 sets the block BL with each of pixels included in the range of $7 \times 7$ pixels as the center with a certain tracking candidate point as the center, and accordingly, 49 blocks BL are set on the current frame as to one tracking candidate point.

Specifically, in a case where the block position detecting unit 1041 sets the motion detection pixel range, 49 tracking points of the temporally subsequent frame corresponding to each of the 49 pixels of the motion detection pixel range are temporarily determined. Subsequently, according to the calculations of later-described Expressions (18) and (19), the position serving as the average of the 49 tracking points is determined, and one tracking point of the temporally subsequent frame is determined.

The motion detection pixel range is thus set, whereby an object can be tracked accurately, for example, even in a case where the pixel position of the tracking point $(x_0, y_0)$ of the temporally previous frame is shifted minutely from the original pixel position of the tracking point.

With the temporally subsequent frame, the block position detecting unit 1041 sets a search range with the same position as the block BL of the previous frame as the center. An example of the search range is a rectangular area of -15 through +15 pixels each in the horizontal and vertical directions with the same position as the block BL of the current frame as a reference.

Specifically, as shown in Fig. 15B, with the image of the temporally subsequent frame, the block position detecting unit 1041 sets a block made up of $9 \times 9$ pixels with the pixel determined with the coordinates of the tracking point candidate supplied from the candidate point extracting unit 102 (coordinates $(x_0, y_0)$ in this case) as the center, and sets a search range wherein the block thereof is expanded by 15 pixels in the horizontal and vertical directions in the drawing. That is to say, an area made up of 39 (= 9 + 15 + 15) $\times$ 39 pixels with the pixel determined with the coordinates $(x_0, y_0)$ as the center in the image of the subsequent frame is set as the search range.

Subsequently, the block position detecting unit 1041 calculates sum of absolute differences between the block BL of the previous frame and a candidate block within the search range of the subsequent frame. Here, the candidate block is, for example, each block having the same size as the block BL (size made up of $9 \times 9$ pixels in this case) which can be extracted from the search range (area made up of $39 \times 39$ pixels in this case).

Specifically, the block position detecting unit 1041 calculates sum of absolute differences such as shown in the above-mentioned Expression (3), for example.

The block position detecting unit 1041 determines a candidate block of which the sum of absolute differences calculated with Expression (3) is the smallest. Specifically, of blocks having the same size as the block BL which can be extracted within the above-mentioned search range, one block is determined. Subsequently, the block position detecting unit 1041 supplies coordinates (mvx, mvy) determining the pixel position serving as the center of the candidate block of which the sum of absolute differences is the smallest for the motion integrating unit 1042.

With the image processing device 300 in Fig. 14, the block BL is set by the block position detecting unit 1041 with each pixel within the motion detection pixel range as the center, and calculation of sum of absolute differences is performed between the block BL of the previous frame and a candidate block within the search range of the subsequent frame.

Accordingly, in a case where the motion detection pixel range is -3 through +3 pixels, the number of pixel positions serving as the center of a candidate block to be supplied to the motion integrating unit 1042 is 49 in total, as described above. Thus, 49 tracking points corresponding to the respective pixels within the motion detection pixel range are determined temporarily.

The motion integrating unit 1042 integrates the position of the block input from the block position detecting unit 1041 (in reality, the position of the pixel serving as the center of the block) by computation of Expressions (18) and (19). Here, $mvx_{ij}$ and $mvy_{ij}$ denote the pixel position serving as the center of the candidate block input from the position of the pixel of interest (i, j) within the motion detection pixel range, $x_5$ and $y_5$ denote the pixel position serving as the center of the candidate block after integration, and S denotes the motion detection pixel range.

$$x_5 = \left[ \sum_{i=0}^{S-1} mvx_{ij} \bigg/ S^2 + 0.5 \right] \qquad \cdots (18)$$

$$y_5 = \left[ \sum_{i=0}^{S-1} mvy_{ij} \bigg/ S^2 + 0.5 \right] \qquad \cdots (19)$$

(the brackets [ ] within the above Expressions mean processing for rounding off the decimals.)

Note that Expressions (18) and (19) are computations for obtaining the average of pixel positions based on the 49 pixel positions thus obtained. Thus, one tracking point of the temporally subsequent frame has been determined. As described above, with the image processing device 300 in Fig. 14, 49 tracking points are temporarily determined by the block position detecting unit 1041, and the average of the pixel positions of the 49 tracking points is obtained, thereby determining one tracking point.

Thus, as shown in Figs. 15A and 15B, with the temporally subsequent frame, the pixel position $(x_5, y_5)$ serving as the center of the block after integration has been obtained. Here, the pixel position $(x_5, y_5)$ represents the coordinates of the tracking point of the temporally subsequent frame. Consequently, the difference between the tracking point $(x_0, y_0)$ of the temporally previous frame, and the tracking point $(x_5, y_5)$ of the temporally subsequent frame represents the movement of the tracking point.

The motion integrating unit 1042 generates, for example, vectors $X_1$ and $Y_1$ by correlating the tracking point $(x_0, y_0)$ of the temporally previous frame, and the tracking point $(x_5, y_5)$ of the temporally subsequent frame, such as shown in the above-mentioned Expressions (4) and (5).

The first hierarchical motion detecting unit 104 supplies the pair of the vectors $X_1$ and $Y_1$ $[X_1, Y_1]$ to the second hierarchical motion detecting unit 105.

The above-mentioned processing is performed regarding each of the tracking point candidates $(x_{0(w, h)}, y_{0(w, h)})$ input from the candidate point extracting unit 102. Accordingly, Expressions (18) and (19) are generated as to all of the tracking point candidates $(x_{0(w, h)}, y_{0(w, h)})$, and the respective calculation results become $(x_{5(w, h)}, y_{5(w, h)})$. As a result thereof, upon describing the vectors $X_1$ and $Y_1$ in a generalized manner, the vectors $X_1$ and $Y_1$ are represented as vectors $X_{1(w, h)}$ and $Y_{1(w, h)}$, such as shown in Expressions (20) and (21).

$$X_{1(w, h)} = (x_{0(w, h)}, x_{5(w, h)}) \qquad \cdots (20)$$

$$Y_{1(w, h)} = (y_{0(w, h)}, y_{5(w, h)}) \quad \cdot \cdot \cdot (21)$$

In a case where the ranges of w and h are each $\pm 2$, 25 tracking point groups in total are generated by Expressions (20) and (21).

Now, description will return to Fig. 14, where the vectors $X_{1(w, h)}$ and $Y_{1(w, h)}$ representing the tracking point groups detected at the first hierarchical motion detecting unit 104 are supplied to the second hierarchical motion detecting unit 105.

The configuration of the second hierarchical motion detecting unit 105 of the image processing device 300 in Fig. 14 is also the same as the configuration described with reference to Fig. 8, but the second hierarchical motion detecting unit 105 having the configuration in Fig. 14 performs detection of a tracking point in the forward direction, and detection of a tracking point in the opposite direction, as to each of the tracking point groups detected at the first hierarchical motion detecting unit 104, as described above with reference to Fig. 9.

The motion integrating unit 1052 generates vectors $Xf_2$ and $Yf_2$ shown in the above-mentioned Expressions (6) and (7) based on the coordinates supplied from the forward-direction motion detecting unit 1051. Subsequently, the motion integrating unit 1052 supplies the pair of the vectors $Xf_2$ and $Yf_2$ [$Xf_2$, $Yf_2$] to the output integrating unit 1056.

The motion integrating unit 1055 generates vectors $Xb_2$ and $Yb_2$ shown in the above-mentioned Expressions (8) and (9) based on the coordinates supplied from the opposite-direction motion detecting unit 1054. Subsequently, the motion integrating unit 1055 supplies the pair of the vectors $Xb_2$ and $Yb_2$ [$Xb_2$, $Yb_2$] to the output integrating unit 1056.

The output integrating unit 1056 is configured to output, based on the vector pair supplied from each of the motion integrating units 1052 and 1055, a combination of these vector pairs [$Xf_2$, $Yf_2$, $Xb_2$, $Yb_2$].

The above-mentioned processing is performed as to each of the tracking point groups corresponding to the vectors $X_{1(w, h)}$ and $Y_{1(w, h)}$ supplied from the first hierarchical motion detecting unit 104. Accordingly, upon describing the vectors $Xf_2$ and $Yf_2$, and vectors $Xb_2$ and $Yb_2$ in a more generalized manner, the vectors $Xf_2$ and $Yf_2$, and vectors $Xb_2$ and $Yb_2$ are represented as vectors $Xf_{2(w, h)}$ and $Yf_{2(w, h)}$, and vectors $Xb_{2(w, h)}$ and $Yb_{2(w, h)}$, such as shown in Expressions (22) through (25).

$$Xf_{2(w, h)} = (x_{0(w, h)}, xf_{1(w, h)}, xf_{2(w, h)}, xf_{3(w, h)}, xf_{4(w, h)}, x_{5(w, h)}) \quad \cdot \cdot \cdot (22)$$

$$Yf_{2(w, h)} = (y_{0(w, h)}, yf_{1(w, h)}, yf_{2(w, h)}, yf_{3(w, h)}, yf_{4(w, h)}, y_{5(w, h)}) \quad \cdot \cdot \cdot (23)$$

$$Xb_{2(w, h)} = (x_{0(w, h)}, xb_{1(w, h)}, xb_{2(w, h)}, xb_{3(w, h)}, xb_{4(w, h)}, x_{5(w, h)}) \quad \cdot \cdot \cdot (24)$$

$$Yb_{2(w, h)} = (y_{0(w, h)}, yb_{1(w, h)}, yb_{2(w, h)}, yb_{3(w, h)}, yb_{4(w, h)}, y_{5(w, h)}) \quad \cdot \cdot \cdot (25)$$

For example, in a case where the ranges of w and h are each $\pm 2$, 25 tracking point groups in total are generated by Expressions (22) through (25).

Now, description will return to Fig. 14, where the vectors $Xf_{2(w, h)}$, $Yf_{2(w, h)}$, $Xb_{2(w, h)}$, and $Yb_{2(w, h)}$ which are outputs from the second hierarchical motion detecting unit 105 are supplied to a table 106 and tracking point distance calculating unit 107.

With the table 106, weighting calculation is performed as to the coordinates of each frame in Fig. 9 determined with the vectors $Xf_{2(w, h)}$, $Yf_{2(w, h)}$, $Xb_{2(w, h)}$, and $Yb_{2(w, h)}$, thereby further improving the reliability as the pixel position of a tracking point.

Specifically, as described above with reference to Fig. 10, a table in which the respective factors of the vectors $Xf_{2(w, h)}$, $Yf_{2(w, h)}$, $Xb_{2(w, h)}$, and $Yb_{2(w, h)}$ are correlated with the respective factors of the vectors $X_2$ and $Y_2$ is generated. Note that the vectors $X_2$ and $Y_2$ can be obtained by the above-mentioned Expressions (10) through (13).

The table 106 holds the table such as shown in Fig. 10 regarding each of the tracking points corresponding to the vectors $Xf_{2(w, h)}$, $Yf_{2(w, h)}$, $Xb_{2(w, h)}$, and $Yb_{2(w, h)}$ supplied from the second hierarchical motion detecting unit 105 in Fig. 14. Accordingly, upon describing the vectors $X_2$ and $Y_2$ in a more generalized manner, the vectors $X_2$ and $Y_2$ are represented as vectors $X_{2(w, h)}$ and $Y_{2(w, h)}$, obtained by Expressions (26) through (29).

$$P_{i(w, h)} = (xf_{i(w, h)} \cdot (F_N - i) + xb_{i(w, h)} \cdot F_N) / F_N \quad \cdot \cdot \cdot (26)$$

$$q_{i(w, h)} = (yf_{i(w, h)} \cdot (F_N - i) + yb_{i(w, h)} \cdot F_N) / F_N \quad \cdot \cdot \cdot (27)$$

$$X_{2(w, h)} = (x_{0(w, h)}, p_{1(w, h)}, p_{2(w, h)}, p_{3(w, h)}, p_{4(w, h)}, x_{5(w, h)}) \quad \cdot \cdot \cdot (28)$$

$$Y_{2(w, h)} = (y_{0(w, h)}, q_{1(w, h)}, q_{2(w, h)}, q_{3(w, h)}, q_{4(w, h)}, y_{5(w, h)}) \quad \cdot \cdot \cdot (29)$$

For example, in a case where the ranges of w and h are each $\pm 2$, 25 tracking point groups in total are generated by Expressions (28) through (29), and the number of tables generated and held at the table 106 is also 25. The table 106 holds (stores) these 25 tables in a manner correlated with the vectors $X_{1(w, h)}$ and $Y_{1(w, h)}$ supplied from the first hierarchical motion detecting unit 104.

Now, description will return to Fig. 14, where the tracking point distance calculating unit 107 calculates the distance between the tracking point detected with the forward-direction motion detection and the tracking point detected with the opposite-direction motion detection, of the image F2 generated at the hierarchizing unit 103, based on the tracking point group supplied with the vectors $Xf_2$, $Yf_2$, $Xb_2$, and $Yb_2$ of a certain tracking point group supplied from the second hierarchical motion detecting unit 105.

The tracking point distance calculating unit 107 calculates, for example, the distance between the tracking point detected with the forward-direction motion detection and the tracking point detected with the opposite-direction motion detection, at the intermediate position on the time axis, of the six frames of the image F2 shown in Fig. 9. With the example in Fig. 9, the intermediate position on the time axis of the image F2 is an imaginary frame, as if it were, positioned in the middle of the third frame from the left in the drawing, and the fourth frame from the left in the drawing.

The tracking point distance calculating unit 107 calculates distance Lt between the tracking point detected with the forward-direction motion detection and the tracking point detected with the opposite-direction motion detection by Expressions (30) through (34), or by Expression (35). Here, $F_N$ denotes the frame interval decimated at the hierarchizing unit 103.

In a case where $F_N$ is an odd number:

$$mfx = (xf_{(FN-1)/2} + xf_{(FN+1)/2}) / 2 \quad \cdot \cdot \cdot (30)$$

$$mfy = (yf_{(FN-1)/2} + yf_{(FN+1)/2}) / 2 \quad \cdots (31)$$

$$mbx = (xb_{(FN-1)/2} + xb_{(FN+1)/2}) / 2 \quad \cdots (32)$$

$$mby = (yb_{(FN-1)/2} + yb_{(FN+1)/2}) / 2 \quad \cdots (33)$$

$$Lt = \sqrt{(mfx-mbx)^2+(mfy-mby)^2} \quad \cdots (34)$$

In a case where $F_N$ is an even number:

$$Lt = \sqrt{(xf_{F_N/2}-xb_{F_N/2})^2+(yf_{F_N/2}-yb_{F_N/2})^2} \quad \cdots (35)$$

Note that, in this case, the frame interval decimated at the hierarchizing unit 103 is 5, so the value of $F_N$ is 5, i.e., an odd number, the distance Lt is calculated by Expressions (30) through (34).

The distance Lt of the tracking points obtained here is an indicator indicating difference at around the intermediate frame which is a motion detection result in the different temporal directions (forward direction and opposite direction), and it can be conceived that the smaller the distance is, the higher the reliability of tracking is.

The distance Lt of such tracking points is calculated regarding each of the tracking points determined with the vectors $Xf_{2(w, h)}$, $Yf_{2(w, h)}$, $Xb_{2(w, h)}$, and $Yb_{2(w, h)}$ which are outputs from the second hierarchical motion detecting unit 105 in Fig. 14. Accordingly, upon describing the distance Lt of tracking points in a generalized manner, the distance Lt is represented as distance $Lt_{(w, h)}$ calculated by Expressions (36) through (40), or by Expression (41).

In a case where $F_N$ is an odd number:

$$mfx_{(w, h)} = (xf_{(FN-1)/2(w, h)} + xf_{(FN+1)/2(w, h)}) / 2 \quad \cdots (36)$$

$$mfy_{(w, h)} = (yf_{(FN-1)/2(w, h)} + yf_{(FN+1)/2(w, h)}) / 2 \quad \cdots (37)$$

$$mbx_{(w, h)} = (xb_{(FN-1)/2(w, h)} + xb_{(FN+1)/2(w, h)}) / 2 \quad \cdots (38)$$

$$mby_{(w, h)} = (yb_{(FN-1)/2(w, h)} + yb_{(FN+1)/2(w, h)}) / 2 \quad \cdots (39)$$

$$Lt_{(w,h)} = \sqrt{(mfx_{(w,h)}-mbx_{(w,h)})^2+(mfy_{(w,h)}-mby_{(w,h)})^2}$$

$$\cdots (40)$$

In a case where $F_N$ is an even number:

$$Lt_{(w, h)} = \sqrt{(xf_{F_N/2(w, h)} - xb_{F_N/2(w, h)})^2 + (yf_{F_N/2(w, h)} - yb_{F_N/2(w, h)})^2}$$

$$\cdots \quad (41)$$

For example, in a case where the ranges of w and h are each $\pm 2$, the value of the distance obtained by Expression (40) or Expression (41) is 25 in total.

Now, description will return to Fig. 14, where the difference calculating unit 108 calculates difference between a frame to be tracked from now regarding the image F1 supplied from the hierarchizing unit 103 (hereafter, referred to as "current frame"), and a frame F1b which is the last tracking start frame held in the memory 109. For example, in a case where the frame interval of the image F1 is decimated to one fifth, the frame F1b becomes the frame five frames before the current frame.

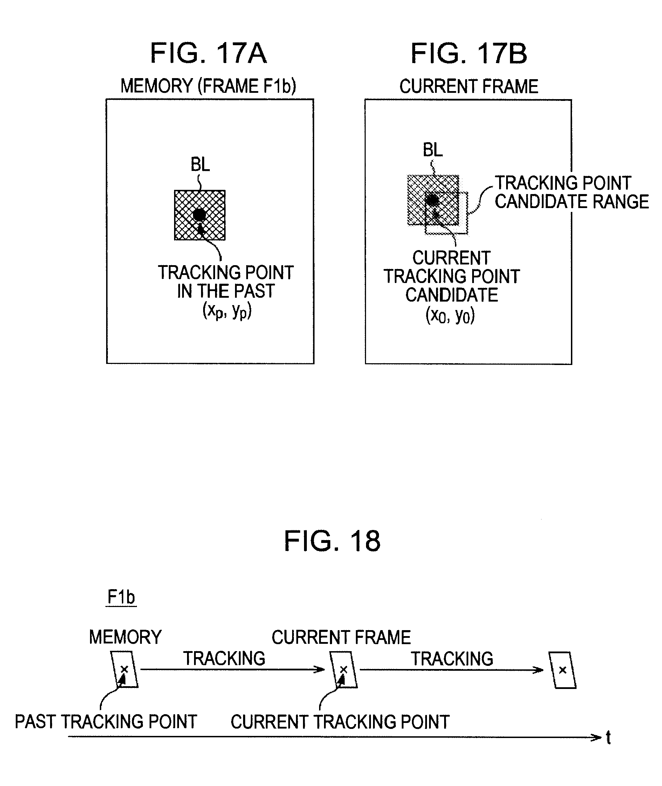

As shown in Figs. 17A and 17B, the difference calculating unit 108 sets the block BL with the past tracking point (xp, yp) of the frame F1b held at the memory 109 as the center, and sets the block BL with the tracking point candidate $(x_0, y_0)$ of the current frame as the center.

Fig. 17A represents the frame F1b held in the memory 109, wherein the position indicated with a filled circle in the drawing is taken as the coordinates (xp, yp) of the tracking point in the past (the last frame). Also, the block BL which is a rectangular area with the coordinates (xp, yp) of the tracking point as the center is set.

Fig. 17B represents the current frame, wherein the position indicated with a filled circle in the drawing is one of the 25 tracking point candidates extracted by the candidate point extracting unit 102, and represents the coordinates $(x_0, y_0)$ of the current tracking point candidate.

In Fig. 17B, the coordinates of the current tracking point candidate are taken as the coordinates of the tracking point candidate extracted as w = -2 and h = -2, and this tracking point candidate is the tracking point candidate positioned in the most upper left in the drawing, of the a rectangular area representing the range of the 25 tracking points extracted by the candidate point extracting unit 102 ("tracking point candidate range"). The block BL which is a rectangular area with the coordinates $(x_0, y_0)$ of the current tracking point candidate as the center is set.

Accordingly, in reality, 25 kinds of blocks BL with each of the 25 tracking point candidates included in the "tracking point candidate range" in Fig. 17B as the center are set.

The difference calculating unit 108 calculates, for example, sum of absolute differences of pixel values between the block BL in Fig. 17A and the block BL in Fig. 17B. That is to say, 25 kinds of sum of absolute differences are calculated between the (one) block BL of the frame F1b in Fig. 17A and the (25) blocks BL of the current frame in Fig. 17B. Now, let us say that the value of the sum of absolute differences to be calculated is represented as $Dt_{(w, h)}$.

The value $Dt_{(w, h)}$ of the sum of absolute differences calculated by the difference calculating unit 108 can be employed, for example, for determining whether or not each of the 25 tracking point candidates extracted by the candidate point extracting unit 102 is suitable as the coordinates $(x_0, y_0)$ of the tracking point of the leftmost side frame in Fig. 9. For example, in the event that the value $Dt_{(w, h)}$ of the sum of absolute differences is a markedly great value, it is not appropriate that forward-direction detection or opposite-direction detection is performed based on the tracking point candidate thereof.

The value $Dt_{(w, h)}$ of the sum of absolute differences calculated by the difference calculating unit 108 is supplied to the tracking point transfer determining unit 110.

Now, description will return to Fig. 14, where the tracking point transfer determining unit 110 performs transfer of tracking points based on the calculation result $Lt_{(w, h)}$ of the tracking point distance calculating unit 107 corresponding to all the tracking point candidates extracted at the candidate point extracting unit 102, and the result $Dt_{(w, h)}$ of the difference calculating unit 108 corresponding to all the tracking point candidates extracted at the candidate point extracting unit 102.

The tracking point transfer determining unit 110 selects a tracking point candidate satisfying Expressions (42) and (43) with the coordinates of the center of the 25 tracking point candidates extracted by the candidate point extracting unit 102 as $(x_{0(0.0)}, y_{0(0.0)})$.

$$Dt_{(x0(w, h), y0(w, h))} \leq Dt_{(x0(0.0), y0(0.0))} \quad \cdots \quad (42)$$

$$Lt_{(x0(w, h), y0(w, h))} \leq Lt_{(x0(0.0), y0(0.0))} \qquad \cdot \cdot \cdot (43)$$

Specifically, for example, with each of the 25 tracking point candidates $(x_{0(w, h)}, y_{0(w, h)})$, the value of $Dt(x_{0(0.0)}, y_{0(0.0)})$ at the center $(x_{0(0.0)}, y_{0(0.0)})$ of the tracking point candidates is compared with $Dt(x_{0(w, h)}, y_{0(w, h)})$, the value of Lt $(x_{0(0.0)}, y_{0(0.0)})$ at the center $(x_{0(0.0)}, y_{0(0.0)})$ of the tracking point candidates, corresponding to $Dt(x_{0(w, h)}, y_{0(w, h)})$ of which the value is below the value of $Dt(x_{0(0.0)}, y_{0(0.0)})$, is compared with $Lt(x_{0(w, h)}, y_{0(w, h)})$, and the tracking point candidate $(x_{0(w, h)}, y_{0(w, h)})$ corresponding to $Lt(x_{0(w, h)}, y_{0(w, h)})$ of which the value is below the value of $Lt(x_{0(0.0)}, y_{0(0.0)})$ is selected.

With each of the tracking point candidates satisfying Expressions (42) and (43), the correlation with the past tracking point is conceived as equal to or higher than the center of the tracking point candidates, and also tracking reliability thereof is conceived as higher than the center of the tracking point candidates from the perspective of the processing results of the second hierarchical motion detecting unit 105.

As described above, the block position detecting unit 1041 of the first hierarchical motion detecting unit 104 detects the block position as to the past tracking point of the frame F1b, thereby determining the coordinates of the center of the tracking point candidates of the current frame. At this time, as described above with reference to Figs. 15A and 16A, the block position detecting unit 1041 of the first hierarchical motion detecting unit 104 sets a motion detection pixel range with a predetermined tracking candidate point as the center, and detects the coordinate value of the average of the block positions detected at all the pixels included in the motion detection pixel range, and accordingly, with the center of the tracking point candidates, the correlation with the past tracking point is not necessarily the highest.

To this end, the tracking point transfer determining unit 110 performs the calculations shown in Expressions (44) through (49) to perform transfer of tracking points. Here, ntz denotes the tracking point after transfer, and Kn denotes the total number of tracking point candidates satisfying Expressions (42) and (43).

$$ntx = \sum_{i=0}^{Kn-1} \left( x_{0(w,h)} \cdot (Lt_{(x_{0(0.0)}, y_{0(0.0)})} - Lt_{(x_{0(w,h)}, y_{0(w,h)})}) + 1 \right)$$
$$\cdot \cdot \cdot (44)$$

$$nty = \sum_{i=0}^{Kn-1} \left( y_{0(w,h)} \cdot (Lt_{(x_{0(0.0)}, y_{0(0.0)})} - Lt_{(x_{0(w,h)}, y_{0(w,h)})}) + 1 \right)$$
$$\cdot \cdot \cdot (45)$$

$$cn = \sum_{i=0}^{Kn-1} \left( Lt_{(x_{0(0.0)}, y_{0(0.0)})} - Lt_{(x_{0(w,h)}, y_{0(w,h)})}) + 1 \right) \qquad \cdot \cdot \cdot (46)$$

$$ntz_x = [ntx / cn + 0.5] \qquad \cdot \cdot \cdot (47)$$

$$ntz_y = [nty / cn + 0.5] \qquad \cdot \cdot \cdot (48)$$

$$ntz = (ntz_x, ntz_y) \qquad \cdot \cdot \cdot (49)$$

(the brackets [ ] within the above Expressions mean processing for rounding off the decimals.)

The tracking point ntz after transfer thus determined is supplied to the table 106, and memory 109.

Now, description will return to Fig. 14, where with the table 106, the vectors $X_2$ and $Y_2$ corresponding to the tracking point group which is applicable to the tracking point ntz transferred at the tracking point transfer determining unit 110 are read out and input to the third hierarchical motion detecting unit 111. The 25 tables described with reference to Fig. 10 are held at the table 106, and accordingly, with the table 106, the coordinates of the tracking point ntz after transfer are converted into $(x_{0(w, h)}, y_{0(w, h)})$, and the table corresponding to w and h thereof is read out.

As described above, each of the tables such as shown in Fig. 10 is held (stored) in the table 106 in a manner correlated with the vectors $X_{1(w, h)}$ and $Y_{1(w, h)}$ supplied from the first hierarchical motion detecting unit 104. Subsequently, as described above, the vectors $X_{1(w, h)}$ and $Y_{1(w, h)}$ are obtained wherein Expressions (18) and (19) are generated for each of all the tracking point candidates $(x_{0(w, h)}, y_{0(w, h)})$, and each of the calculation results is taken as $(x_{5(w, h)}, y_{5(w, h)})$, and is denoted as vectors $X_{1(w, h)}$ and $Y_{1(w, h)}$ such as Figs. (20) and (21).

The tracking point ntz after transfer shown in Expression (49) corresponds to the coordinates $(x_{0(w, h)}, y_{0(w, h)})$ of the tracking point candidate, of the factors of the vectors $X_{1(w, h)}$ and $Y_{1(w, h)}$. With the table 106, the coordinates $(X_{0(w, h)}, y_{0(w, h)})$ of the tracking point candidate is determined based on the x coordinate value and y coordinate value of the tracking point ntz after transfer, and the vectors $X_{1(w, h)}$ and $Y_{1(w, h)}$ including the coordinates $(X_{0(w, h)}, Y_{0(w, h)})$ of the determined tracking point candidate. Subsequently, based on the table held in a manner correlated with the determined vectors $X_{1(w, h)}$ and $Y_{1(w, h)}$, the vectors $X_2$ and $Y_2$ which represent the coordinates of the tracking point group equivalent to the tracking point ntz transferred at the tracking point transfer determining unit 110 are determined and read out and supplied to the third hierarchical motion detecting unit 111.

The table read out from the table 106 is configured such as shown in Fig. 10, and accordingly, each value of the row denoted as $X_2$ or $Y_2$ which is the row on the lowermost side (the fourth row from the top) in Fig. 10 should be taken as a factor of the vectors $X_2$ or $Y_2$. The vectors $X_2$ or $Y_2$ have been read out from the table 106, which means that information representing the coordinates of the pixel of the tracking point of each frame of an image before decimation by the frame decimation unit 1031 has been output.

Upon transfer of tracking points at the tracking point transfer determining unit 110 being determined, with the memory 109, of the current frame of the image F1 generated at the hierarchizing unit 103, the block BL with the tracking point ntz after transfer as the center is set, and also the current frame thereof is rewritten in the memory 109 as the frame F1b.

Specifically, as shown in Fig. 18, upon transfer of the tracking points of the current frame of the image F1 being determined, with the frame thereof as the frame F1b, and with the tracking point ntz after transfer as the past tracking point (xp, yp), transfer processing of tracking points of a new frame is executed.

Note that, in a case where input to the candidate point extracting unit 102 is the initial tracking point (xs, ys), only the center $(x_{0(0.0)}, y_{0(0.0)})$ of the tracking point candidates is output from the candidate point extracting unit 102, and accordingly, transfer of tracking points is not performed at the tracking point transfer determining unit 110.

Now, description will return to Fig. 14, where the third hierarchical motion detecting unit 111 which received supply of the vectors $X_2$ or $Y_2$ from the table 106 generates the vectors $X_3$ or $Y_3$ of the coordinate value of the eventual tracking point.

The configuration example of the third hierarchical motion detecting unit 111 of the image processing device 300 in Fig. 14 is the same as the configuration described above with reference to Fig. 11.

The block position detecting unit 1111 calculates the vectors $X_{2d}$ and $Y_{2d}$ of the coordinate value obtained by replacing the coordinate value on the image F2 determined with the vectors $X_2$ and $Y_2$ supplied from the table 106 with the image of the input image signal Vin, by employing the above-mentioned Expressions (14) and (15).

With the temporally subsequent frame, the block position detecting unit 1111 in Fig. 11 sets a search range with the same position as the block BL of the previous frame as the center, and the search range thereof is taken as, for example, a rectangular area of -1 through +1 pixels each in the horizontal and vertical directions with the same position as the block BL of the current frame as a reference.

Subsequently, the block position detecting unit 1111 calculates sum of absolute differences between the block BL of the previous frame, and a candidate block within the search range of the subsequent frame, and supplies the coordinates (mvx, mvy) determining the pixel position serving as the center of the candidate block of which the sum of absolute differences is the smallest for the motion integrating unit 1112.

Specifically, as shown in Fig. 12, the block position detecting unit 1111 obtains the pixel position of the image of the input image signal Vin corresponding to the pixel position determined with the $[X_2, Y_2]$ of the reduced image F2 as $[X_{2d}, Y_{2d}]$. Also, the block position detecting unit 1111 calculates sum of absolute differences based on the pixel position of the image of the input image signal Vin determined with the $[X_{2d}, Y_{2d}]$ to determine the pixel position of the tracking point of each frame.

The motion integrating unit 1112 is configured, for example, so as to output the coordinates determining the pixel position of the tracking point of each frame of the image of the input image signal Vin in Fig. 12 as vectors $X_3$ and $Y_3$. For example, if we say that the tracking point of a frame i is set to $(x_{i\_3}, y_{i\_3})'$ the vectors $X_3$ and $Y_3$ of the tracking point group calculated at the third hierarchical motion detecting unit 111 are represented with the above-mentioned Expressions (16) and (17), respectively.

Specifically, the third hierarchical motion detecting unit 111 determines the tracking point of the image of the input image signal Vin corresponding to the tracking point of the reduced image F2.

The pixel position of each frame of the image of the input image signal Vin determined with the vectors $X_3$ and $Y_3$ thus obtained is employed for the subsequent processing as the eventual tracking point.

Now, description will return to Fig. 14, where the vectors $X_3$ and $Y_3$ output from the third hierarchical motion detecting unit 111 are supplied to the output image generating unit 113 and tracking point updating unit 112. The tracking point updating unit 112 stores (updates), for example, the coordinates of the tracking point of the temporally most subsequent frame (e.g., the rightmost side frame in Fig. 12) determined with the vectors $X_3$ and $Y_3$ as the coordinates of a new tracking point. Subsequently, the updated coordinates are supplied to the candidate point extracting unit 102 as the coordinates (xt, yt) of a new tracking point.

Based on the tracking point determined with the vectors $X_3$ and $Y_3$ supplied from the third hierarchical motion detecting unit 111, the output image generating unit 113 generates an image where the information of the tracking point is displayed on an input image, and outputs the output image signal Vout of the generated image.

Note that, in the same way as the case described with reference to Fig. 13, in the case of the image processing device 300 in Fig. 14 as well, the hierarchizing unit 103 may be allowed to perform only the frame decimation processing, and not to generate a reduction image. In a case where the hierarchizing unit 103 outputs the image of an input image signal as is as the image F2, and subjects the image F2 thereof to frame decimation processing to generate an image F1, the third hierarchical motion detecting unit 111 in Fig. 14 is dispensable. The tracking point is thus determined, and the object is tracked.

The image processing device 300 according to an embodiment of the present invention is configured so as to determine the tracking point of a temporally distant frame (e.g., frame five frames after) from the frame of the image of the obtained tracking point. The tracking point of a frame positioned between two temporally distant frames is determined, whereby tracking of an object can be performed in a high reliable manner.

Also, with the image processing device 300 according to an embodiment of the present invention, multiple tracking point candidates are set by the candidate point extracting unit 102, tracking based on each of the tracking point candidates is performed, and transfer of tracking points is performed by comparing the tracking results. Accordingly, for example, there is a low possibility wherein during tracking processing, the tracking point is set outside the object to be originally tracked, and an incorrect object is tracked.

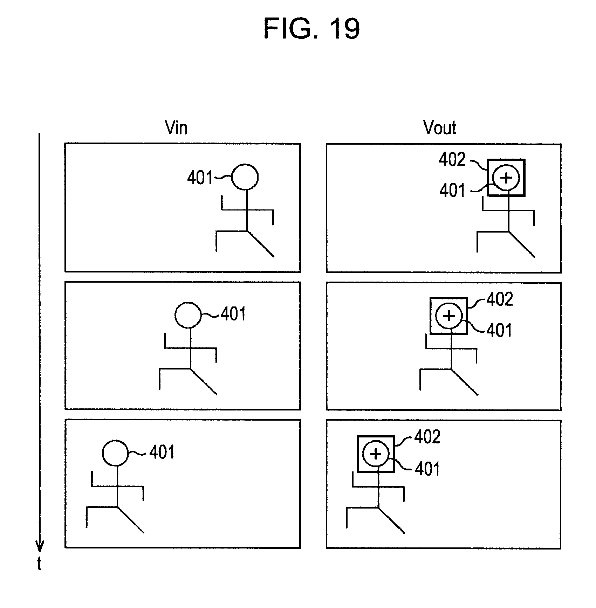

Fig. 19 is a diagram illustrating an example of the output image generated by the output image generating unit 113 of the image processing device 100 in Fig. 1 or the image processing device 300 in Fig. 14. In Fig. 19, let us say that time elapses in the vertical direction in the drawing. Specifically, the uppermost image in the drawing is, for example, the image of the first frame, the second image from the top in the drawing is the image of the second frame, and the lowermost image in the drawing is the image of the third frame.

Also, in Fig. 19, in order to make the drawing understandable, input images and output images are arrayed. Specifically, three images arrayed on the left side in the vertical direction in the drawing are taken as the images (input images) corresponding to the input image signal Vin, and three images arrayed on the right side in the vertical direction in the drawing are taken as the images (output images) corresponding to the output image signal Vout.

The images in Fig. 19 are a moving image wherein a person who moves from the right to left on the screen is displayed, and in this example, the person's head 401 is taken as an object to be tracked. With the output images, a gate 402 is overlapped and displayed on the person's head 401. Thus, the output images are generated and displayed so as to identify an object to be tracked in a simple manner.

Also, a tracking point may be displayed along with the gate 402. With the example of the output image in Fig. 19, the position of a tracking point is illustrated with a cross-type symbol on the central portion of the gate 402.

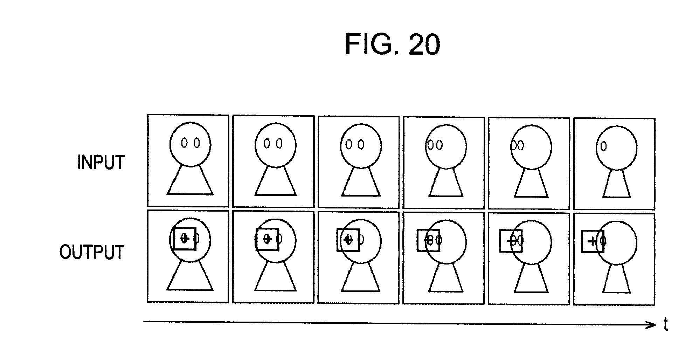

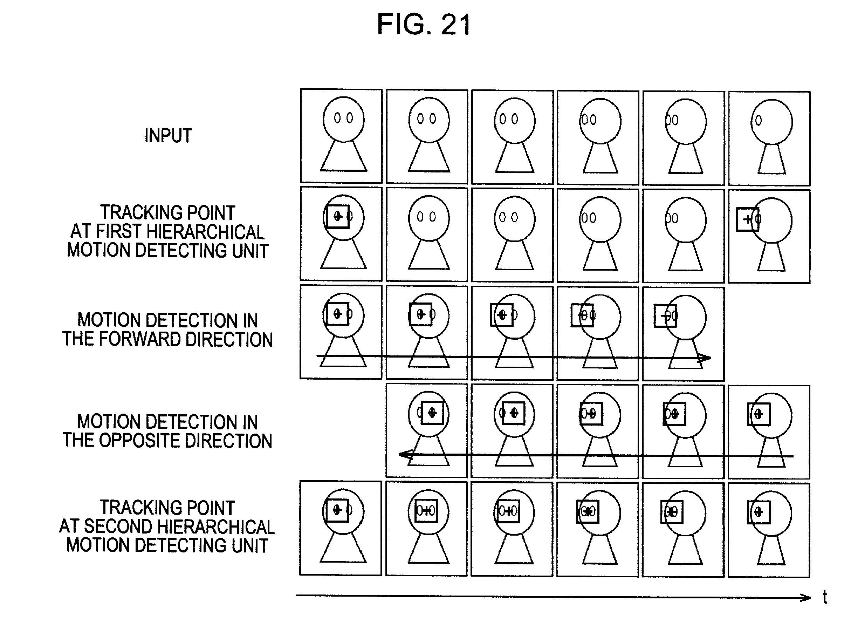

The advantage of the image processing device 100 or the image processing device 300 according to an embodiment of the present invention will be described with reference to Figs. 20 and 21.

Fig. 20 is a diagram illustrating an example of tracking of an object by an image processing device according to the related art. In Fig. 20, let us say that time elapses in the horizontal direction in the drawing. Specifically, the leftmost image in the drawing is, for example, the image of the first frame, the second image from the left in the drawing is the image of the second frame, and so on, and the rightmost image in the drawing is the image of the sixth frame.

Also, in Fig. 20, input images and output images are arrayed. Specifically, six images arrayed on the upper side in the horizontal direction in the drawing are taken as the images (input images) corresponding to an input image signal, and six images arrayed on the right side in the horizontal direction in the drawing are taken as the images (output images) corresponding to an output image signal.

The images in Fig. 20 are a moving image wherein a person who faces the front gradually faces the right, and in this example, the person's right eye is taken as an object to be tracked.

Of the output images in Fig. 20, for example, with the rightmost side image in the drawing, a tracking point indicted by a cross symbol in the drawing is apart from the person's face. This is because as the person faces the right, and accompanied therewith, the right eye is not displayed on the screen.

Thus, in a state in which the tracking point is apart from the person's face, upon further continuing tracking, an object other than the person within the screen might be tracked erroneously.

Fig. 21 is a diagram illustrating an example of tracking of an object by the image processing device according to an embodiment of the present invention. In Fig. 21, let us say that time elapses in the horizontal direction in the drawing. Specifically, the leftmost image in Fig. 21 is, for example, the image of the first frame, the second image from the left in the drawing is the image of the second frame, and so on, and the rightmost image in the drawing is the image of the sixth frame.

Also, in Fig. 21, images representing the position of a tracking point at the first hierarchical motion detecting unit, and images representing the position of the tracking point at the second hierarchical motion detecting unit are arrayed along with input images. Specifically, six images arrayed on the uppermost side in the horizontal direction in the drawing are taken as the images (input images) corresponding to an input image signal, and below the input images, images representing the position of the tracking point at the first hierarchical motion detecting unit, images representing the position of the tracking point by forward-direction motion detection at the second hierarchical motion detecting unit, images representing the position of the tracking point by opposite-direction motion diction at the second hierarchical motion detecting unit, and images representing the position of the tracking point at the second hierarchical motion detecting unit are displayed.

Note that images displayed by a gate being actually overlapped on the object are only the output images passed through the processing of the third hierarchical motion detecting unit, but in Fig. 21, in order to make the drawing understandable, with images representing the position of the tracking point at the first hierarchical motion detecting unit, images representing the position of the tracking point by forward-direction motion detection at the second hierarchical motion detecting unit, images representing the position of the tracking point by opposite-direction motion detection at the second hierarchical motion detecting unit, and images representing the position of the tracking point at the second hierarchical motion detecting unit as well, a gate is overlapped and displayed on the object.

The images in Fig. 21 are, similar to the example in Fig. 20, a moving image where a person who faces the front gradually faces the right, and with this example, the right eye of the person is taken as the tracking point of the object to be tracked.

As shown in Fig. 21, with the image processing device according to an embodiment of the present invention, the pixel position (tracking point) of the image of the sixth frame corresponding to the tracking point of the image of the first frame is determined by the first hierarchical motion detecting unit. Note that the position of the tracking point is indicated by a cross symbol in the drawing.

With the image of the sixth frame, the right eye of the person is not displayed on the screen, but according to calculation of sum of absolute differences performed between blocks around the tracking point of the image of the first frame, the position close to the right eye of the person is determined as a tracking point even with the image of the sixth frame.

Subsequently, as described above with reference to Fig. 9, the position of the tracking point is determined by forward-direction motion detection and opposite-direction motion detection, and the position of the tracking point at the second hierarchical motion detecting unit is determined based on the processing results of the forward-direction motion detection, and the processing results of the opposite-direction motion detection.

As a result thereof, with the image processing device according to an embodiment of the present invention, for example, even in a case where the object to be tracked is not displayed with an intermediate frame of a moving image, a tracking point is set to the position close to the tracking point of the object thereof, whereby tracking can be continued.

For example, the tracking point might be shifted gradually by forward-direction motion detection alone in the same way as with the image processing device according to the related art, but opposite-direction motion detection is further performed, and accordingly, the pixel of the position close to the tracking point of the object to be tracked is continuously tracked, and accordingly, the tracking point is not shifted from the person's image with the eventual tracking point at the second hierarchy which is the average with weighting of both of forward-direction motion detection and opposite-direction motion detection.

Also, with the first hierarchical motion detecting unit, when performing tracking as to the image of the next frame, transfer of tracking points is performed based on the correlation with the past tracking point, and the reliability of tracking at the second hierarchy, whereby tracking can be performed in a robust manner as to various types of fluctuation within an image.

Further, with the first hierarchical motion detecting unit and second hierarchical motion detecting unit, a reduction image employing an average value is processed, whereby motion detection can be performed which prevents influence of the noise component or high-frequency component of an input image from reception. Moreover, the motion detection range at third hierarchical motion detecting unit is restricted, and more fine motion detection is performed, whereby the tracking point can be adjusted in more detail eventually.

Incidentally, with the image processing device 100 in Fig. 1 or the image processing device 300 in Fig. 14, the above-mentioned initial tracking point determining unit 101 may be configured in a manner different from Fig. 2.

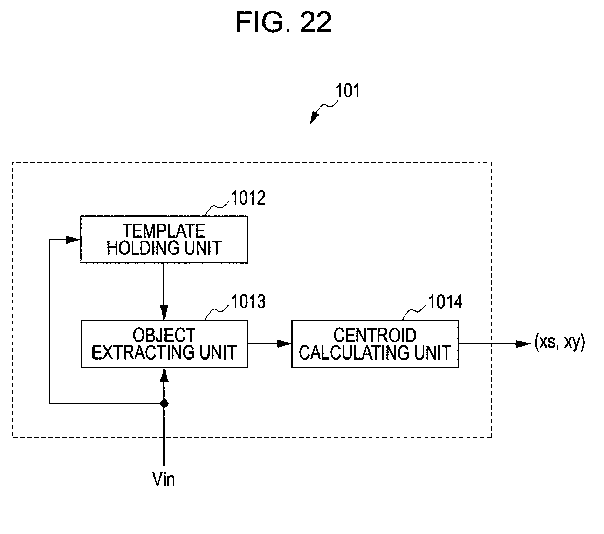

Fig. 22 is a block diagram illustrating another configuration example of the initial tracking point determining unit 101. The configuration shown in Fig. 2 allows the user to specify a tracking point, but the configuration shown in Fig. 22 specifies a tracking point automatically.

With the initial tracking point determining unit 101 in Fig. 22, the input image signal Vin is input to the object extracting unit 1013. The object extracting unit 1013 is configured to extract an object from difference between the input image signal Vin and the template image recorded in the template holding unit 1012.

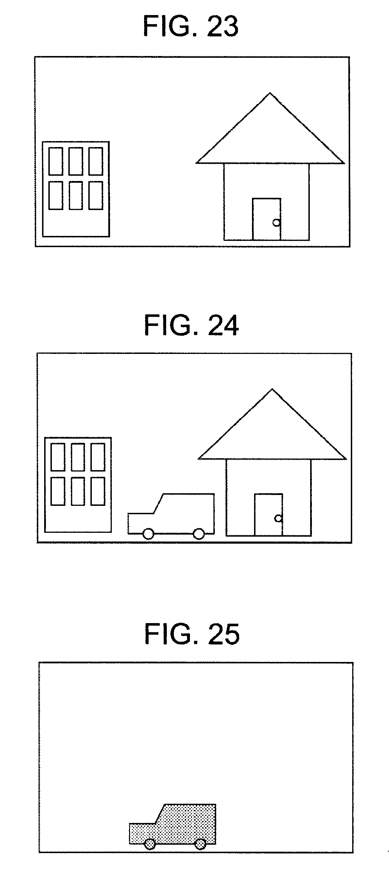

For example, let us say that an image such as shown in Fig. 23 is recorded in the template holding unit 1012. With this example, an image where two buildings are reflected is taken as a template image.

Now, let us say that an image such as shown in Fig. 24 has been supplied to the object extracting unit 1013 as the image of the input image signal Vin. The object extracting unit 1013 extracts an area included in the image shown in Fig. 24 different from the template image shown in Fig. 23. For example, the object such as show in Fig. 25 is extracted. With this example, an automobile is extracted as an object.

For example, in the event of recording an image in a state including no object as a template image, such as a case where the image of the same place is imaged continuously by a surveillance camera, when an image including some object is imaged, the area of the object can be extracted from the difference as to the template image. As for extraction of the area of an object, for example, it is desirable that the difference of corresponding pixel values between a template image and the image of the input image signal Vin is calculated, the difference of the respective pixels is compared with a predetermined threshold, and a pixel of which the difference is greater than the threshold is extracted.

Also, in a case where an image including no object but many pixels of which the difference as to a template image is great, such as change in sunlight or weather, or the like, is imaged, the image of the input image signal Vin may be overwritten on the template image.

Now, description will return to Fig. 22, where a centroid calculating unit 1014 calculates the centroid of the area extracted at the object extracting unit 1013 by employing Expressions (50) and (51). Here, (xi, yi) denotes the coordinates of the extracted object, and On denotes the number of pixels of the extracted object.

$$xs = \sum_{i=0}^{0n-1} x_i \Big/ 0n \qquad \cdots \ (50)$$

$$ys = \sum_{i=0}^{0n-1} y_i \Big/ 0n \qquad \cdots \ (51)$$

The coordinates of the centroid calculated at the centroid calculating unit 1014 is employed as the initial tracking point (xs, ys).

According to such an arrangement, a tracking point is specified automatically, whereby tracking of an object can be performed.

Incidentally, a tracking point is usually set as one point within a moving object in the screen. Accordingly, for example, in the event that a moving object within an input image signal can be extracted, it is desirable to perform detection of a tracking point regarding only the inside of the area of a pixel making up the extracted object.

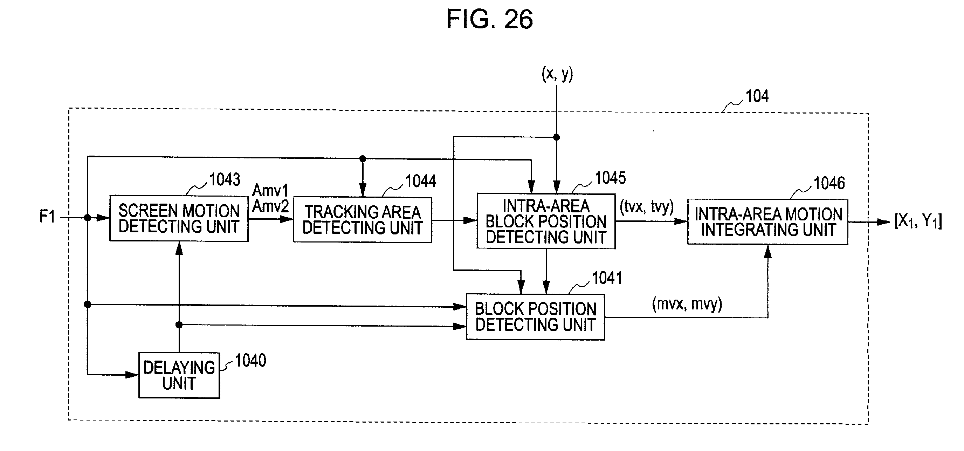

Fig. 26 is a block diagram illustrating another configuration example of the first hierarchical motion detecting unit 104. With the example in Fig. 26, the first hierarchical motion detecting unit 104 extracts a moving object, and performs detection of a tracking point regarding only the inside of the area of a pixel making up the extracted object thereof.

Note that the first hierarchical motion detecting unit 104 shown in Fig. 26 has a configuration which is particularly effective by being employed, for example, in a case where while tracking a predetermined object of an image, the field angle of a camera changes along with the motion of an object.

With the first hierarchical motion detecting unit 104 in Fig. 26, the input image F1 is supplied to the delaying unit 1040, block position detecting unit 1041, and screen motion detecting unit 1043. The delaying unit 1040 delays the image F1 by two frames to supply this to the block position detecting unit 1041, and screen motion detecting unit 1043.

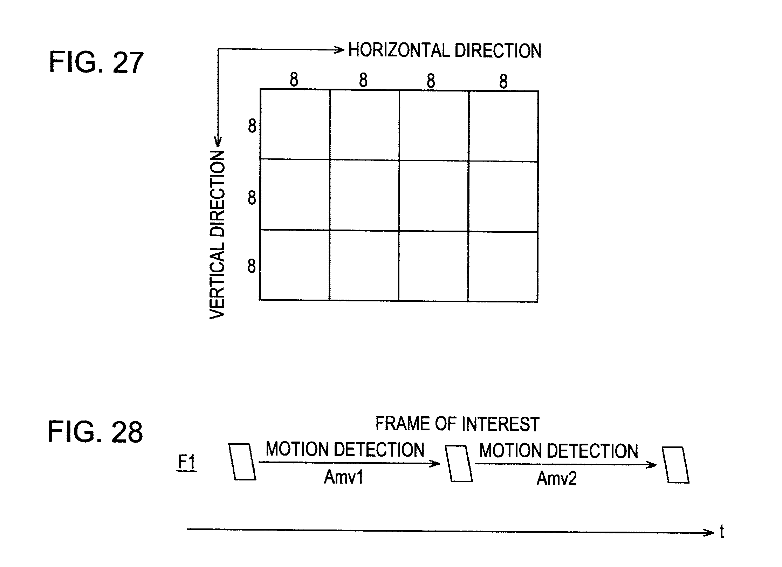

The screen motion detecting unit 1043 detects the screen motion of the image F1. The screen motion detecting unit 1043 performs motion detection as to a frame of interest, and as to temporally previous and subsequent frames. For example, as shown in Fig. 27, the screen motion detecting unit 1043 divides the entire screen of one frame of the image F1 into $8 \times 8$ blocks, and calculates a motion vector by block matching for each block. Subsequently, the histogram of the motion vector of each block is created, and the motion vector of which the frequency is the greatest is employed as the motion vector of the entire screen.

Thus, as shown in Fig. 28, a screen motion vector Amv1 is detected between the image of the frame of interest, and the image of a temporally previous frame as compared to the frame of interest, and a screen motion vector Amv2 is detected between the image of the frame of interest, and the image of a temporally subsequent frame as compared to the frame of interest. Now, let us say that the horizontal axis of Fig. 28 is taken as time, where time elapses from the left to the right direction in the drawing.

The screen motion vectors Amv1 and Amv2 detected by the screen motion detecting unit 1043 are supplied to the tracking area detecting unit 1044.

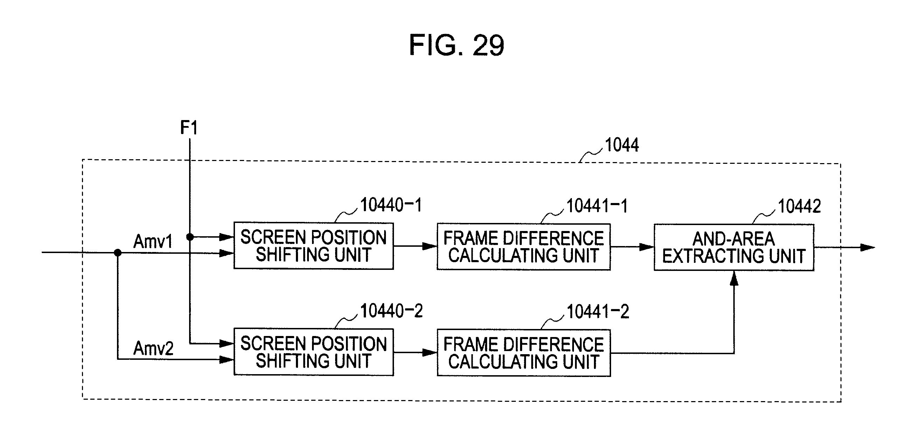

Fig. 29 is a block diagram illustrating a detailed configuration example of the tracking area extracting unit 1044.

The tracking area detecting unit 1044 detects the area where motion detection should be performed at a later-described intra-area block position detecting unit 1045, based on the screen motion vector detected at the screen motion detecting unit 1043.

Screen position shifting units 10440-1 and 10440-2 shift the screen position of the frame of interest with the image F1, and the screen position of a temporally subsequent frame as compared to the frame of interest, respectively.

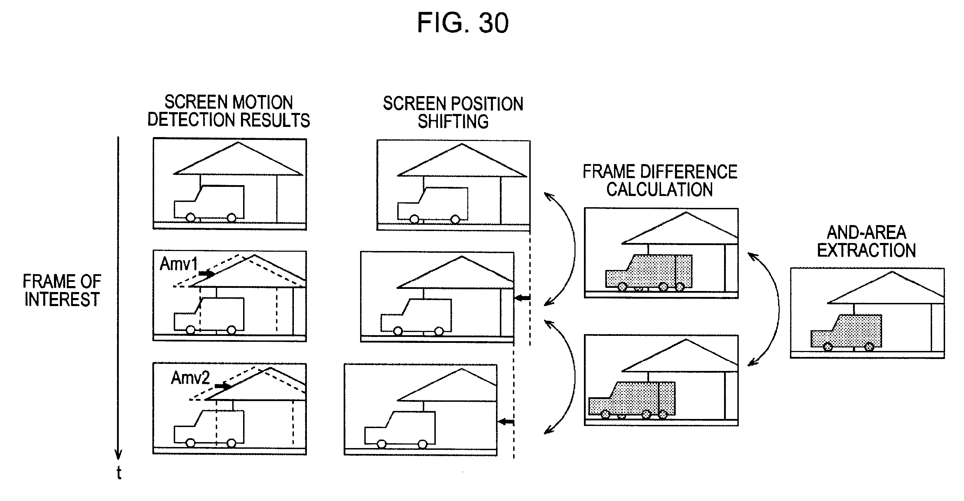

For example, as shown in Fig. 30, the screen position shifting units 10440-1 and 10440-2 shift the screen position in the opposite direction of the motion vector as to the screen motion vectors Amv1 and Amv2. Let us say that the vertical axis of Fig. 30 is taken as time, where time elapses from the top to bottom in the drawing, and the generally center of the drawing corresponds to the temporal position of the frame of interest.

The screen position is thus shifted, thereby generating an image of which the phase shift due to screen motion (e.g., motion of the camera) is matched. Specifically, with the temporally previous image and the temporally subsequent image, the screen position is shifted such that the positions of both background images are generally matched.

A frame difference calculating unit 10441-1 calculates difference between the image of the frame of interest where the screen position has been shifted, and the image of a temporally previous frame as compared to the frame of interest. Similarly, a frame difference calculating unit 10441-2 calculates difference between the image of the frame of interest where the screen position has been shifted, and the image of a temporally subsequent frame as compared to the frame of interest where the screen position has been shifted. Calculation of difference is performed, for example, by calculating a difference absolute value, and extracting a pixel of which the difference absolute value is greater than a predetermined threshold.

According to the processing of the frame difference calculating units 10441-1 and 10441-2, the information of an image described as "frame difference calculation" in Fig. 30 is obtained. The portions shown by hatching in the drawing correspond to the difference calculated at the frame difference calculating unit 10441-1 and the difference calculated at the frame difference calculating unit 10441-2, respectively.

With the two images where the frame difference has been obtained by the frame difference calculating units 10441-1 and 10441-2, an AND-area extracting unit 10442 extracts commonly extracted pixels (AND area). Thus, the information of the image described as "AND-area extraction" in Fig. 30 is obtained. The portion indicated by hatching in the drawing corresponds to the pixels extracted as an AND area. In this case, the image of the shape of an automobile which is an object is extracted as an AND area.

According to such an arrangement, even if an object moves in a direction different from the motion of the entire screen, the area of the object can be extracted accurately. Also, the tracking area extracting unit 1044 processes the image F1 which has been decimated in the temporal direction, and accordingly, for example, even if the motion of an object is small during one frame, difference can be obtained between distant frames, and the area of the object can be readily extracted.

Now, description will return to Fig. 26, where the intra-area block position detecting unit 1045 performs motion detection restricted to a tracking area based on the input tracking point candidate (the coordinates of the input tracking point candidate is indicated here with (x, y)), and the detection result of the tracking area detecting unit 1044.

The configuration of the intra-area block position detecting unit 1045 is the same as the configuration of the above-mentioned block position detecting unit 1041 described with reference to Fig. 5, but the processing of the intra-area block position detecting unit 1045 is restricted depending on whether or not a tracking area is included in tracking point candidates and search range.

In a case where the coordinates (x, y) of the tracking point are included in the AND area detected by the tracking area detecting unit 1044, only the blocks included in the tracking area (AND area detected by the tracking area detecting unit 1044) are taken as blocks to be matched in the search range.

Specifically, the intra-area block position detecting unit 1045 sets the block BL made up of a predetermined number of pixels with the tracking point as the center, of the image of the temporally previous frame, and sets the search range with the same position as the block BL of the previous frame as the center, of the temporally subsequent frame. In a case where the coordinates (x, y) of the tracking point is included in the AND area detected by the tracking area detecting unit 1044, this search range is restricted within the tracking area.

Subsequently, the intra-area block position detecting unit 1045 supplies coordinates (tvx, tvy) determining the pixel position serving as the center of the candidates block of which the sum of absolute differences is the smallest, to the intra-area motion integrating unit 1046.

In a case where all the input tracking point candidates are not included in the tracking area, and also there is no block included in the tracking area within each of the search range set as to all the tracking point candidates, the same block position detection as that in the usual case described with reference to Fig. 5 is performed. In this case, a signal or the like representing a processing request is sent from the intra-area block position detecting unit 1045 to the block position detecting unit 1041, and the block position is detected by the block position detecting unit 1041. Subsequently, coordinates (mvx, mvy) determining the pixel position serving as the center of the detected block is supplied to the intra-area motion integrating unit 1046.

Note that as for determination regarding whether or not there is a block included in the tracking area within each of the search ranges set as to all the tracking point candidates, for example, determination may be made as "within the area" in a case where all of the pixels of a block are included in the tracking area, or determination may be made as "within the area" in a case where the pixels of 80% of a block are included in the tracking area.

The intra-area motion integrating unit 1046 determines the eventual block position. In a case where the coordinates (tvx, tvy) of the center of the block position is supplied from the intra-area block position detecting unit 1045, the intra-area motion integrating unit 1046 sets, for example, the mode value of the coordinates (tvx, tvy) supplied from the intra-area block position detecting unit 1045 as the eventual block position. Also, in a case where the coordinates (mvx, mvy) of the center of the block position is input from the block position detecting unit 1041, the intra-area motion integrating unit 1046 performs the calculation shown in the above-mentioned Expression (18) or (19) to determine the coordinates.

The first hierarchical motion detecting unit 104 is configured such as shown in Fig. 26, thereby extracting a moving object, and enabling tracking point detection to be performed only within the area of pixels making up the extracted object. As a result thereof, tracking point detection processing can be performed effectively.

Incidentally, with the configuration of the image processing device 300 in Fig. 14, an arrangement may be made wherein input from the candidate point extracting unit 102 to the hierarchizing unit 103 is added, and the configuration of the hierarchizing unit 103 differs from the configuration described above with reference to Fig. 3.

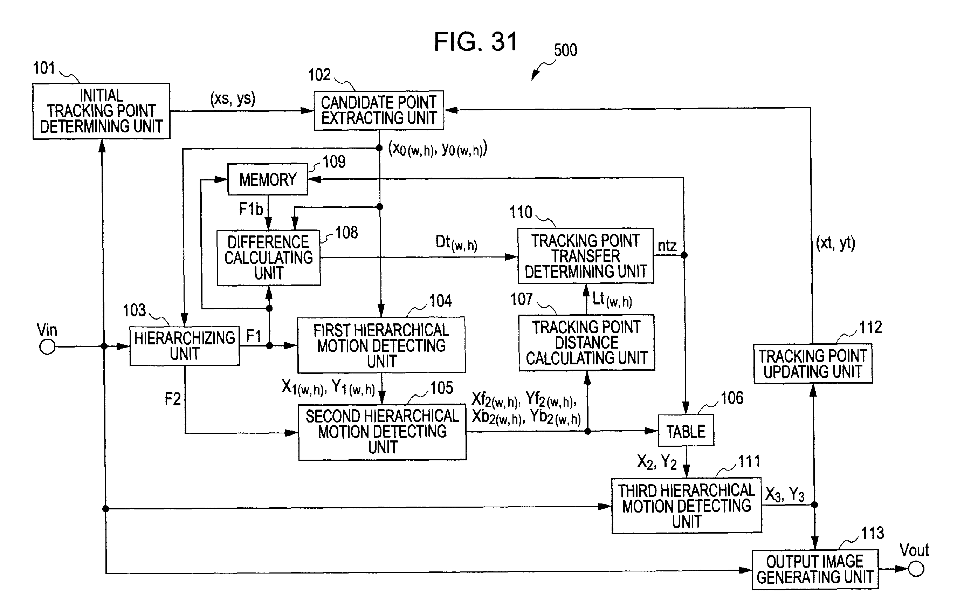

Fig. 31 is a block diagram illustrating yet another configuration example of the image processing device according to an embodiment of the present invention. With the image processing device 500 shown in Fig. 31, unlike in the case of the image processing device 300 in Fig. 14, the tracking point candidates $(x_{0(w, h)}, y_{0(w, h)})$ output from the candidate point extracting unit 102 are also supplied to the hierarchizing unit 103. Also, the configuration of the hierarchizing unit 103 of the image processing device 500 shown in Fig. 31 differs from the configuration described above with reference to Fig. 3. The configurations of portions other than that in Fig. 31 are the same configurations as the configurations described above with reference to Fig. 14.

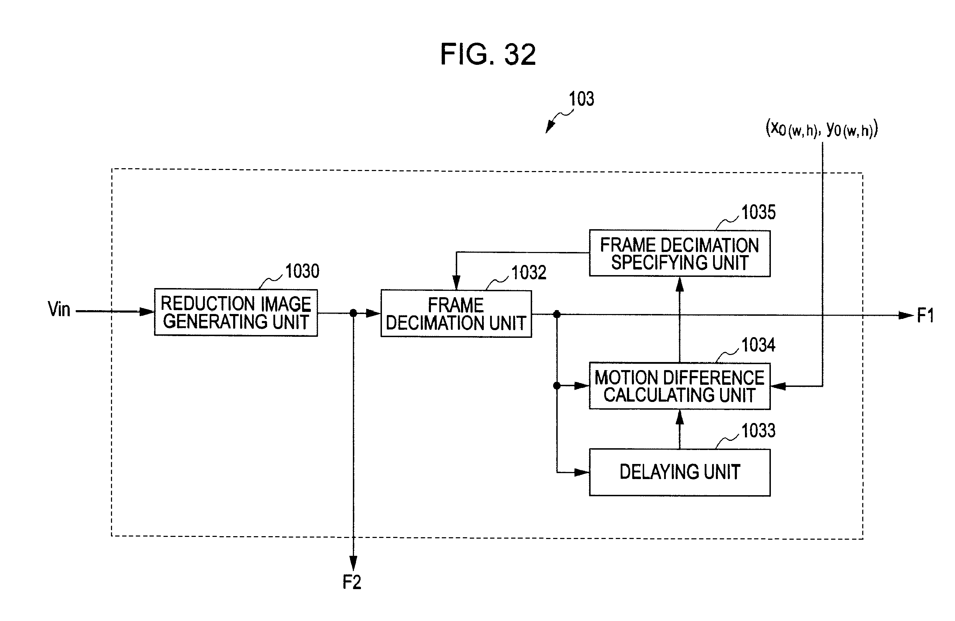

Fig. 32 is a block diagram illustrating a detailed configuration example of the hierarchizing unit 103 in Fig. 31. With the configuration of the hierarchizing unit 103 in Fig. 32, when generating the image F1, the interval of decimated frames can be made variable.

The configuration of the reduction image generating unit 1030 in Fig. 32 is the same as the case described above with reference to Fig. 3, so detailed description will be omitted.

The frame decimation unit 1032 in Fig. 32 first thins out the image F2 with a predetermined frame interval (e.g., five frames) in the temporal direction to generate an image F1, and supplies this to a motion difference calculating unit 1034, and delaying unit 1033.

The motion difference calculating unit 1034 detects the motion of a tracking point in the same way as with the block position detecting unit 1041 in Fig. 5, but outputs not the coordinates representing the position of a block such as the block position detecting unit 1041 but the value of the sum of absolute differences of a block. Specifically, the block position detecting unit 1041 in Fig. 5 outputs the coordinates (mvx, mvy) determining the pixel position serving as the center of the candidate block of which the sum of absolute differences is the smallest, but the motion difference calculating unit 1034 outputs the value of the sum of absolute differences of the candidate block corresponding to the coordinates (mvx, mvy).

The motion difference calculating unit 1034 calculates the value of sum of absolute differences regarding all the tracking point candidates $(x_{0(w, h)}, y_{0(w, h)})$ output from the candidate point extracting unit 102, and supplies each of the sum of absolute differences values to a frame decimation specifying unit 1035.

The frame decimation specifying unit 1035 specifies a decimation frame interval corresponding to the value of the sum of absolute differences supplied from the motion difference calculating unit 1034.

In a case where the sum of absolute differences values at all the tracking candidate points are greater than a predetermined threshold, the frame decimation specifying unit 1035 reduces the frame decimation interval by one frame.

In a case where the sum of absolute differences values at all the tracking candidate points are greater than a predetermined threshold, it can be conceived that there is no place having a correlation between decimated frames around the tracking point, and in this case, we can say that the frames are decimated excessively. Therefore, the frame decimation specifying unit 1035 reduces the frame decimation interval by one frame.

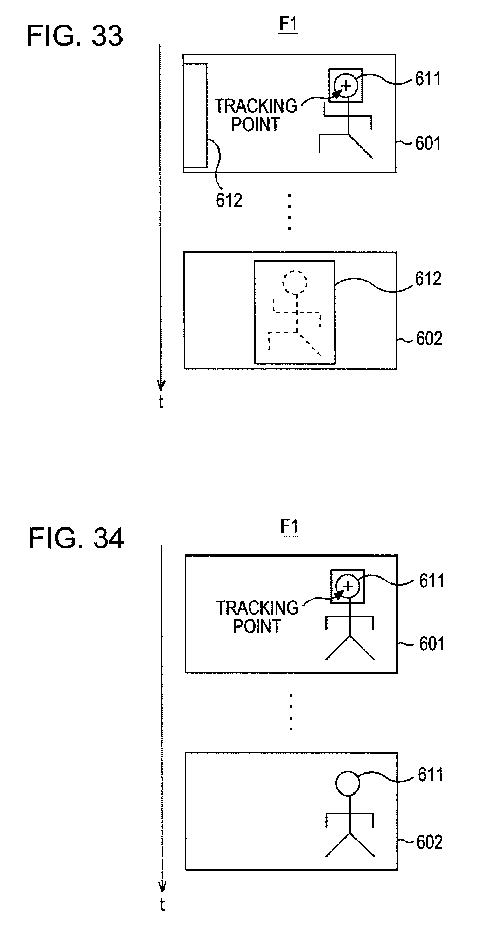

For example, let us consider the case shown in Fig. 33. Fig. 33 is a diagram illustrating an example of the image F1 generated by decimation out the image F2 with a predetermined frame interval (e.g., five frames) in the temporal direction. In Fig. 33, let us say that the vertical axis in the drawing is taken as time, where time elapses from the top to bottom in the drawing. Also, in Fig. 33, a person's head 611 is taken as an object to be tracked, and a tracking point indicated with a cross symbol is set in the person's head 611. Also, in Fig. 33, let us say that five frames have been decimated between frames 601 and 602.

With the frame 601 in Fig. 33, another object 612 is displayed along with the person's head 611 which is an object to be tracked. With the frame 602, the person has moved in the left direction in the drawing, and accordingly, the person's head 611 which is the object to be tracked hides behind the other object 612. Here, the image of the person hiding behind the object 612 is illustrated with a dotted line in the drawing.

In the case such as shown in Fig. 33, unless the frame decimation interval is reduced, the person's head 611 fails to be tracked.

On the other hand, in a case where the sum of absolute differences values at all the tracking candidate points are smaller than another predetermined threshold, the frame decimation specifying unit 1035 increments the frame decimation interval by one frame. In a case where the sum of absolute differences values at all the tracking candidate points are smaller than a predetermined threshold, it can be conceived that there is almost no motion between the decimated frames, in this case, we can say that the frames are decimated insufficiently. Therefore, the frame decimation specifying unit 1035 increments the frame decimation interval by one frame.

For example, let us consider the case shown in Fig. 34. Fig. 34 is a diagram illustrating another example of the image F1 generated by decimation out the image F2 with a predetermined frame interval (e.g., five frames) in the temporal direction. In Fig. 34, let us say that the vertical axis in the drawing is taken as time, where time elapses from the top to bottom in the drawing, similar to Fig. 33. Also, in Fig. 34, a person's head 611 is also taken as an object to be tracked, and a tracking point indicated with a cross symbol in the drawing is set in the person's head 611. Also, in Fig. 34, let us say that five frames have been decimated between frames 601 and 602.

With the frames 601 and 602 in Fig. 34, the person's head 611 which is an object to be tracked has almost no motion.

In the case such as shown in Fig. 34, even if the frame decimation interval is incremented, the person's head 611 can be tracked. Also, in the case such as shown in Fig. 34, the frame decimation interval is incremented, thereby eliminating useless motion detection.

The hierarchizing unit 103 in Fig. 32 repeats increment/decrement of the frame decimation interval such as described above until the sum of absolute differences values at all the tracking candidate points become a suitable value. Subsequently, in a case where the sum of absolute differences values at all the tracking candidate points become a suitable value, i.e., in a case where all the sum of absolute differences values are equal to or smaller than a predetermined threshold, and also all the sum of absolute differences values are equal to or greater than another predetermined threshold, the frame decimation interval is determined, and the image F1 is output from the frame decimation unit 1032.

Thus, according to the image processing device 500 shown in Fig. 31, the optimal frame decimation interval can be set at the time of tracking an object. Accordingly, with the image processing device 500 shown in Fig. 31, an object can be tracked accurately in an effective manner.

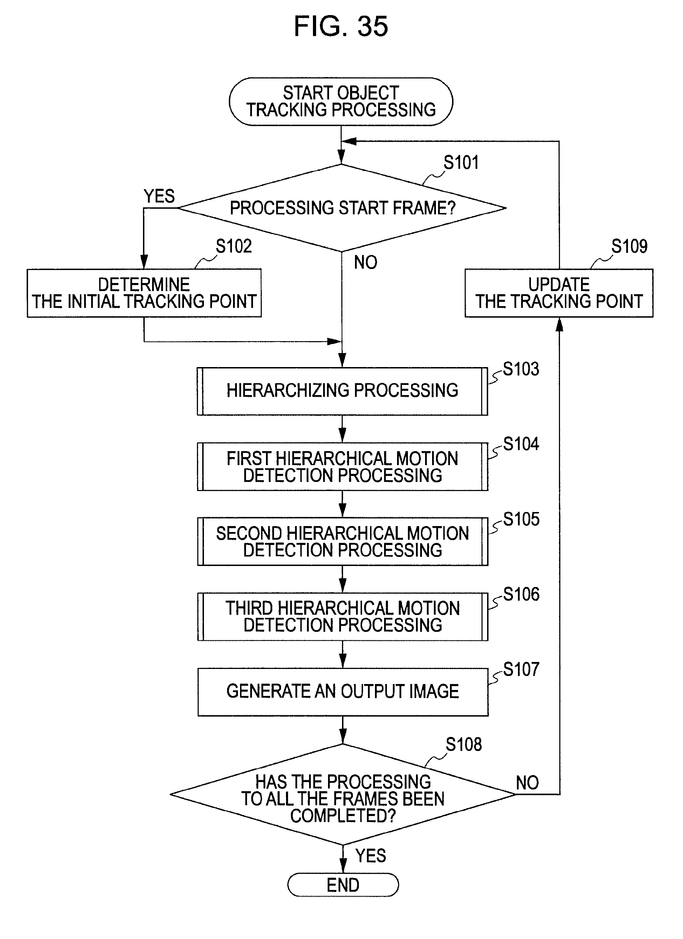

Next, the object tracking processing by the image processing device 100 in Fig. 1 will be described with reference to the flowchart in Fig. 35.

In step S101, the image processing device 100 determines whether or not the frame of the image of the input image signal Vin to be input now is the processing start frame of the object tracking processing, and in a case where determination is made that the input frame is the processing start frame, the processing proceeds to step S102.

In step S102, the tracking point specifying unit 1011 determines the initial tracking point. At this time, for example, in response to the user's operations through a pointing device such as a mouse or the like, one point (e.g., one pixel) within the image displayed on the image signal presenting unit 1010 is determined as the initial tracking point.

After the processing in step S102, or in step S101, in a case where determination is made that the frame of the image of the input image signal Vin to be input now is not the processing start frame of the object tracking processing, the processing proceeds to step S103.

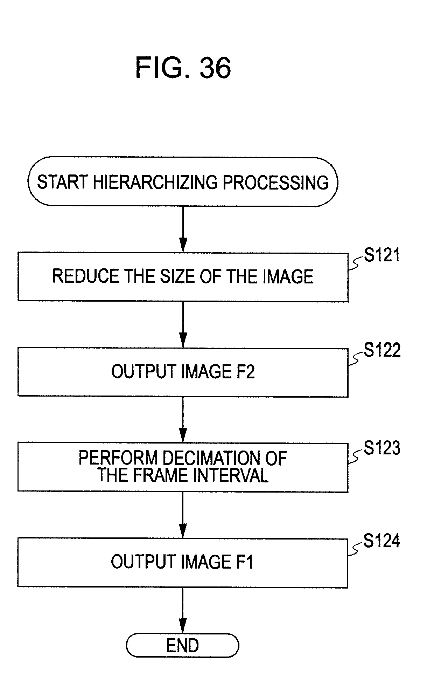

In step S103, the hierarchizing unit 103 executes hierarchizing processing. Now, a detailed example of the hierarchizing processing in step S103 in Fig. 35 will be described with reference to the flowchart in Fig. 36.

In step S121, the reduction image generating unit 1030 employs, regarding the image of the input image signal, for example, the average value of four pixels in total with two pixels in the x direction and two pixels in the y direction to reduce the image of an input image signal to one fourth in size.

In step S122, the reduction image generating unit 1030 outputs the image F2. At this time, for example, as shown in Fig. 4, the image F2 is output, which has the same frame rate as the image of the input image signal with the number of pixels being compressed, and the size being reduced to one fourth.

In step S123, the frame decimation unit 1031 subjects the image F2 output at the processing in step S122 to further frame decimation processing.

In step S124, the frame decimation unit 1031 outputs the image F1. At this time, for example, as shown in Fig. 4, the image F1 is output with the size of the input image signal being reduced to one fourth, and further the frame interval being decimated to one fifth. Thus, the hierarchizing processing is performed.

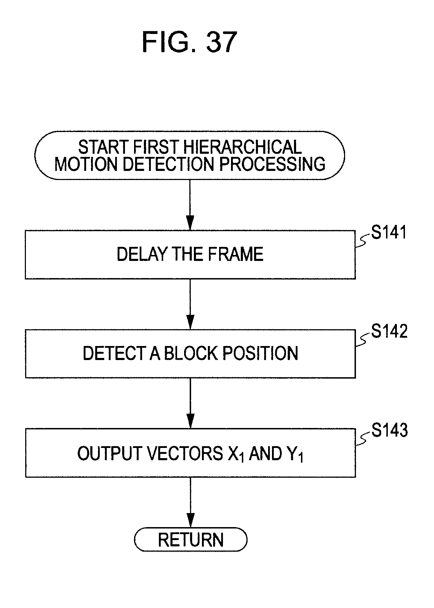

Now, description will return to Fig. 35, after the processing in step S103, the processing proceeds to step S104, where the first hierarchical motion detecting unit 104 executes first hierarchical motion detection processing. Now, a detailed example of the first hierarchical motion detection processing in step S104 in Fig. 35 will be described with reference to the flowchart in Fig. 37.

In step S141, the delaying unit 1040 delays a frame of the input image F1, for example, by holding this for the time corresponding to one frame, and supplies the delayed frame to the block position detecting unit 1041 at timing wherein the next frame of the image F1 is input to the block position detecting unit 1041.

In step S142, the block position detecting unit 1041 determines a candidate block of which the sum of absolute differences calculated by the above-mentioned Expression (3) is the smallest, thereby detecting the block position. At this time, for example, as described above with reference to Figs. 6A and 6B, of the image of the delayed frame (temporally previous frame), the block BL made up of a predetermined number of pixels with the tracking point as the center is set. Subsequently, with the temporally subsequent frame, the search range with the same position as the block BL of the previous frame as the center is set, and the calculation of sum of absolute differences is performed between the block BL of the previous frame, and a candidate block within the search range of the subsequent frame.

In step S143, the motion integrating unit 1042 outputs vectors $X_1$ and $Y_1$. At this time, the coordinates (mvx, mvy) determining the pixel position supplied from the block position detecting unit 1041, and the coordinates $(x_0, y_0)$ supplied from the tracking point updating unit 115 are correlated, and as shown in Expressions (4) and (5), for example, the vectors $X_1$ and $Y_1$ are generated and output.

Note that, as described above with reference to Figs. 15A and 16A, in a case where the motion detection pixel range is set, the motion integrating unit 1042 integrates the position of the block input from the block position detecting unit 1041 by the calculations of the above-mentioned Expressions (18) and (19). Subsequently, the pixel position serving as the center of the integrated block, and the coordinates $(x_0, y_0)$ supplied from the tracking point updating unit 115 are correlated, and as shown in Expressions (4) and (5), for example, the vectors $X_1$ and $Y_1$ are generated and output. Thus, the first hierarchical motion detection processing is performed.

Now, description will return to Fig. 35, after the processing in step S104, the processing proceeds to step S105, where the second hierarchical motion detecting unit 105 executes second hierarchical motion detection processing. Now, a detailed example of the second hierarchical motion detection processing in step S105 in Fig. 35 will be described with reference to the flowchart in Fig. 37.

In step S161, the delaying unit 1050 delays the image F2 output at the processing in step S122 by one frame worth.

In step S162, the forward-direction motion detecting unit 1051 performs forward-direction motion detection, for example, as described above with reference to Fig. 9. At this time, for example, based on the tracking point of the leftmost side frame in Fig. 9, the tracking point of the second frame from the left in the drawing, the tracking point of the third frame from the left, and the tracking point of the fourth frame from the left are detected.

In step S163, the motion integrating unit 1052 generates and outputs the vectors $Xf_2$ and $Yf_2$ shown in Expressions (6) and (7), as described above, based on the coordinates supplied from the forward-direction motion detecting unit 1051.

In step S164, the frame exchanging unit 1053 resorts the respective frames of the image F2 in the opposite direction to supply these to the opposite-direction motion detecting unit 1054.

In step S165, for example, as described above with reference to Fig. 9, the opposite-direction motion detecting unit 1054 performs opposite-direction motion detection. At this time, for example, based on the tracking point of the rightmost side frame in Fig. 9, the tracking point of the second frame from the right in the drawing, the tracking point of the third frame from the right, and the tracking point of the fourth frame from the right are detected.

In step S166, the motion integrating unit 1055 generates the vectors $Xb_2$ and $Yb_2$ shown in Expressions (8) and (9), as described above, based on the coordinates supplied from the opposite-direction motion detecting unit 1054.

In step S167, based on the vectors each supplied from the motion integrating units 1052 and 1055, the output integrating unit 1056 outputs a combination of these vector pairs $[Xf_2, Yf_2, Xb_2, Yb_2]$. Thus, the second hierarchical motion detection processing is performed.

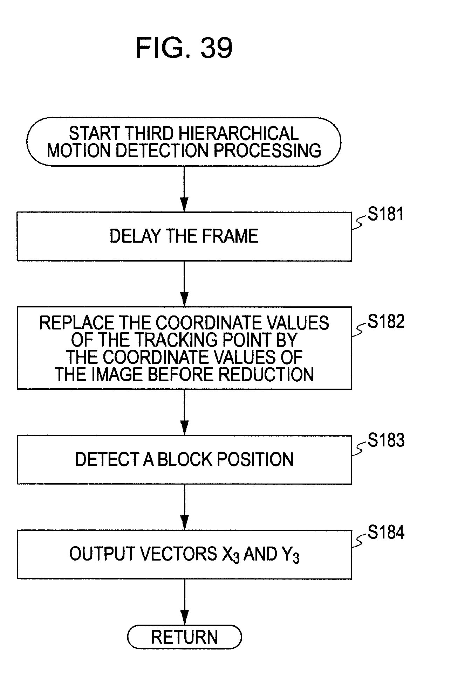

Now, description will return to Fig. 35, after the processing in step S105, in step S106 the third hierarchical motion detecting unit 111 executes third hierarchical motion detection processing. Now, a detailed example of the third hierarchical motion detection processing in step S106 in Fig. 35 will be described with reference to the flowchart in Fig. 39.

In step S181, the delaying unit 1110 delays a frame of the image of the input image signal.

In step S182, the block position detecting unit 1111 replaces the coordinate value of the tracking point with the coordinate value of the image before reduction. At this time, based on the information output in the processing in step S167, the block position detecting unit 1111 replaces the pixel position determined with the vector pair $[X_2, Y_2]$ supplied from the block position determining unit 114 with the image of the input image signal Vin by calculations of the above-mentioned Expressions (14) and (15).

In step S183, the block position detecting unit 1111 detects the block position. At this time, for example, with the temporally subsequent frame, the search range is set with the same position as the block BL of the previous frame as the center. Subsequently, the block position detecting unit 1111 calculates sum of absolute differences between the block BL of the previous frame and a candidate block within the search range of the subsequent frame to supply the coordinates (mvx, mvy) determining the pixel position serving the center of the candidate block of which the sum of absolute differences is the smallest to the motion integrating unit 1112.

In step S184, the motion integrating unit 1112 outputs, for example, the coordinates determining the pixel position of the tracking point of each frame of the image of the input image signal Vin in Fig. 12 as vectors $X_3$ and $Y_3$. At this time, for example, the vectors $X_3$ and $Y_3$ represented with the above-mentioned Expressions (16) and (17) are output.

Now, description will return to Fig. 35, after the processing in step S106, the processing proceeds to step S107. In step S107, the output image generating unit 113 determines the tracking point of each frame to generate an output image based on the vectors $X_3$ and $Y_3$ output in the processing in step S184. At this time, for example, an output image such as described above with reference to Fig. 19 is generated.

In step S108, determination is made whether or not the processing regarding all the frames has been completed, and in a case where the processing has not been completed yet, the processing proceeds to step S109, where the tracking point updating unit 115 updates the tracking point based on the vectors $X_3$ and $Y_3$ output by the processing in step S184. Subsequently, the processing returns to step S101, where the processing in step S101 and on is executed repeatedly. Thus, until determination is made in step S108 that the processing has been completed regarding all of the frames, the processing in steps S101 through S109 is executed.

Thus, the object tracking processing is executed. With the present invention, the tracking point at a temporally distant frame (e.g., frame five frames after) is determined from the frame of the image of the provided tracking point. Subsequently, the tracking point of a frame positioned between temporally distant two frames is determined, whereby object tracking can be performed in a higher reliable manner.

Note that in a case where an image processing device is configured such as shown in Fig. 13, the processing in step S106 and the processing in step S121 are not executed.

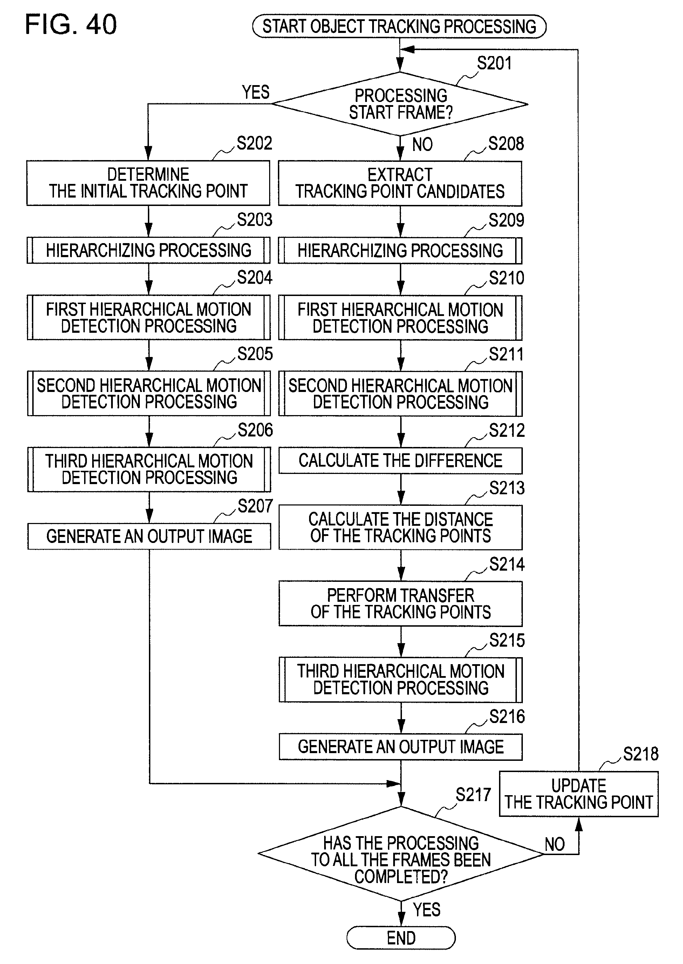

Next, an example of the object tracking processing by the image processing device 300 in Fig. 14 will be described with reference to the flowchart in Fig. 40.

In step S201, the image processing device 300 determines whether or not the frame of the image of the input image signal Vin to be input now is the processing start frame of the object tracking processing, and in a case where determination is made that the input frame is the processing start frame, the processing proceeds to step S202.

The processing in steps S202 through S207 is the same processing in steps S102 through S107 in Fig. 35, so detailed description thereof will be omitted.

After the processing in step S207, the processing proceeds to step S217. In step S217, determination is made whether or not the processing has been completed regarding all of the frames, and in this case, the processing has not been completed regarding all of the frames, so the processing proceeds to step S218.

In step S218, the tracking point updating unit 112 updates the tracking point based on the vectors $X_3$ and $Y_3$ output by the processing in step S206, and the processing returns to step S201.

In this case, determination is made in step S201 that the frame of the image of the input image signal Vin is not the processing start frame of the object tracking processing, so the processing proceeds to step S208.

In step S208, the candidate point extracting unit 102 extracts a tracking point candidate. At this time, as described above, for example, a range of $\pm2$ is employed in the x direction and y direction from the tracking point candidate center (xsm, ysm) to extract 25 tracking point candidates $(x_{0(w, h)}, y_{0(w, h)})$.

The processing in step S209 is the same processing as step S103 in Fig. 35, so detailed description thereof will be omitted.

In step S210, the first hierarchical motion detecting unit 104 executes first hierarchical motion detection processing. The first hierarchical motion detection processing in step S210 is the same as the processing described above with reference to Fig. 37, so detailed description thereof will be omitted, but in the case of the processing in step S210, the same first hierarchical motion detection processing as the processing described above with reference to Fig. 37 is executed regarding each of the tracking point candidates extracted in step S208.

Accordingly, as a result of the processing in step S210, as described above, the vectors $X_{1(w, h)}$ and $Y_{1(w, h)}$

representing the tracking point group detected at the first hierarchical motion detecting unit 104 are output.

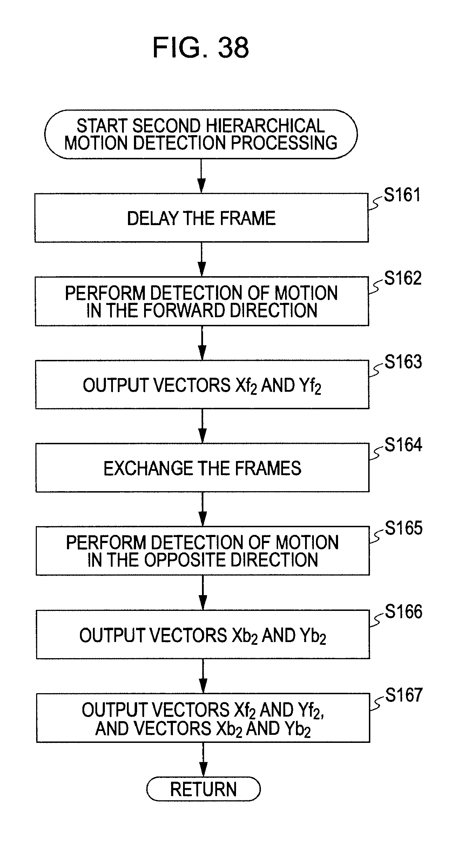

In step S211, the second motion detecting unit 105 executes second hierarchical motion detection processing. The second hierarchical motion detection processing in step S211 is the same as the processing described above with reference to Fig. 38, so detailed description thereof will be omitted, but in the case of the processing in step S211, the same second hierarchical motion detection processing as the processing described above with reference to Fig. 38 is executed regarding each of the tracking point candidates extracted in step S208.

Accordingly, as a result of the processing in step S211, as described above, the vectors $Xf_{2(w, h)}$ and $Yf_{2(w, h)}$, and the vectors $Xb_{2(w, h)}$ and $Yb_{2(w, h)}$ which are outputs from the second hierarchical motion detecting unit 105 are output.

Also, as described above, with the table 106, a weighting calculation is performed as to the coordinates of each frame determined with the vectors $Xf_{2(w, n)}$ and $Yf_{2(w, h)}$ and the vectors $Xb_{2(w, h)}$ and $Yb_{2(w, h)}$ output at the processing in step S211. Subsequently, a table is generated wherein each factor of the vectors $Xf_{2(w, h)}$ and $Yf_{2(w, h)}$, and the vectors $Xb_{2(w, h)}$ and $Yb_{2(w, h)}$ is correlated with each factor of the vectors $X_2$ and $Y_2$.

As a result thereof, the table 106 holds the table such as shown in Fig. 10 regarding each of the tracking points corresponding to the vectors $Xf_{2(w, h)}$ and $Yf_{2(w, h)}$, and the vectors $Xb_{2(w, h)}$ and $Yb_{2(w, h)}$ supplied from the second hierarchical motion detecting unit 105, and for example, 25 tracking point groups in total are generated and held.

In step S212, the difference calculating unit 108 calculates difference between the frame from which tracking is started from now on (referred to as "current frame") of the image F1 supplied from the hierarchizing unit 103 at the processing in step S209, and the frame F1b which is the last tracking start frame held in the memory 109.

At this time, as described above, for example, the sum of absolute differences of pixel values is calculated between the block BL in Fig. 17A, and the block BL in Fig. 17B. Specifically, the 25 kinds of sum of absolute differences are calculated between the (one) block BL of the frame F1b in Fig. 17A, and the (25) blocks BL of the current frame in Fig. 17B, and as a result of the processing in step S212, the value $Dt_{(w, h)}$ of the sum of absolute differences is output.

In step S213, the tracking point distance calculating unit 107 calculates the distance between the tracking point detected with forward-direction motion detection of the image F2 generated at the hierarchizing unit 103, and the tracking point detected with opposite-direction motion detection, based on the tracking point group supplied with the vectors $Xf_2$, $Yf_2$, $Xb_2$, and $Yb_2$ of the tracking point group supplied from the second hierarchical motion detecting unit 105 by the processing in step S211.

At this time, as described above, for example, the distance between the tracking point detected with the forward-direction motion detection and the tracking point detected with the opposite-direction motion detection, at the intermediate position on the time axis is calculated, of the six frames of the image F2 shown in Fig. 9. Subsequently, the distance Lt is calculated regarding each of the tracking points determined with the vectors $Xf_{2(w, h)}$ and $Yf_{2(w, h)}$, and the vectors $Xb_{2(w, h)}$ and $Yb_{2(w, h)}$ output from the second hierarchical motion detecting unit 105 by the processing in step S211.

As a result thereof, for example, 25 distance values in total represented as the distance $Lt_{(w, h)}$ calculated by the above-mentioned Expressions (36) through (40), or Expression (41) are generated and output as the processing results in step S213.

In step S214, the tracking point transfer determining unit 110 performs transfer of tracking points based on the distance value $Lt_{(w, h)}$ output by the processing in step S213, and the value $Dt_{(w, h)}$ of the sum of absolute differences output by the processing in step S212.

At this time, as described above, the tracking point candidates satisfying Expressions (42) and (43) are selected, the calculations shown in Expressions (44) through (49) are preformed, thereby performing transfer of tracking points. Subsequently, the tracking point ntz after transfer is supplied to the table 106 and memory 109.

Subsequently, the vectors $X_2$ and $Y_2$ corresponding to the tracking point group applicable to the tracking point ntz transferred by the processing in step S214 are read out from the table 106, and are supplied to the third hierarchical motion detecting unit 111.

In step S215, the third hierarchical motion detecting unit 111 executes third hierarchical motion detection processing. The third hierarchical motion detection processing in step S215 is the same as the processing described above with reference to Fig. 39, so detailed description thereof will be omitted.

In step S216, based on the tracking point determined with the vectors $X_3$ and $Y_3$ supplied from the third hierarchical motion detecting unit 111 by the processing in step S215, the output image generating unit 113 generates an image where the information of the tracking point is displayed on the input image, and outputs the output image signal Vout of the generated image. At this time, for example, the output image such as described above with reference to Fig. 19 is generated.

After the processing in step S216, the determination in step S217 is performed, and in a case where determination is made that the processing has not been completed yet regarding all of the frames, the processing proceeds to step S218, where the tracking point is updated, and the processing returns to step S201.

Thus, until determination is made that the processing has been completed regarding all of the frames, the processing in step S201, and steps S208 through S217 is executed.

Thus, the object tracking processing is performed. With the processing in Fig. 40, multiple tracking point candidates are extracted, each of multiple tracking point candidates is subjected to the first hierarchical motion detection processing, and the second hierarchical motion detection processing, and based on the processing results of these, one pixel is determined eventually as a tracking point. Accordingly, a more accurate tracking point can be obtained as compared to the case of the object tracking processing described above with reference to Fig. 35.

Note that in a case where an arrangement is made wherein the third hierarchical motion detecting unit 111 is not provided in the image processing device 300, the processing in step S121 and processing in step S206 and S215 of the hierarchizing processing in step S203 or S209 are not executed.

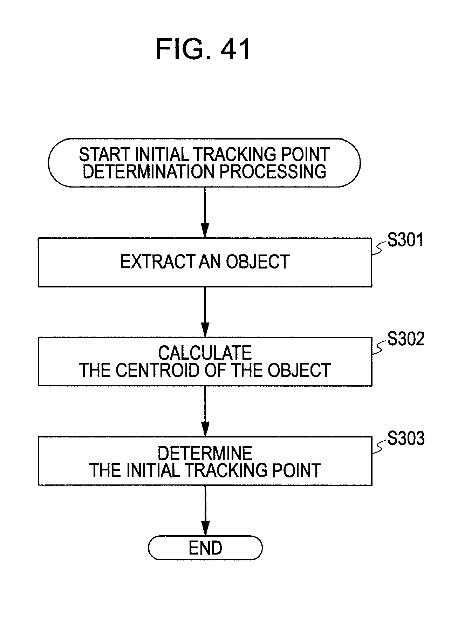

Next, description will be made regarding the initial tracking point determination processing in the case of the initial tracking point determining unit 101 being configured such as shown in Fig. 22, with reference to the flowchart in Fig. 41. This processing is, for example, processing to be executed instead of the processing in step S102 in Fig. 35 or the processing in step S202 in Fig. 40.

With the initial tracking point determining unit 101 in Fig. 22, the input image signal Vin is input to the object extracting unit 1013. The object extracting unit 1013 is configured to extract an object from the difference between the input image signal Vin and the template image recorded in the template holding unit 1012.

In step S301, the object extracting unit 1013 extracts an object. At this time, for example, as described above with reference to Figs. 23 through 25, an area different from a template image is extracted as an object.

In step S302, the centroid calculating unit 1014 calculates centroid. At this time, the centroid of the area extracted by the processing in step S301 is calculated by the above-mentioned Expressions (50) and (51).

In step S303, the coordinates of the centroid calculated by the processing in step S302 are determined as the initial tracking point, and are output from the initial tracking point determining unit 101.

The initial tracking point is thus determined. According to such an arrangement, the initial tracking point can be determined automatically.

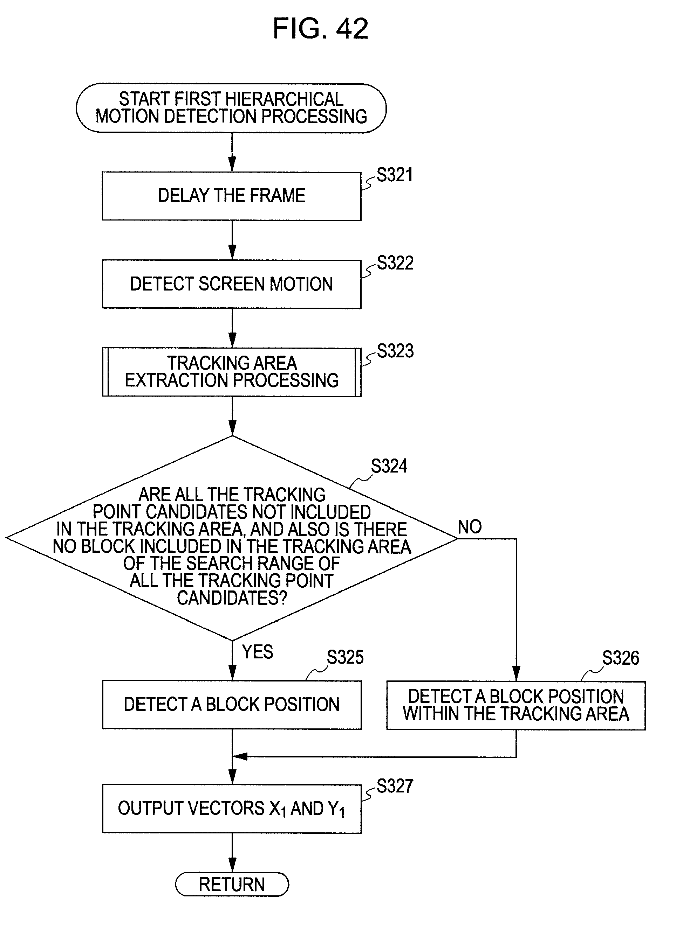

Next, description will be made regarding a detailed example of the first hierarchical motion detection processing executed corresponding to the initial tracking point determination processing in Fig. 41, with reference to the flowchart in Fig. 42. This processing is executed by the first hierarchical motion detecting unit 104 in Fig. 26, and is processing executed instead of the processing in Fig. 37, for example, as the processing in step S104 in Fig. 35, or processing in step S204 or processing in step S210 in Fig. 40.

In step S321, the delaying unit 1040 delays the image F1 by two frames.

In step S322, the screen motion detecting unit 1043 detects the screen motion of the image F1. At this time, for example, as shown in Fig. 27, a motion vector is calculated by block matching for each block to create the histogram of the motion vector thereof, and the motion vector with the largest frequency is detected as the motion vector of the entire screen. As a result thereof, as shown in Fig. 28, a screen motion vector Amv1 is detected between the image of the frame of interest, and the image of the temporally previous frame as compared to the frame of interest, and a screen motion vector Amv2 is detected between the image of the frame of interest, and the image of the temporally subsequent frame as compared to the frame of interest.

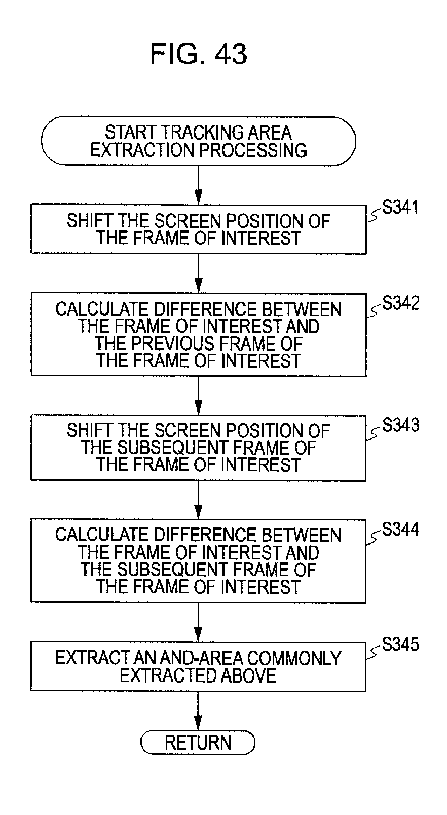

In step S323, the tracking area detecting unit 1044 executes tracking area extraction processing. Now, a detailed example of the tracking area extraction processing in step S323 in Fig. 42 will be described with reference to the flowchart in Fig. 43.

In step S341, the screen position shifting unit 10440-1 shifts the screen position of the frame of interest in the image F1.

In step S342, the frame difference calculating unit 10441-1 calculates difference between the image of the frame of interest of which the screen position has been shifted in step S341, and the image of the temporally previous frame as compared to the frame of interest.

In step S343, the screen position shifting unit 10440-2 shifts the screen position of the temporally subsequent frame as compared to the frame of interest in the image F1.

In step S344, the frame difference calculating unit 10441-2 calculates difference between the image of the frame of interest of which the screen position has been shifted in step S341, and the image of the temporally subsequent frame as compared to the frame of interest of which the screen position has been shifted in step S343.

Thus, for example, as shown in Fig. 30, the screen position is shifted based on the screen motion vector Amv1 and screen motion vector Amv2, and consequently, the information of the image described as "frame difference calculation" in Fig. 30 is obtained.

In step S345, of the two images wherein the frame difference has been obtained in the processing in step S343 and the processing in step S344, the AND-area extracting unit 10442 extracts commonly extracted pixels (AND area). Thus, for example, the information of the image described as "AND area extraction" in Fig. 30 is obtained. The tracking area (AND area) is thus extracted.

Now, description will return to Fig. 42, after the processing in step S323, the processing proceeds to step S324.

In step S324, the intra-area block position detecting unit 1045 determines whether or not all the tracking point candidates are not included in the tracking area, and also there is no block included in the tracking area within each of the search ranges set as to all the tracking point candidates.

In a case where determination is made in step S324 that all the tracking point candidates are not included in the tracking area, and also there is no block included in the tracking area within each of the search ranges set as to all the tracking point candidates, the processing proceeds to step S325, where the block position is detected by the block position detecting unit 1041. Note that, in step S325, detection of the usual block position is performed instead of detection of the block position within the tracking area.

On the other hand, in a case where determination is made in step S324 that one of the tracking point candidates is included in the tracking area, or there is a block included in the tracking area within each of the search ranges set as to one of the tracking point candidates, the processing proceeds to step S326, where the processing of the intra-area block position detecting unit 1045 detects the block position within the tracking area.

In step S327, the intra-area motion integrating unit 1046 determines the eventual block position, and outputs the vectors $X_1$ and $Y_1$. At this time, as described above, in a case where the coordinates (tvx, tvy) of the center of the block position is supplied from the intra-area block position detecting unit 1045, e.g., in a case where the mode value of the coordinates (tvx, tvy) supplied from the intra-area block position detecting unit 1045 is taken as the eventual block position, and the coordinates (mvx, mvy) of the center of the block position are input from the block position detecting unit 1041, the intra-area motion integrating unit 1046 performs the calculation shown in the above-mentioned Expression (18) or Expression (19) to determine coordinates as the eventual block position.

Thus, the first hierarchical motion detection processing is executed. According to such processing, a moving object is extracted, and detection of a tracking point can be performed only within the area of a pixel making up the extracted object. As a result thereof, tracking point detection processing can be performed in a more effective manner.

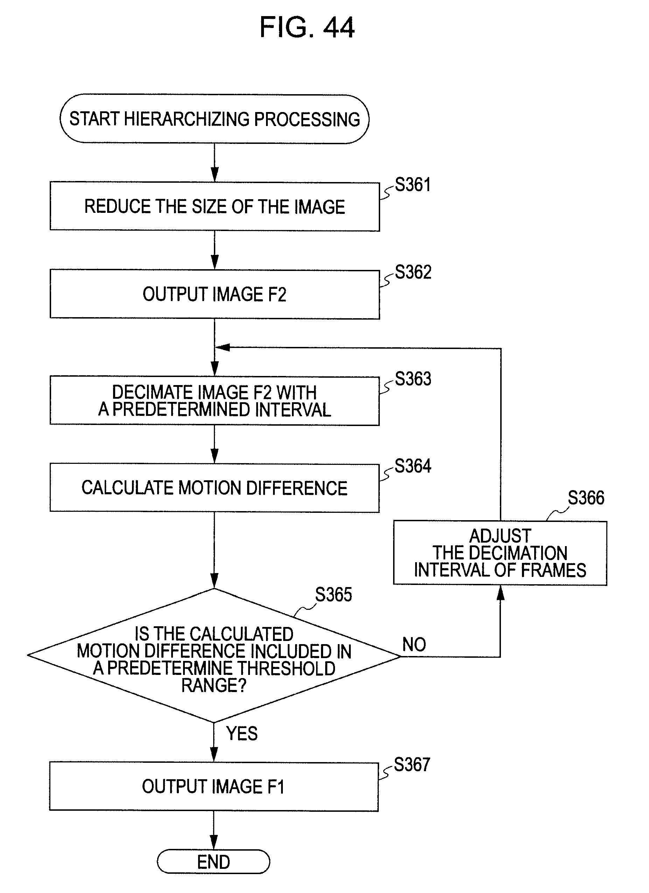

Next, description will be made regarding a detailed example of the hierarchizing processing executed by the hierarchizing unit 103 in Fig. 32, with reference to the flowchart in Fig. 44. This processing is processing executed, for example, as the processing in step S103 in Fig. 35, or processing in step S203 or processing in step S209 in Fig. 40 instead of the processing in Fig. 36.

In step S361, the reduction image generating unit 1030 in Fig. 32 reduces the size of the image.

In step S362, the reduction image generating unit 1030 outputs the image F2.

In step S363, the frame decimation unit 1032 in Fig. 32 thins out the image F2 with a predetermined frame interval (e.g., five frames) in the temporal direction.

In step S364, the motion difference calculating unit 1034 calculates motion difference. At this time, as described above, for example, the value of the sum of absolute differences of the candidate block corresponding to the coordinates (mvx, mvy) is output. Note that, in a case where this processing is executed as the processing in step S209 in Fig. 40, in step S364 the value of the sum of absolute differences is calculated as to all of the tracking point candidates ($X_{0(w, h)}$, $Y_{0(w, h)}$) extracted in step S208.

In step S365, the frame decimation specifying unit 1035 determines whether or not the motion difference calculated by the processing in step S364 (the value of the sum of absolute differences supplied from the motion difference calculating unit 1034) is included in a predetermined threshold range.

In a case where determination is made in step S365 that the motion difference calculated by the processing in step S364 is not included in a predetermined threshold range, the processing proceeds to step S366.

In step S366, the frame decimation specifying unit 1035 adjusts the frame decimation interval.

With the processing in step S366, as described above, in a case where the value of the sum of absolute differences regarding all the tracking candidate points is greater than a predetermined threshold, the frame decimation interval is decremented, for example, by one frame. Also, in a case where the value of the sum of absolute differences regarding all the tracking candidate points is smaller than another predetermined threshold, the frame decimation interval is incremented, for example, by one frame.

Subsequently, the processing in step S366 is executed with the frame decimation interval adjusted through the processing in step S366.

Thus, the processing in steps S363 through S366 is executed repeatedly until determination is made in step S365 that the motion difference calculated by the processing in step S364 is included in a predetermined threshold range.

In a case where determination is made in step S365 that the motion difference calculated by the processing in step S364 is included in a predetermined threshold range, the processing proceeds to step S367, where the frame decimation unit 1032 outputs the image F1.

Thus, the hierarchizing processing is executed. According to such processing, the optimal frame decimation interval can be set at the time of performing object tracking. Accordingly, object tracking can be performed further accurately in an effective manner.

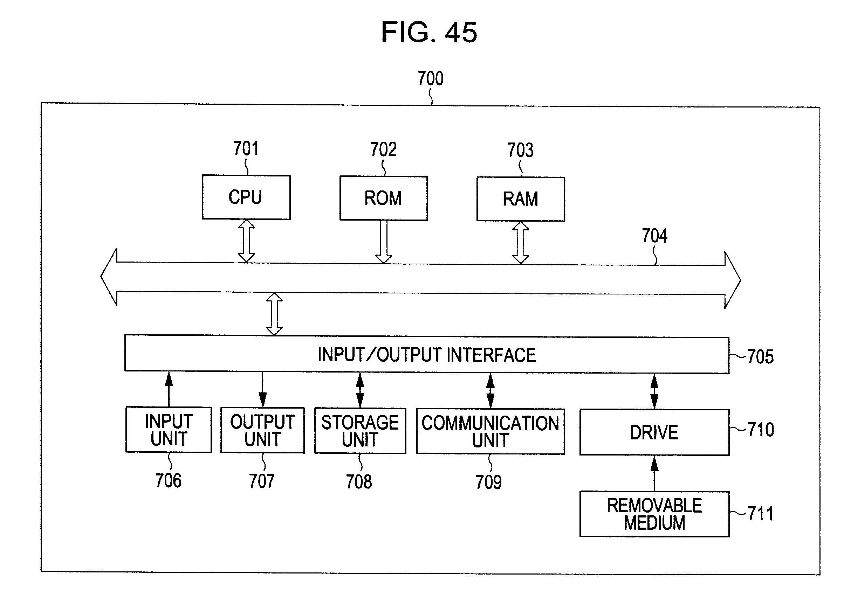

Note that the above-mentioned series of processing can be executed not only by hardware but also by software. In the event of executing the above-mentioned series of processing by software, a program making up the software thereof is installed from a network or recording medium into a computer built into dedicated hardware, or for example, a general-purpose personal computer 700 or the like, such as shown in Fig. 45, which is capable of executing various types of function by various types of program being installed thereto.

In Fig. 45, a CPU (Central Processing Unit) 701 executes various types of processing in accordance with a program stored in ROM (Read Only Memory) 702, or a program loaded from a storage unit 708 to RAM (Random Access Memory) 703. Data and so forth for the CPU 701 executing various types of processing is also stored in the RAM 703 as appropriate.

The CPU 701, ROM 702, and RAM 703 are connected mutually through a bus 704. An input/output interface 705 is also connected to the bus 704.

An input unit 706 made up of a keyboard, mouse, and so forth, an output unit 707 made up of a display made up of CRT (Cathode Ray Tube), LCD (Liquid Crystal Display) or the like, speakers, and so forth, a storage unit 708 made up of a hard disk and so forth, and a communication unit 709 made up of a modem, a network interface card such as a LAN card or the like, and so forth are also connected to the input/output interface 705. The communication unit 709 performs communication processing through a network including the Internet.

A drive 710 is also connected to the input/output interface 705 as appropriate, on which a removable medium 711 such as a magnetic disk, optical disc, magneto-optical disk, semiconductor memory, or the like is mounted as appropriate, and a computer program read out therefrom is installed to the storage unit 708 as appropriate.

In a case where the above-mentioned series of processing are executed by software, a program making up the software thereof is installed from a recording medium made up of a network such as the Internet, removable medium 711, or the like.

Note that this recording medium includes not only a recoding medium made up of the removable medium 711 configured of a magnetic disk (including floppy disk), optical disc (including CD-ROM (Compact Disk-Read Only Memory) and DVD (Digital Versatile Disk), magneto-optical disk (including MD (Mini-Disk) (registered trademark)), semiconductor memory, or the like, in which a program to be distributed to a user separately from the device main unit is recorded, but also a recording medium made up of the ROM 702, a hard disk included in the storage unit 708, or the like, in which a program to be distributed to a user is recorded in a state installed beforehand in the device main unit, shown in Fig. 45.

Note that the steps for executing the series of processing described above in the present Specification include not only processing performed in time sequence in accordance with the described sequence but also processing not necessarily performed in time sequence but performed in parallel or individually.

The present application contains subject matter related to that disclosed in Japanese Priority Patent Application JP 2008-149051 filed in the Japan Patent Office on June 06, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1. A tracking point detecting device comprising:

   frame decimation means configured to perform decimation of the frame interval of a moving image made up of a plurality of frame images which continue temporally;
   first detecting means configured to detect, of two consecutive frames of said moving image of which the frames were decimated, a temporally subsequent frame pixel corresponding to a predetermined pixel of a temporally previous frame as a tracking point;
   forward-direction detecting means configured to perform forward-direction detection for detecting the pixel corresponding to a predetermined pixel of a temporally previous frame of said moving image of which the frames were decimated, at each frame of said decimated frames in the same direction as time in order;
   opposite-direction detecting means configured to perform opposite-direction detection for detecting the pixel corresponding to said detected pixel of a temporally subsequent frame of said moving image of which the frames were decimated, at each frame of said decimated frames in the opposite direction as to time in order; and
   second detecting means configured to detect a predetermined pixel of each of said decimated frames as a tracking point by computation employing information representing the position of the pixel detected with said forward-direction detection, and the position of the pixel detected with said opposite-direction detection.

2. The tracking point detecting device according to Claim 1, further comprising:

   reduction means configured to reduce a moving image made up of a plurality of frame images which continue temporally;

wherein said frame decimation means perform decimation of the frame interval of said reduced moving image; and wherein said first detecting means and said second detecting means each detect a tracking point of the frames of said reduced moving image.

3. The tracking point detecting device according to Claim 2, further comprising:

conversion means configured to convert the position of the pixel of the tracking point detected by said second detecting means into the position of the pixel of said tracking point of the frames of said moving image not reduced.

4. The tracking point detecting device according to Claim 1, further comprising:

candidate setting means configured to set a plurality of pixels serving as candidates, of a temporally previous frame of said moving image of which the frames were decimated; wherein said first detecting means detect each of the pixels of a temporally subsequent frame corresponding to each of the pixels serving as the candidates of a temporally previous frame as a tracking point candidate; and wherein said forward-direction detecting means detect each of the pixels corresponding to each of the pixels serving as candidates of a temporally previous frame at each of said decimated frames in the forward direction; and wherein said opposite-direction detecting means detect each of the pixels corresponding to the pixel detected as said tracking point candidate of a temporally subsequent frame at each of said decimated frames in the opposite direction; and wherein said second detecting means detect each of a plurality of pixels as a tracking point candidate at each of said decimated frames by computation employing information representing the position of each of the pixels detected with said forward-direction detection, and the position of each of the pixels detected with said opposite-direction detection.

5. The tracking point detecting device according to Claim 4, with information representing the position of a predetermined pixel of said plurality of pixels serving as candidates at said temporally previous frame, set by said candidate setting means, information representing the position of the pixel detected by said first detecting means as a tracking point candidate at said temporally subsequent frame corresponding to said predetermined pixel, information representing the position of the pixel of each of said decimated frames corresponding to said predetermined pixel detected in the forward direction by said forward-direction detecting means, information representing the position of the pixel of each of said decimated frames corresponding to said predetermined pixel detected in the opposite direction by said opposite-direction detecting means, information representing the positions of said predetermined pixel, and the pixel detected by said second detecting means as the tracking point candidate of each of said decimated frames corresponding to said tracking point candidate being correlated and taken as a set of tracking point candidate group, said tracking point detecting device further comprising:

storage means configured to store the same number of sets of tracking point candidate groups as the number of said pixels serving as candidates set by said candidate setting means.

6. The tracking point detecting device according to Claim 4 or 5, wherein said first detecting means calculates the sum of absolute differences of the pixel values of a block made up of pixels with a predetermined pixel of a temporally previous frame as the center, and the pixel value of a plurality of blocks made up of pixels with each of a plurality of pixels at the periphery of the pixel of the position corresponding to said predetermined pixel at said temporally subsequent frame as the center, and detect, of said plurality of blocks, the pixel serving as the center of the block with the value of said sum of absolute differences as the smallest, as a tracking point.

7. The tracking point detecting device according to Claim 6, wherein said first detecting means sets a plurality of blocks made up of pixels with each of pixels within a motion detection pixel range which is a predetermined area with a predetermined pixel of said temporally previous frame as the center, as the center, detects the pixel of said tracking point corresponding to each of the pixels within said motion detection pixel range, and detects the coordinate value calculated based on the coordinate value of the pixel of said tracking point corresponding to each of the pixels within said motion detection pixel range as the position of the tracking point of a temporally subsequent frame corresponding to a predetermined pixel of a temporally previous frame.

8. The tracking point detecting device according to Claim 6 or 7, further comprising:

difference value calculating means configured to calculate the value of the sum of absolute differences of a pixel value within a predetermined area with the pixel of a tracking point detected beforehand of a further temporally previous frame as compared to said temporally previous frame as the center, and a pixel value within a predetermined area with each of said plurality of pixels serving as candidates, of said temporally previous frame, set by said candidate setting means as the center; and

distance calculating means configured to calculate the distance between said pixel detected in the forward direction, and said pixel detected in the opposite direction at the frame positioned in the middle temporally, of said decimated frames, based on information representing the pixel position of each of said decimated frames detected in said forward direction, and information representing the pixel position of each of said decimated frames detected in said opposite direction, stored in said storage means.

9. The tracking point detecting device according to Claim 8, wherein said calculated value of the sum of absolute differences, and said calculated distance are compared with predetermined values respectively, thereby detecting a plurality of pixels satisfying a condition set beforehand from said plurality of pixels serving as candidates set by said candidate setting means, and one pixel of said plurality of pixels serving as candidates set by said candidate setting means is determined based on the information of the position of each pixel satisfying said predetermined condition, and of a plurality of tracking point groups stored by said storage means, the tracking point group corresponding to said determined one pixel is taken as the tracking point at each frame.

10. The tracking point detecting device according to anyone of Claims 1 to 9, further comprising:

frame interval increment/decrement means configured to increment/decrement the frame interval to be decimated by said frame decimation means based on the value of the sum of absolute differences between a pixel value within a predetermined area with a predetermined pixel of a temporally previous frame as the center, and a pixel value within a predetermined area with the pixel of said temporally subsequent frame detected by said first detecting means as the center, of consecutive two frames of said moving image of which the frames were decimated.

11. The tracking point detecting device according to anyone of Claims 1 to 10, further comprising:

template holding means configured to hold an image shot beforehand as a template;
object extracting means configured to extract an object not displayed on said template from a predetermined frame image of said moving image; and
pixel determining means configured to determine a pixel for detecting said tracking point from the image of said extracted object.

12. The tracking point detecting device according to anyone of Claims 1 to 11, said first detecting means comprising:

area extracting means configured to extract the area corresponding to a moving object based on a frame of interest, the temporally previous frame of the frame of interest, and the temporally subsequent frame of the frame of interest, of said moving image of which the frames were decimated; and
intra-area detecting means configured to detect the pixel of said frame of interest corresponding to a predetermined pixel of said temporally previous frame, from the area extracted by said area extracting means.

13. The tracking point detecting device according to Claim 12, said area extracting means comprising:

first screen position shifting means configured to shift the screen position of said frame of interest based on a screen motion vector obtained between said frame of interest and the temporally previous frame of said frame of interest;
first frame difference calculating means configured to calculate the difference between the image of said frame of interest of which the screen position is shifted, and the image of the temporally previous frame of said frame of interest;
second screen position shifting means configured to shift the screen position of said frame of interest based on a screen motion vector obtained between said frame of interest and the temporally subsequent frame of said frame of interest;
second frame difference calculating means configured to calculate the difference between the image of said frame of interest of which the screen position is shifted, and the image of the temporally subsequent frame of said frame of interest; and AND-area extracting means configured to extract an AND area between the pixel corresponding to said difference calculated by said first frame difference calculating means, and the pixel corresponding to said difference calculated by said second frame difference calculating means, as the area corresponding to an object.

**14.** A tracking point detecting method comprising the steps of:

decimation of the frame interval of a moving image made up of a plurality of frame images which continue temporally;

detecting, of two consecutive frames of said moving image of which the frames were decimated, a temporally subsequent frame pixel corresponding to a predetermined pixel of a temporally previous frame as a tracking point;

forward-direction detecting for detecting the pixel corresponding to a predetermined pixel of a temporally previous frame of said moving image of which the frames were decimated, at each frame of said decimated frames in the same direction as time in order;

opposite-direction detecting for detecting the pixel corresponding to said detected pixel of a temporally subsequent frame of said moving image of which the frames were decimated, at each frame of said decimated frames in the opposite direction as to time in order; and

detecting a predetermined pixel of each of said decimated frames as a tracking point by computation employing information representing the position of the pixel detected with said forward-direction detection, and the position of the pixel detected with said opposite-direction detection.

**15.** A program causing a computer to function as a tracking point detecting device comprising:

frame decimation means configured to perform decimation of the frame interval of a moving image made up of a plurality of frame images which continue temporally;

first detecting means configured to detect, of two consecutive frames of said moving image of which the frames were decimated, a temporally subsequent frame pixel corresponding to a predetermined pixel of a temporally previous frame as a tracking point;

forward-direction detecting means configured to perform forward-direction detection for detecting the pixel corresponding to a predetermined pixel of a temporally previous frame of said moving image of which the frames were decimated, at each frame of said decimated frames in the same direction as time in order;

opposite-direction detecting means configured to perform opposite-direction detection for detecting the pixel corresponding to said detected pixel of a temporally subsequent frame of said moving image of which the frames were decimated, at each frame of said decimated frames in the opposite direction as to time in order; and

second detecting means configured to detect a predetermined pixel of each of said decimated frames as a tracking point by computation employing information representing the position of the pixel detected with said forward-direction detection, and the position of the pixel detected with said opposite-direction detection.

**16.** A recording medium in which the program according to Claim 14 is recorded.

# FIG. 1

EP 2 131 329 A2

37

# FIG. 2

```
                                          ┌~101
  ┌ ─ ─ ─ ─ ─ ─ ─ ─ ─ ─ ─ ─ ─ ─ ─ ─ ─ ─ ─ ─ ─ ┐
  │      ┌~1010                    ┌~1011              │
  │  ┌──────────────┐        ┌──────────────┐         │
  │  │ IMAGE SIGNAL │◄──────►│ TRACKING POINT│─────────┼──► (xs, ys)
  │  │PRESENTING UNIT│       │SPECIFYING UNIT│          │
  │  └──────────────┘        └──────────────┘         │
  │         ▲                        ▲                 │
  │         └────────────┬───────────┘                 │
  └ ─ ─ ─ ─ ─ ─ ─ ─ ─ ─ ─│─ ─ ─ ─ ─ ─ ─ ─ ─ ─ ─ ─ ─ ─ ┘
                         │
                        Vin
```

# FIG. 3

```
                                    ┌~103
                                    ↙
       ┌ ─ ─ ─ ─ ─ ─ ─ ─ ─ ─ ─ ─ ─ ─ ─ ─ ─ ─ ─ ─ ─ ─ ─ ┐
       │      ┌~1030                    ┌~1031           │
       │  ┌──────────────┐        ┌──────────────┐       │
Vin ───┼─►│REDUCTION IMAGE│──────►│    FRAME     │───────┼──► F1
       │  │GENERATING UNIT│    │  │DECIMATION UNIT│       │
       │  └──────────────┘    │  └──────────────┘       │
       └ ─ ─ ─ ─ ─ ─ ─ ─ ─ ─ ─│─ ─ ─ ─ ─ ─ ─ ─ ─ ─ ─ ─ ─┘
                              │
                              ▼
                             F2
```

# FIG. 4

INPUT IMAGE

t

REDUCED TO ONE-FOURTH

F2

t

DECIMATED IN THE TEMPORAL DIRECTION

F1

t

# FIG. 5

104

(x, y)

BLOCK POSITION
DETECTING UNIT ~1041

MOTION
INTEGRATING UNIT ~1042

F1

(mvx, mvy)

[X₁, Y₁]

DELAYING
UNIT ~1040

# FIG. 6A
### PREVIOUS FRAME

BL

TRACKING POINT
$(x_0, y_0)$

# FIG. 6B
### SUBSEQUENT FRAME

SEARCH RANGE

SAME POSITION AS BL
AT THE CURRENT FRAME

# FIG. 7A
### PREVIOUS FRAME

BL

TRACKING POINT
$(x_0, y_0)$

# FIG. 7B
### SUBSEQUENT FRAME

SEARCH RANGE

NEXT
TRACKING POINT
$(x_5, y_5)$

SAME POSITION AS BL
AT THE CURRENT FRAME

FIG. 8

EP 2 131 329 A2

# FIG. 9

$(x_0, y_0)$

MOTION DETECTION
IN THE FORWARD DIRECTION

$(x_5, y_5)$

F2

MOTION DETECTION
IN THE OPPOSITE DIRECTION

t

FIG. 10

| FRAME NUMBER | 0 | 1 | 2 | 3 | 4 | 5 |
|---|---|---|---|---|---|---|
| $Xf_2$ | $x_0$ | $xf_1$ | $xf_2$ | $xf_3$ | $xf_4$ | $x_5$ |
| $Xb_2$ | $x_0$ | $xb_1$ | $xb_2$ | $xb_3$ | $xb_4$ | $x_5$ |
| $X_2$ | $x_0$ | $(xf_1 \cdot 4 + xb_1 \cdot 1)/5$ | $(xf_2 \cdot 3 + xb_2 \cdot 2)/5$ | $(xf_3 \cdot 2 + xb_3 \cdot 3)/5$ | $(xf_4 \cdot 1 + xb_4 \cdot 4)/5$ | $x_5$ |

| FRAME NUMBER | 0 | 1 | 2 | 3 | 4 | 5 |
|---|---|---|---|---|---|---|
| $Yf_2$ | $y_0$ | $yf_1$ | $yf_2$ | $yf_3$ | $yf_4$ | $y_5$ |
| $Yb_2$ | $y_0$ | $yb_1$ | $yb_2$ | $yb_3$ | $yb_4$ | $y_5$ |
| $Y_2$ | $y_0$ | $(yf_1 \cdot 4 + yb_1 \cdot 1)/5$ | $(yf_2 \cdot 3 + yb_2 \cdot 2)/5$ | $(yf_3 \cdot 2 + yb_3 \cdot 3)/5$ | $(yf_4 \cdot 1 + yb_4 \cdot 4)/5$ | $y_5$ |

EP 2 131 329 A2

FIG. 11

111

[X₂, Y₂]

Vin ──────●────→ | BLOCK POSITION<br>DETECTING UNIT | ──(mvx, mvy)──→ | MOTION<br>INTEGRATING UNIT | ──→ [X₃, Y₃]

1111

1112

DELAYING<br>UNIT

1110

FIG. 12

[X₂, Y₂]

F2

Vin

t

SEARCH RANGE OF THIRD<br>HIERARCHICAL MOTION DETECTION

[X₂d, Y₂d]

## FIG. 13

## FIG. 14

EP 2 131 329 A2

# FIG. 15A
## PREVIOUS FRAME

BL

TRACKING POINT
$(x_0, y_0)$

MOTION
DETECTION
PIXEL RANGE

# FIG. 15B
## SUBSEQUENT FRAME

SEARCH RANGE

SAME POSITION AS BL
AT THE CURRENT FRAME

# FIG. 16A
## PREVIOUS FRAME

BL

TRACKING POINT
$(x_0, y_0)$

MOTION
DETECTION
PIXEL RANGE

# FIG. 16B
## SUBSEQUENT FRAME

SEARCH RANGE

NEXT
TRACKING POINT
$(x_5, y_5)$

SAME POSITION AS BL
AT THE CURRENT FRAME

# FIG. 17A

MEMORY (FRAME F1b)

BL

TRACKING POINT
IN THE PAST
$(x_p, y_p)$

# FIG. 17B

CURRENT FRAME

BL

TRACKING POINT
CANDIDATE RANGE

CURRENT
TRACKING POINT
CANDIDATE
$(x_0, y_0)$

# FIG. 18

F1b

MEMORY          CURRENT FRAME
        TRACKING                    TRACKING

PAST TRACKING POINT     CURRENT TRACKING POINT

t

# FIG. 19

Vin

Vout

FIG. 20

# FIG. 21

INPUT

TRACKING POINT
AT FIRST HIERARCHICAL
MOTION DETECTING UNIT

MOTION DETECTION IN
THE FORWARD DIRECTION

MOTION DETECTION IN
THE OPPOSITE DIRECTION

TRACKING POINT
AT SECOND HIERARCHICAL
MOTION DETECTING UNIT

EP 2 131 329 A2

# FIG. 22

101

TEMPLATE
HOLDING UNIT
1012

OBJECT
EXTRACTING UNIT
1013

CENTROID
CALCULATING UNIT
1014

(xs, xy)

Vin

## FIG. 23

## FIG. 24

## FIG. 25

# FIG. 26

EP 2 131 329 A2

# FIG. 27

HORIZONTAL DIRECTION

VERTICAL DIRECTION

8   8   8   8

8

8

8

# FIG. 28

FRAME OF INTEREST

F1   MOTION DETECTION
Amv1

MOTION DETECTION
Amv2

t

FIG. 29

1044

Amv1

F1

10440-1 SCREEN POSITION SHIFTING UNIT

10441-1 FRAME DIFFERENCE CALCULATING UNIT

10442 AND-AREA EXTRACTING UNIT

Amv2

10440-2 SCREEN POSITION SHIFTING UNIT

10441-2 FRAME DIFFERENCE CALCULATING UNIT

# FIG. 30

SCREEN MOTION DETECTION RESULTS

SCREEN POSITION SHIFTING

FRAME DIFFERENCE CALCULATION

AND-AREA EXTRACTION

FRAME OF INTEREST

t

Amv1

Amv2

EP 2 131 329 A2

# FIG. 31

*500*

EP 2 131 329 A2

# FIG. 32

REDUCTION IMAGE GENERATING UNIT (1030) → FRAME DECIMATION UNIT (1032)

FRAME DECIMATION SPECIFYING UNIT (1035)

MOTION DIFFERENCE CALCULATING UNIT (1034)

DELAYING UNIT (1033)

$(x_{0(w,h)}, y_{0(w,h)})$

Vin → F1, F2

103

FIG. 33

F1

TRACKING POINT

611

601

612

t

612

602

FIG. 34

F1

TRACKING POINT

611

601

611

602

t

# FIG. 35

```
        ┌──────────────────────┐
        │    START OBJECT       │
        │  TRACKING PROCESSING  │
        └──────────────────────┘
                   │
                   ▼                        S101
          ╱─────────────────────╲
  YES    ╱                        ╲
◄────────  PROCESSING START FRAME? ─────
         ╲                        ╱
          ╲─────────────────────╱
   S102              │ NO                          S109
┌──────────────────────┐        │        ┌──────────────────────┐
│      DETERMINE        │        │        │       UPDATE          │
│THE INITIAL TRACKING POINT│     │        │  THE TRACKING POINT   │
└──────────────────────┘        │        └──────────────────────┘
        │                       │                    ▲
        └───────────────────────┤                    │
                                 ▼                    │
                    ┌──────────────────────┐  S103    │
                    │ HIERARCHIZING PROCESSING│        │
                    └──────────────────────┘          │
                                 │                     │
                                 ▼                     │
                    ┌──────────────────────┐  S104     │
                    │ FIRST HIERARCHICAL MOTION│        │
                    │  DETECTION PROCESSING  │          │
                    └──────────────────────┘           │
                                 │                      │
                                 ▼                      │
                    ┌──────────────────────┐  S105       │
                    │SECOND HIERARCHICAL MOTION│          │
                    │  DETECTION PROCESSING  │            │
                    └──────────────────────┘             │
                                 │                        │
                                 ▼                        │
                    ┌──────────────────────┐  S106         │
                    │ THIRD HIERARCHICAL MOTION│            │
                    │  DETECTION PROCESSING  │              │
                    └──────────────────────┘               │
                                 │                          │
                                 ▼                          │
                    ┌──────────────────────┐  S107           │
                    │ GENERATE AN OUTPUT IMAGE│               │
                    └──────────────────────┘                 │
                                 │                            │
                                 ▼              S108          │
                       ╱─────────────────────╲               │
                      ╱ HAS THE PROCESSING     ╲    NO         │
                       │ TO ALL THE FRAMES BEEN  ─────────────┘
                      ╲    COMPLETED?          ╱
                       ╲─────────────────────╱
                                 │ YES
                                 ▼
                          ┌──────────┐
                          │   END    │
                          └──────────┘
```

# FIG. 36

START HIERARCHIZING PROCESSING

REDUCE THE SIZE OF THE IMAGE — S121

OUTPUT IMAGE F2 — S122

PERFORM DECIMATION OF THE FRAME INTERVAL — S123

OUTPUT IMAGE F1 — S124

END

# FIG. 37

```
    START FIRST HIERARCHICAL
  MOTION DETECTION PROCESSING
```

DELAY THE FRAME — S141

DETECT A BLOCK POSITION — S142

OUTPUT VECTORS $X_1$ AND $Y_1$ — S143

RETURN

# FIG. 38

START SECOND HIERARCHICAL
MOTION DETECTION PROCESSING

DELAY THE FRAME — S161

PERFORM DETECTION OF MOTION
IN THE FORWARD DIRECTION — S162

OUTPUT VECTORS $Xf_2$ AND $Yf_2$ — S163

EXCHANGE THE FRAMES — S164

PERFORM DETECTION OF MOTION
IN THE OPPOSITE DIRECTION — S165

OUTPUT VECTORS $Xb_2$ AND $Yb_2$ — S166

OUTPUT VECTORS $Xf_2$ AND $Yf_2$,
AND VECTORS $Xb_2$ AND $Yb_2$ — S167

RETURN

# FIG. 39

START THIRD HIERARCHICAL
MOTION DETECTION PROCESSING

DELAY THE FRAME — S181

REPLACE THE COORDINATE VALUES
OF THE TRACKING POINT BY
THE COORDINATE VALUES OF
THE IMAGE BEFORE REDUCTION — S182

DETECT A BLOCK POSITION — S183

OUTPUT VECTORS $X_3$ AND $Y_3$ — S184

RETURN

# FIG. 40

( START OBJECT TRACKING PROCESSING )

S201

PROCESSING START FRAME?

YES

**S202**
DETERMINE THE INITIAL TRACKING POINT

**S203**
HIERARCHIZING PROCESSING

**S204**
FIRST HIERARCHICAL MOTION DETECTION PROCESSING

**S205**
SECOND HIERARCHICAL MOTION DETECTION PROCESSING

**S206**
THIRD HIERARCHICAL MOTION DETECTION PROCESSING

**S207**
GENERATE AN OUTPUT IMAGE

NO

**S208**
EXTRACT TRACKING POINT CANDIDATES

**S209**
HIERARCHIZING PROCESSING

**S210**
FIRST HIERARCHICAL MOTION DETECTION PROCESSING

**S211**
SECOND HIERARCHICAL MOTION DETECTION PROCESSING

**S212**
CALCULATE THE DIFFERENCE

**S213**
CALCULATE THE DISTANCE OF THE TRACKING POINTS

**S214**
PERFORM TRANSFER OF THE TRACKING POINTS

**S215**
THIRD HIERARCHICAL MOTION DETECTION PROCESSING

**S216**
GENERATE AN OUTPUT IMAGE

**S218**
UPDATE THE TRACKING POINT

**S217**
HAS THE PROCESSING TO ALL THE FRAMES BEEN COMPLETED?

NO

YES

( END )

# FIG. 41

START INITIAL TRACKING POINT
DETERMINATION PROCESSING

EXTRACT AN OBJECT — S301

CALCULATE
THE CENTROID OF THE OBJECT — S302

DETERMINE
THE INITIAL TRACKING POINT — S303

END

# FIG. 42

START FIRST HIERARCHICAL
MOTION DETECTION PROCESSING

DELAY THE FRAME — S321

DETECT SCREEN MOTION — S322

TRACKING AREA
EXTRACTION PROCESSING — S323

ARE ALL THE TRACKING
POINT CANDIDATES NOT INCLUDED
IN THE TRACKING AREA, AND ALSO IS THERE
NO BLOCK INCLUDED IN THE TRACKING AREA
OF THE SEARCH RANGE OF
ALL THE TRACKING POINT
CANDIDATES? — S324

NO

YES — S325

DETECT A BLOCK POSITION

DETECT A BLOCK POSITION
WITHIN THE TRACKING AREA — S326

OUTPUT VECTORS $X_1$ AND $Y_1$ — S327

RETURN

# FIG. 43

```
        ┌─────────────────────────────────┐
        │      START TRACKING AREA         │
        │     EXTRACTION PROCESSING        │
        └─────────────────────────────────┘
                        │
                        ▼
        ┌─────────────────────────────────┐  S341
        │  SHIFT THE SCREEN POSITION OF    │
        │     THE FRAME OF INTEREST        │
        └─────────────────────────────────┘
                        │
                        ▼
        ┌─────────────────────────────────┐  S342
        │  CALCULATE DIFFERENCE BETWEEN    │
        │   THE FRAME OF INTEREST AND      │
        │     THE PREVIOUS FRAME OF        │
        │      THE FRAME OF INTEREST       │
        └─────────────────────────────────┘
                        │
                        ▼
        ┌─────────────────────────────────┐  S343
        │  SHIFT THE SCREEN POSITION OF    │
        │   THE SUBSEQUENT FRAME OF        │
        │      THE FRAME OF INTEREST       │
        └─────────────────────────────────┘
                        │
                        ▼
        ┌─────────────────────────────────┐  S344
        │  CALCULATE DIFFERENCE BETWEEN    │
        │   THE FRAME OF INTEREST AND      │
        │    THE SUBSEQUENT FRAME OF       │
        │      THE FRAME OF INTEREST       │
        └─────────────────────────────────┘
                        │
                        ▼
        ┌─────────────────────────────────┐  S345
        │  EXTRACT AN AND-AREA COMMONLY    │
        │        EXTRACTED ABOVE           │
        └─────────────────────────────────┘
                        │
                        ▼
                 ┌─────────────┐
                 │   RETURN    │
                 └─────────────┘
```

# FIG. 44

```
        ╭─────────────────────────────────╮
        │  START HIERARCHIZING PROCESSING  │
        ╰─────────────────────────────────╯
                        │
                        ▼
        ┌─────────────────────────────────┐    S361
        │    REDUCE THE SIZE OF THE IMAGE  │
        └─────────────────────────────────┘
                        │
                        ▼
        ┌─────────────────────────────────┐    S362
        │         OUTPUT IMAGE F2          │
        └─────────────────────────────────┘
                        │
                        ▼
        ┌─────────────────────────────────┐    S363
        │      DECIMATE IMAGE F2 WITH      │
        │    A PREDETERMINED INTERVAL      │
        └─────────────────────────────────┘
                        │
                        ▼
        ┌─────────────────────────────────┐    S364
        │    CALCULATE MOTION DIFFERENCE   │
        └─────────────────────────────────┘
```

S366

ADJUST
THE DECIMATION
INTERVAL OF FRAMES

S365

IS THE CALCULATED
MOTION DIFFERENCE INCLUDED IN
A PREDETERMINE THRESHOLD
RANGE?

NO

YES

S367

OUTPUT IMAGE F1

END

# FIG. 45

700

701          702          703

CPU          ROM          RAM

704

INPUT/OUTPUT INTERFACE ~705

| INPUT UNIT | OUTPUT UNIT | STORAGE UNIT | COMMUNICATION UNIT | DRIVE ~710 |

706          707          708          709

REMOVABLE MEDIUM ~711

EP 2 131 329 A2

**REFERENCES CITED IN THE DESCRIPTION**

**Patent documents cited in the description**

- JP 2005303983 A
- JP 2007274543 A

- JP 2008149051 A